(19) Europäisches Patentamt / European Patent Office / Office européen des brevets

(11) **EP 4 641 502 A1**

(12) **EUROPEAN PATENT APPLICATION**
published in accordance with Art. 153(4) EPC

(43) Date of publication:
**29.10.2025  Bulletin 2025/44**

(21) Application number: **23906702.8**

(22) Date of filing: **05.12.2023**

(51) International Patent Classification (IPC):
*G06T 7/55* (2017.01)        *G06F 3/0484* (2022.01)
*G06F 3/04815* (2022.01)

(52) Cooperative Patent Classification (CPC):
**G06F 3/04815; G06F 3/0484; G06T 7/55**

(86) International application number:
**PCT/JP2023/043393**

(87) International publication number:
**WO 2024/135336 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.12.2022  JP 2022206611**

(71) Applicant: **Sony Group Corporation
Tokyo 108-0075 (JP)**

(72) Inventors:
• **UYAMA, Keisuke
Tokyo 108-0075 (JP)**
• **YAMANE, Masahito
Tokyo 108-0075 (JP)**

(74) Representative: **D Young & Co LLP
3 Noble Street
London EC2V 7BQ (GB)**

(54) **INFORMATION PROCESSING DEVICE AND METHOD**

(57)    The present disclosure relates to an information processing device and method that make it possible to more easily suppress formation of unnecessary point clouds during 3D modeling.

A first region of interest of first three-dimensional shape information generated by first 3D modeling processing based on a first captured image is estimated, and a second region of interest of second three-dimensional shape information generated by second 3D modeling processing based on a second captured image is set based on the estimated first region of interest. The present disclosure can be applied to, for example, an information processing device, an imaging device, an imaging communication device, an electronic device, an information processing method, a program, an information processing system, or the like.

Fig. 4

EP 4 641 502 A1

## Description

[Technical Field]

The present disclosure relates to an information processing device and method, and, more particularly, to an information processing device and method that make it possible to more easily suppress formation of unnecessary point clouds during 3D modeling.

[Background Art]

Conventionally, as a 3D modeling method for a 3D object having a three-dimensional shape, there has been a method called photogrammetry for imaging this 3D object from multiple directions, and generating 3D data based on a plurality of obtained captured images (see, for example, PTL 1). Furthermore, there has been a method called real-time 3D modeling for generating 3D data immediately (in real time) based on captured images, posture information, information of a depth, and the like. Furthermore, there has been proposed a method (e.g., Neural Radiance Fields (NeRF) or the like) generically called Neural Rendering of configuring Neural Fields based on postures of photographed images and the photographed images, and generating images of arbitrary points of view and a three-dimensional model.

[Citation List]

[Patent Literature]

[PTL 1]
JP 2018-63693A

[Summary]

[Technical Problem]

It has been concerned that, when 3D modeling is performed using a captured image similarly to these methods, not only a 3D object of a subject is formed, but also unnecessary point clouds are formed therearound. Although it is possible to reduce the number of these unnecessary point clouds by, for example, manually setting a Region Of Interest (ROI) (also referred to as a region of interest), complicated work has been required to set the ROI in this case.

With such a situation in view, the present disclosure makes it possible to more easily suppress formation of unnecessary point clouds during 3D modeling.

[Solution to Problem]

An information processing device according to one aspect of the present technology is an information processing device including: a region-of-interest setting unit that estimates a first region of interest of first three-dimensional shape information, and sets a second region of interest of second three-dimensional shape information based on the estimated first region of interest, the first three-dimensional shape information is generated by first 3D modeling processing that is based on a first captured image, the first captured image is generated by first imaging of imaging a 3D object by a first imaging unit, the second three-dimensional shape information is generated by second 3D modeling processing that is based on a second captured image, and the second captured image is generated by second imaging of imaging the 3D object by a second imaging unit based on the first three-dimensional shape information.

An information processing method according to one aspect of the present technology is an information processing method including: estimating a first region of interest of first three-dimensional shape information, and setting a second region of interest of second three-dimensional shape information based on the estimated first region of interest, the first three-dimensional shape information is generated by first 3D modeling processing that is based on a first captured image, the first captured image is generated by first imaging of imaging a 3D object by a first imaging unit, the second three-dimensional shape information is generated by second 3D modeling processing that is based on a second captured image, and the second captured image is generated by second imaging of imaging the 3D object by a second imaging unit based on the first three-dimensional shape information.

According to the information processing device and method according to one aspect of the present technology, the first region of interest of the first three-dimensional shape information is estimated, and the second region of interest of the second three-dimensional shape information is set based on the estimated first region of interest. The first three-dimensional shape information is generated by the first 3D modeling processing that is based on the first captured image. The first captured image is generated by the first imaging of imaging the 3D object by the first imaging unit. The second three-dimensional shape information is generated by the second 3D modeling processing that is based on the second captured image. The second captured image is generated by the second imaging of imaging the 3D object by the second imaging unit based on the first three-dimensional shape information.

[Brief Description of Drawings]

[Fig. 1]

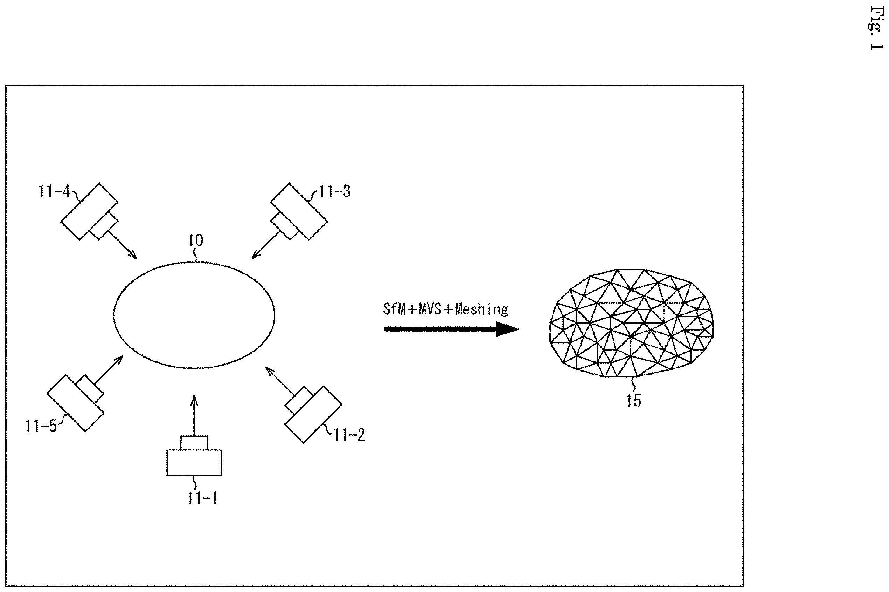

Fig. 1 is a diagram for describing an overview of photogrammetry.
[Fig. 2]

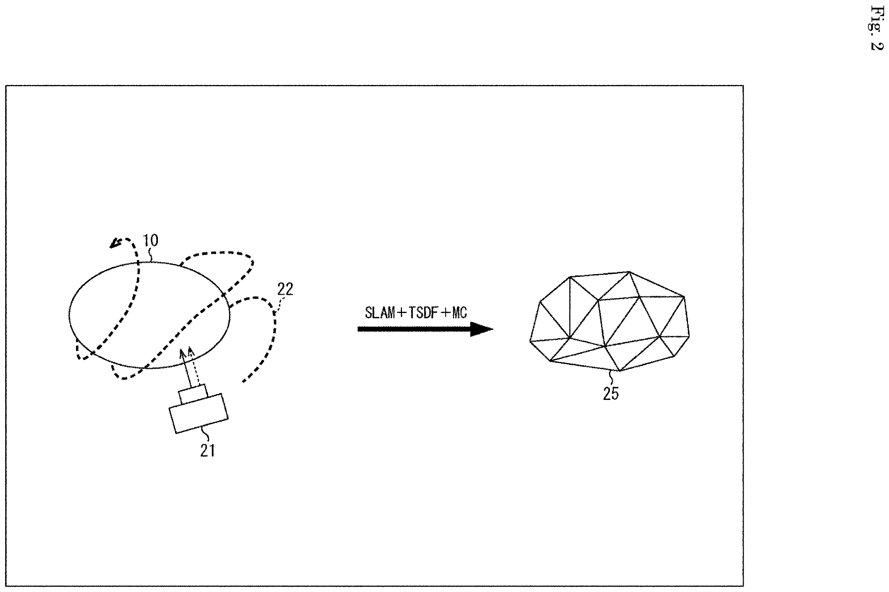

Fig. 2 is a diagram for describing an overview of real-time 3D modeling.

[Fig. 3]

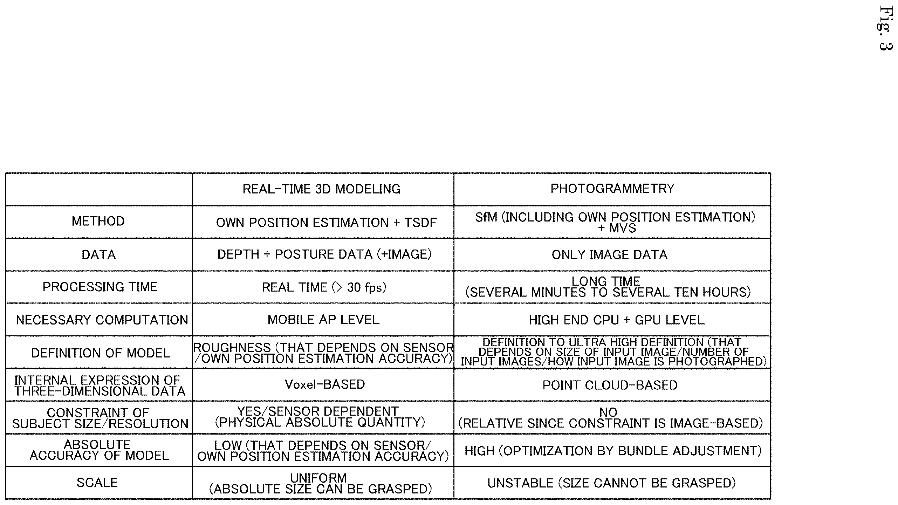

Fig. 3 is a diagram for comparing photogrammetry and real-time 3D modeling.
[Fig. 4]

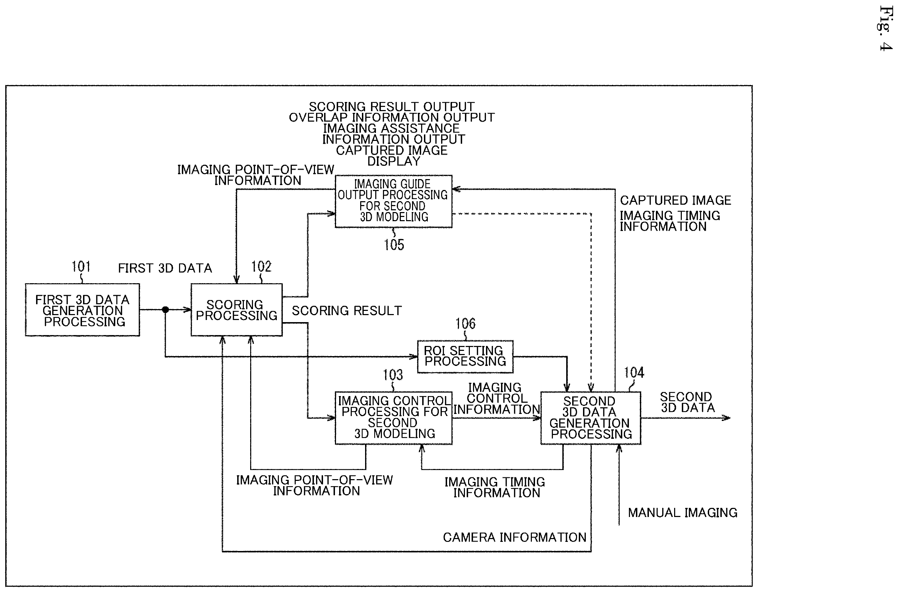

Fig. 4 is a diagram illustrating an example of a method for assisting imaging for 3D modeling.
[Fig. 5]

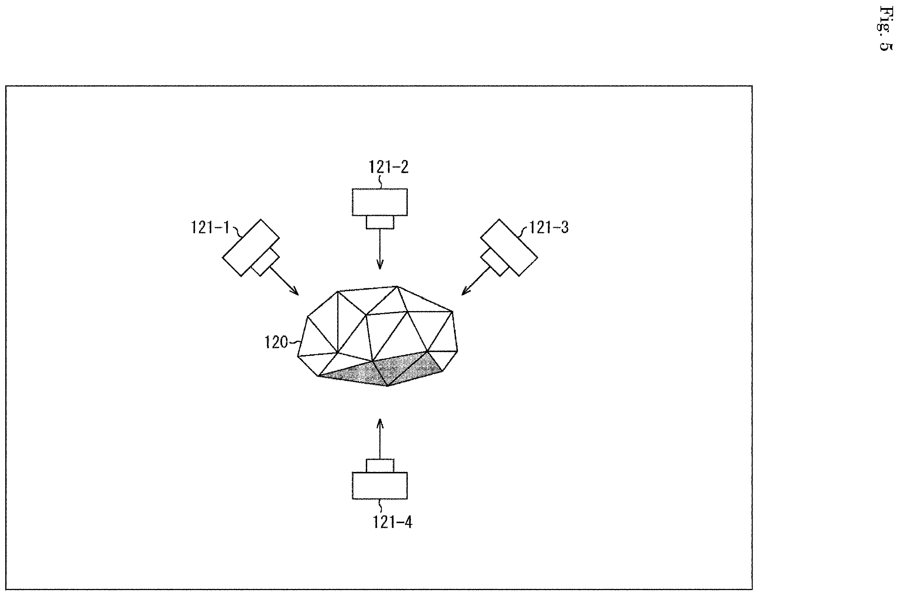

Fig. 5 is a diagram illustrating an example of states of imaging control and imaging guide.
[Fig. 6]

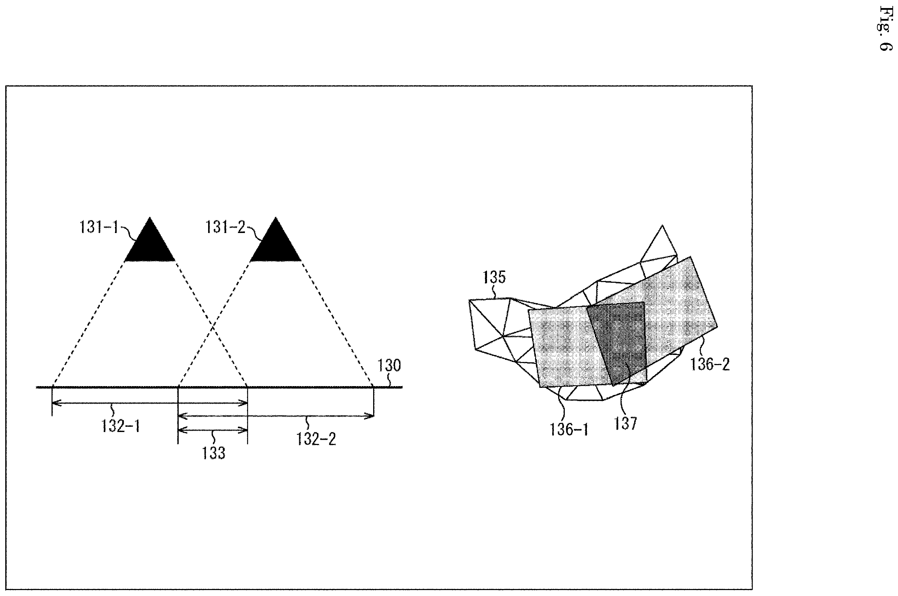

Fig. 6 is a diagram illustrating an example of overlap.
[Fig. 7]

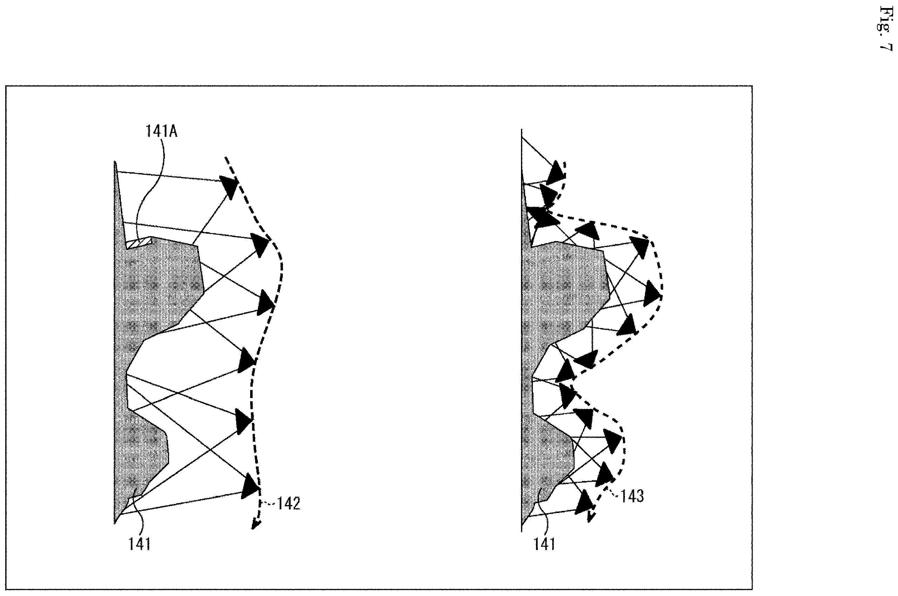

Fig. 7 is a diagram illustrating a state of imaging performed according to a distance from a subject.
[Fig. 8]

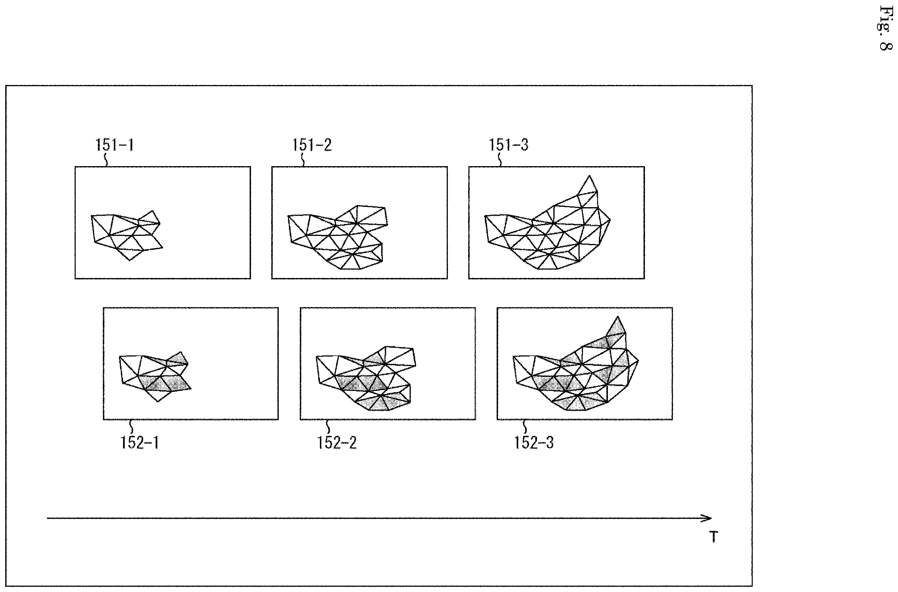

Fig. 8 is a diagram illustrating an example of a state of parallel processing.
[Fig. 9]

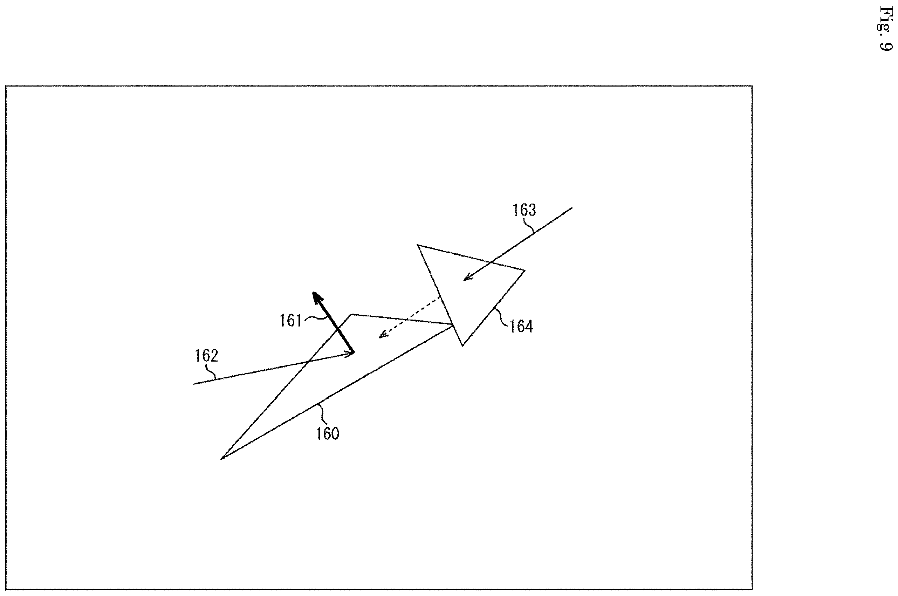

Fig. 9 is a diagram illustrating an example of the scoring processing.
[Fig. 10]

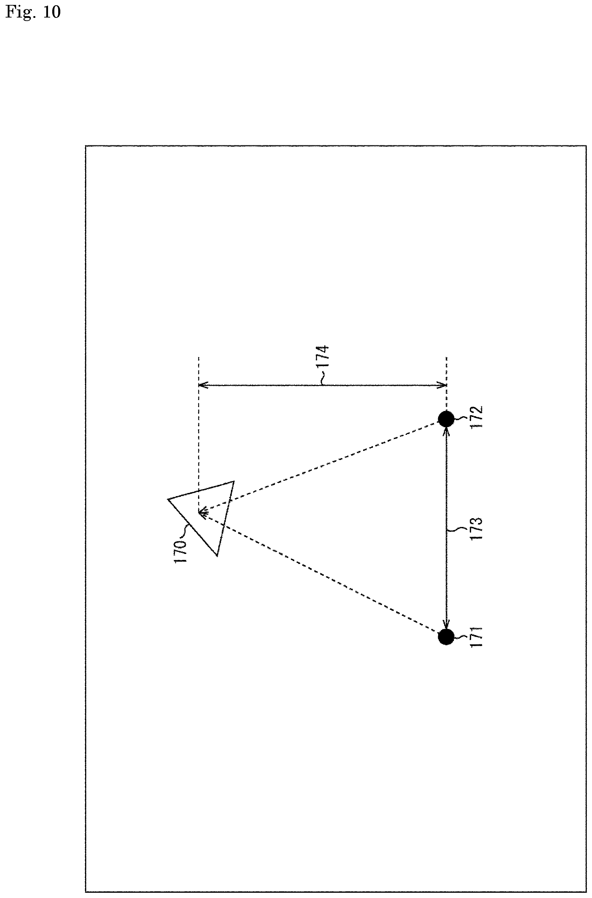

Fig. 10 is a diagram illustrating an example of the scoring processing.
[Fig. 11]

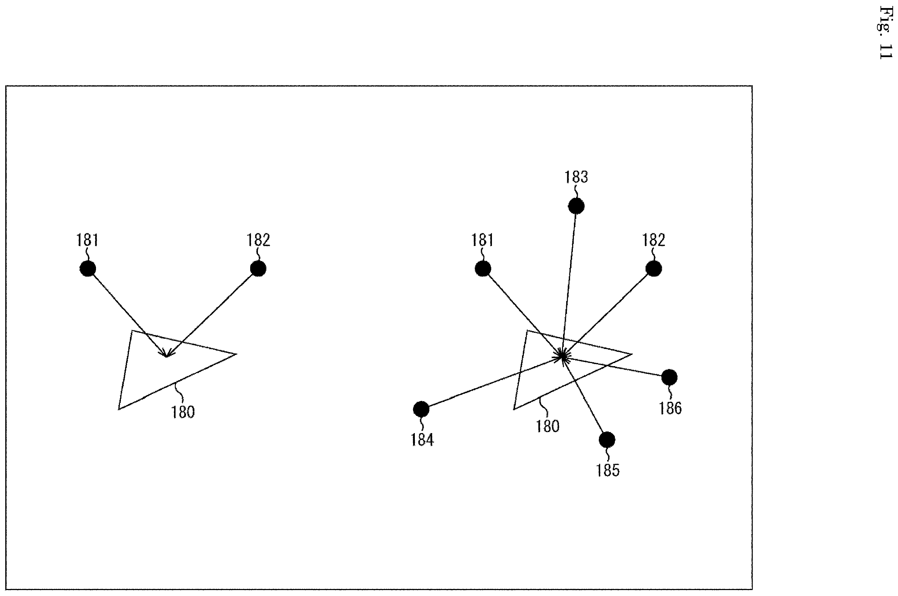

Fig. 11 is a diagram illustrating an example of the scoring processing.
[Fig. 12]

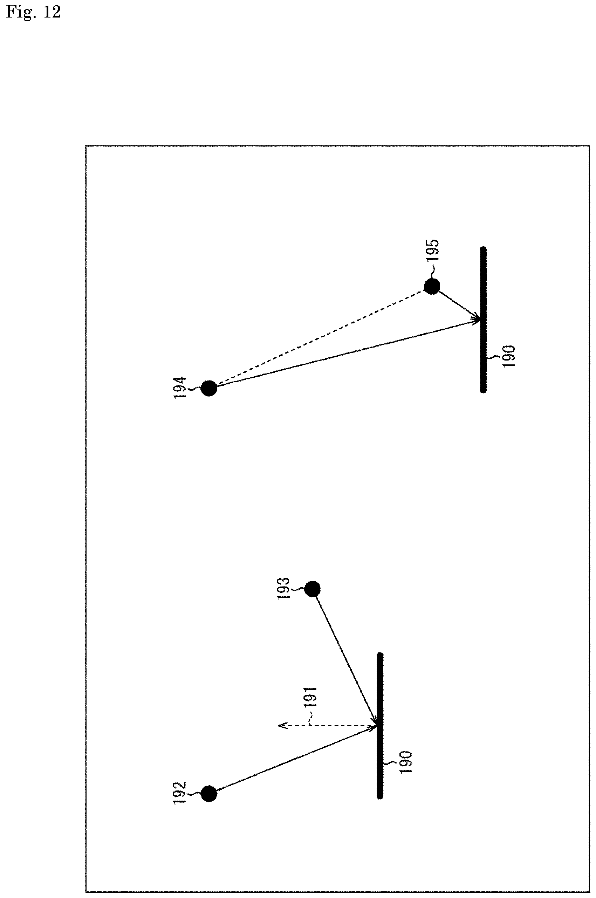

Fig. 12 is a diagram illustrating an example of the scoring processing.
[Fig. 13]

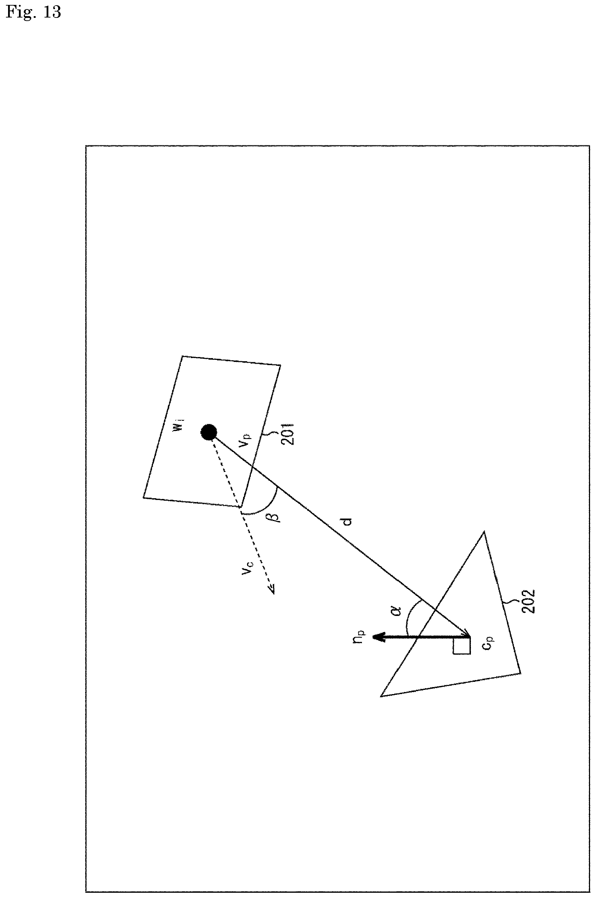

Fig. 13 is a diagram illustrating an example of the scoring processing.
[Fig. 14]

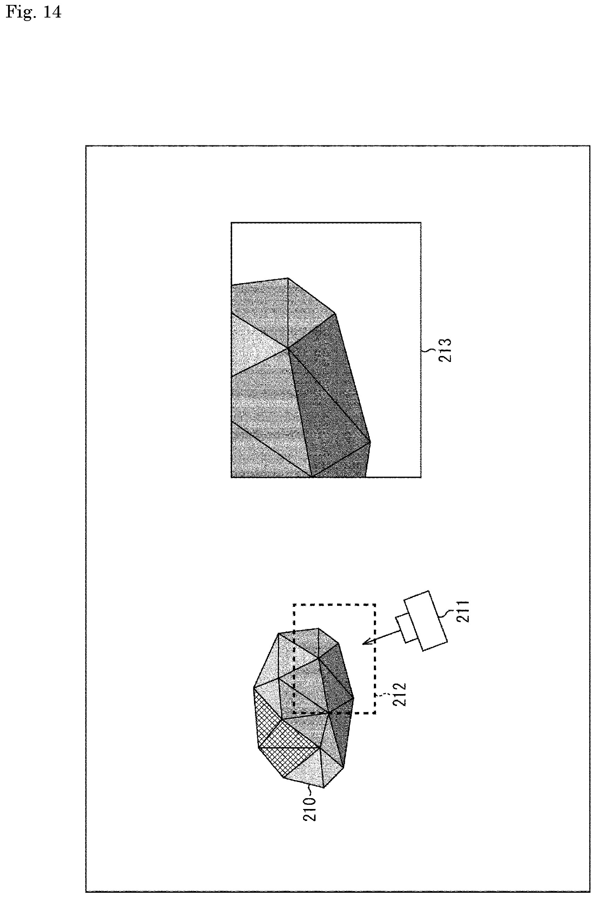

Fig. 14 is a diagram illustrating an example of output of a scoring result.
[Fig. 15]

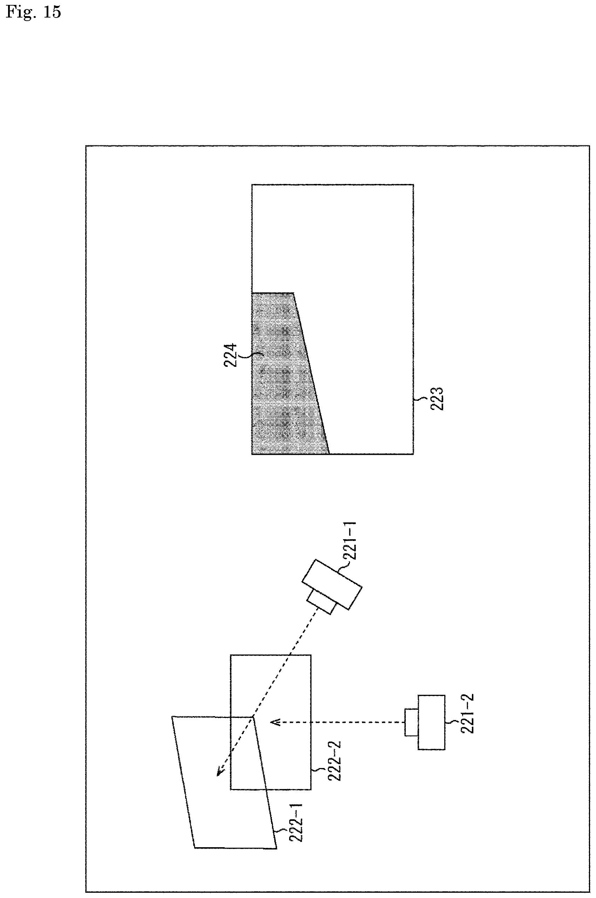

Fig. 15 is a diagram illustrating an example of output of overlap information.
[Fig. 16]

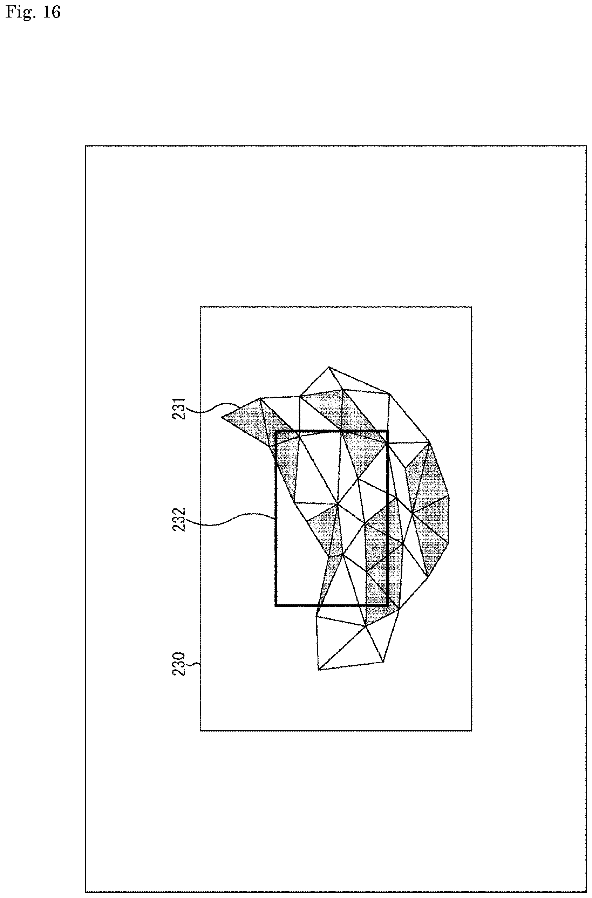

Fig. 16 is a diagram illustrating a display example of the guide information.
[Fig. 17]

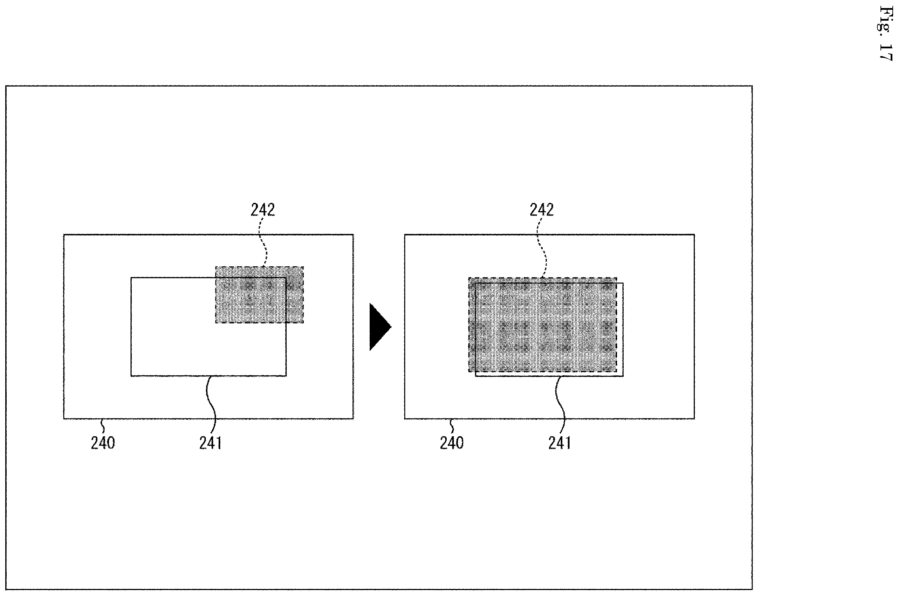

Fig. 17 is a diagram illustrating a display example of the guide information.
[Fig. 18]

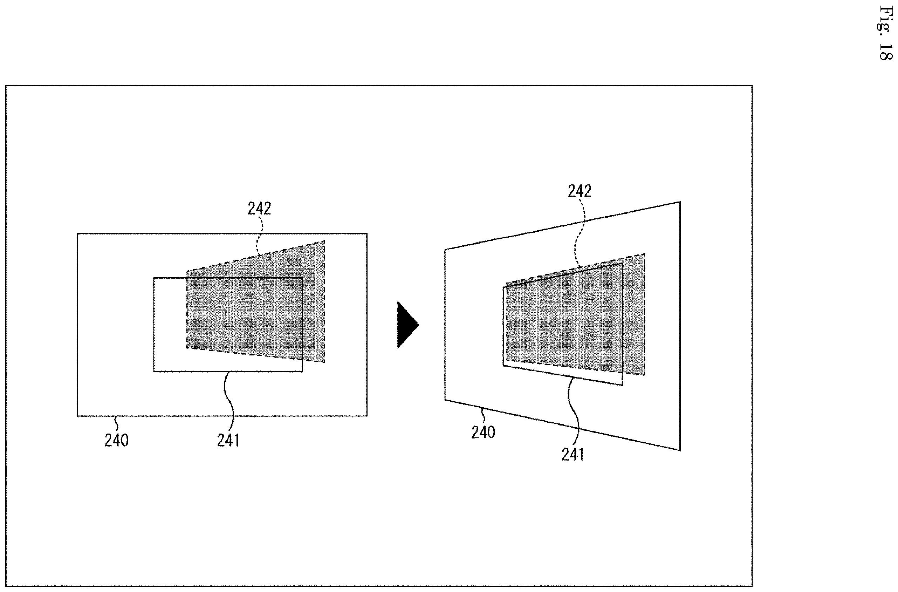

Fig. 18 is a diagram illustrating a display example of the guide information.
[Fig. 19]

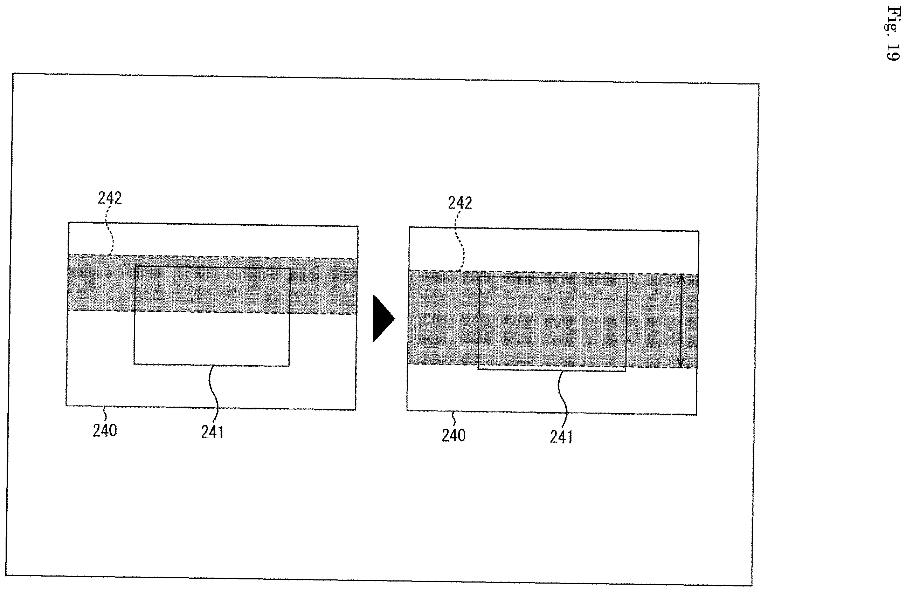

Fig. 19 is a diagram illustrating a display example of the guide information.
[Fig. 20]

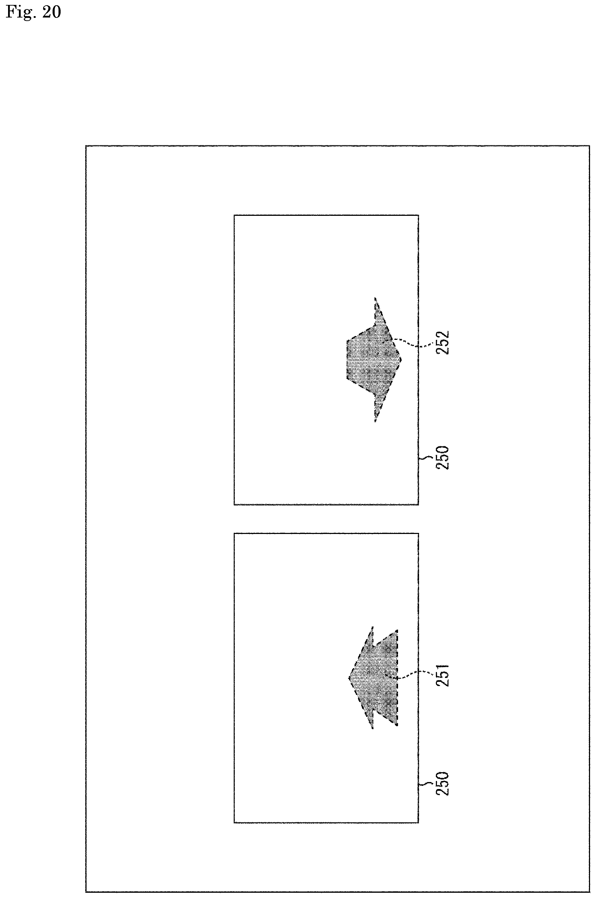

Fig. 20 is a diagram illustrating a display example of the guide information.
[Fig. 21]

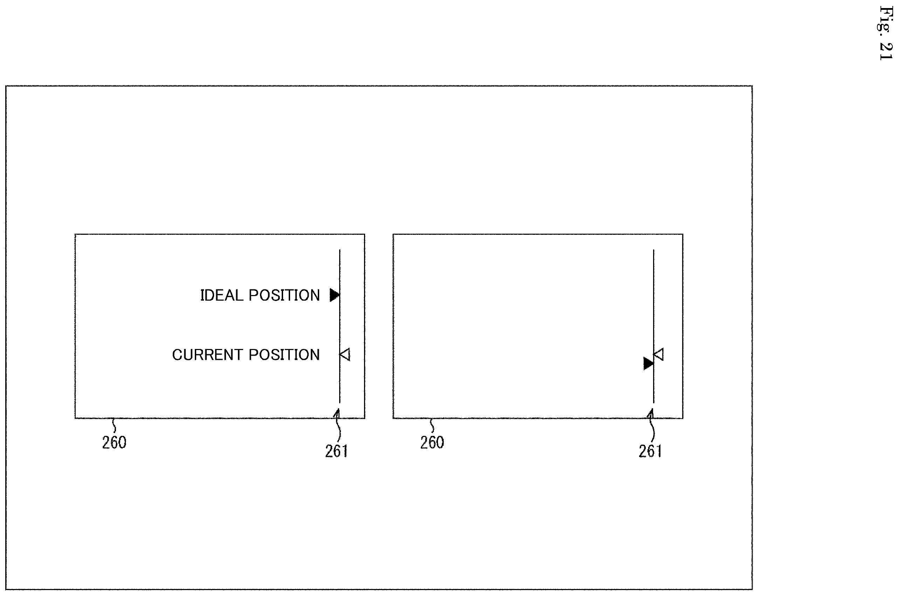

Fig. 21 is a diagram illustrating a display example of the guide information.
[Fig. 22]

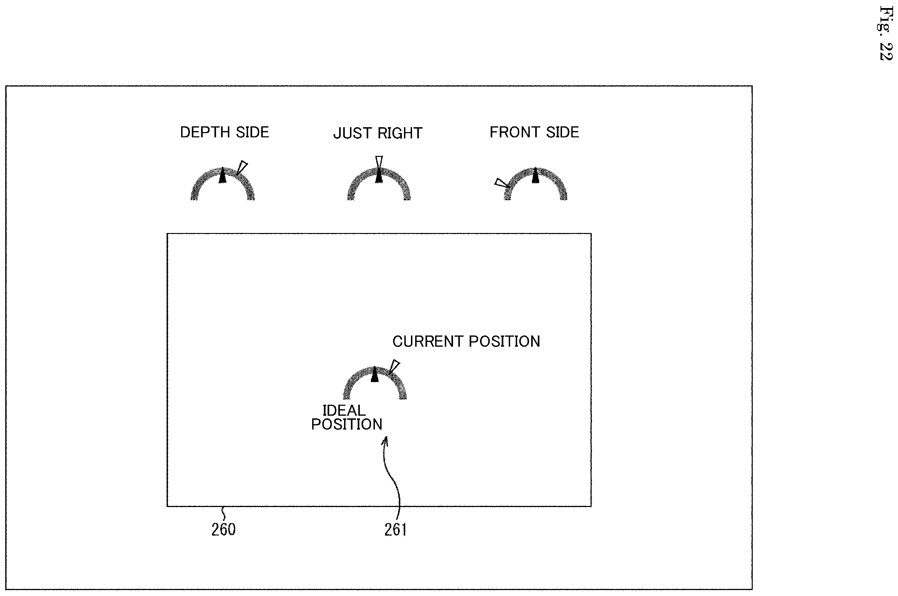

Fig. 22 is a diagram illustrating a display example of the guide information.
[Fig. 23]

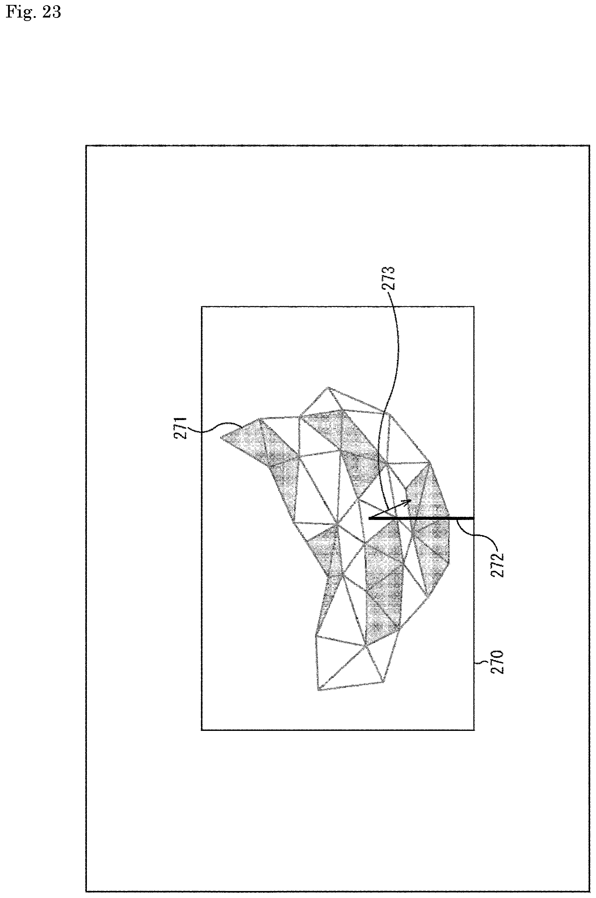

Fig. 23 is a diagram illustrating a display example of the guide information.
[Fig. 24]

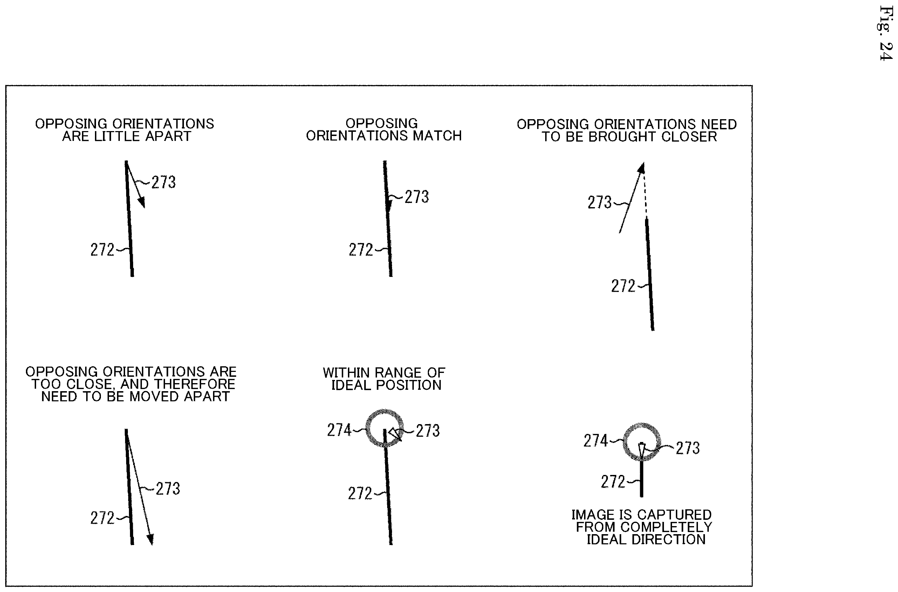

Fig. 24 is a diagram illustrating a display example of the guide information.
[Fig. 25]

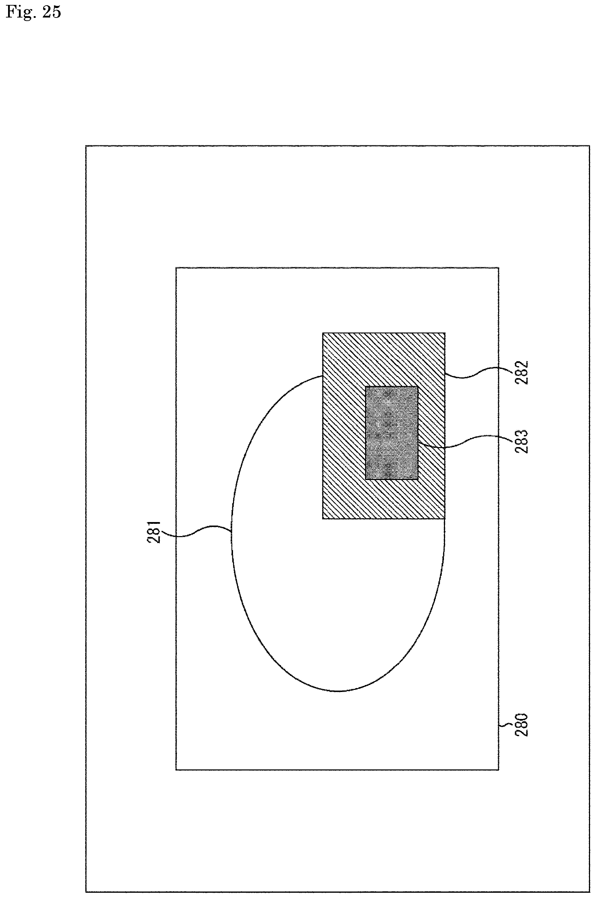

Fig. 25 is a diagram illustrating a display example of the guide information.
[Fig. 26]

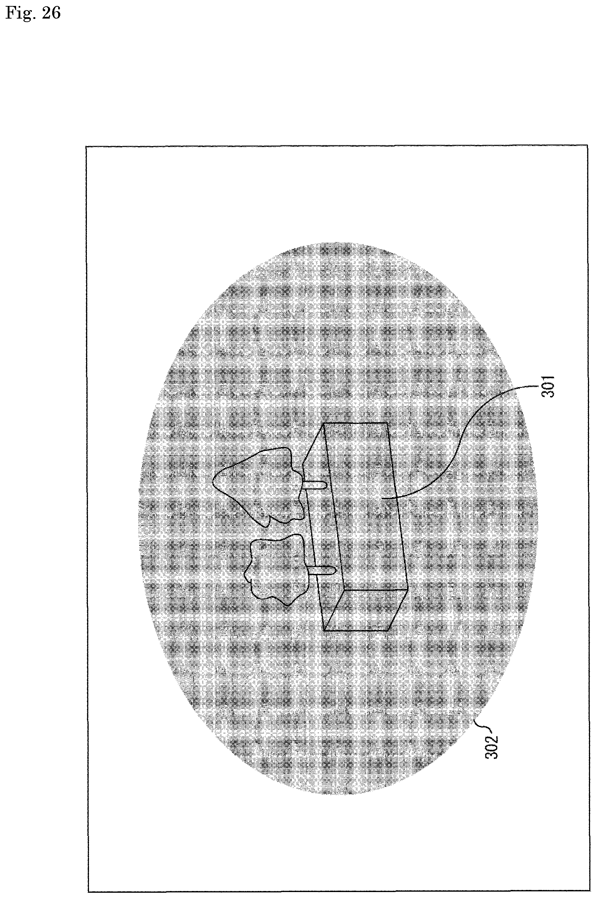

Fig. 26 is a diagram illustrating an example of a display image of 3D data.
[Fig. 27]

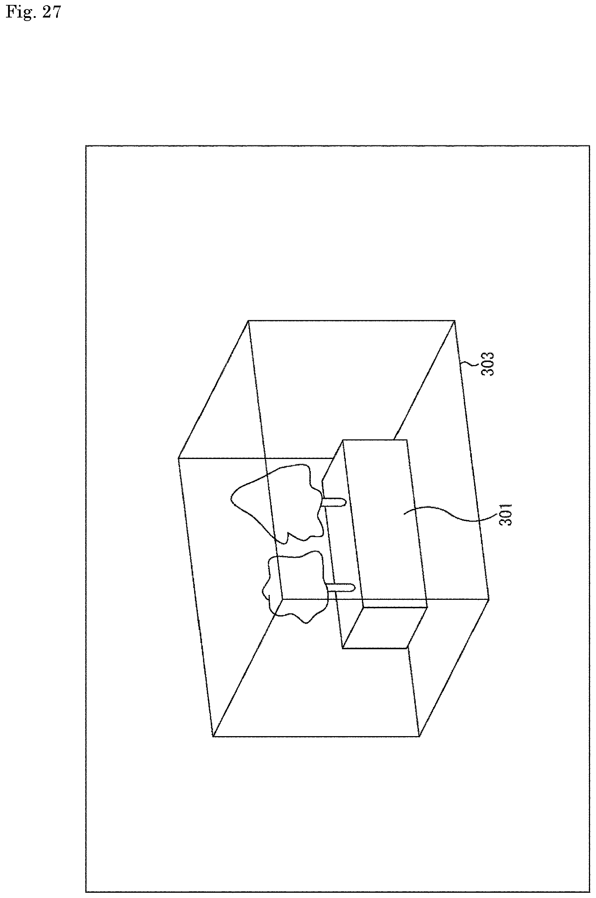

Fig. 27 is a diagram illustrating an example of a first ROI.
[Fig. 28]

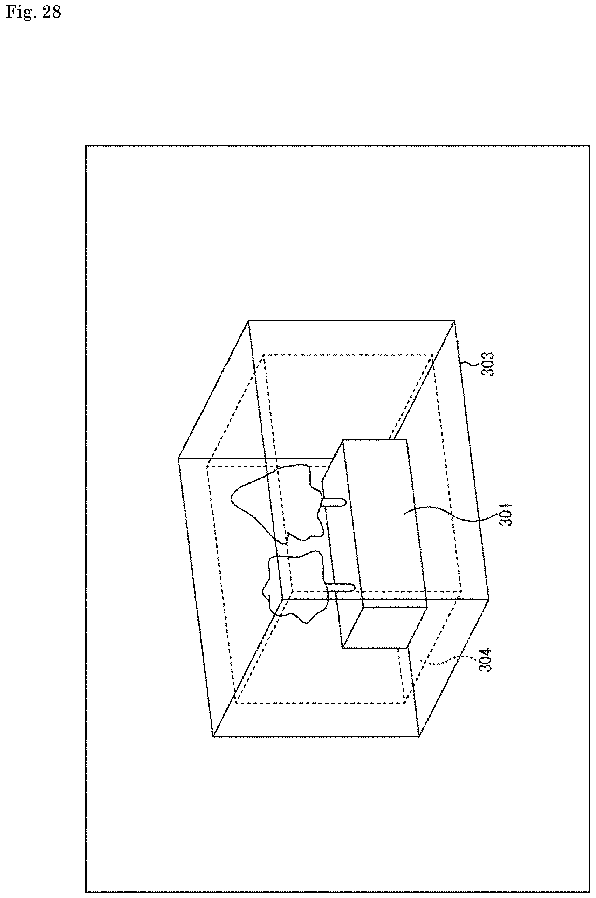

Fig. 28 is a diagram illustrating a setting example of a second ROI.
[Fig. 29]

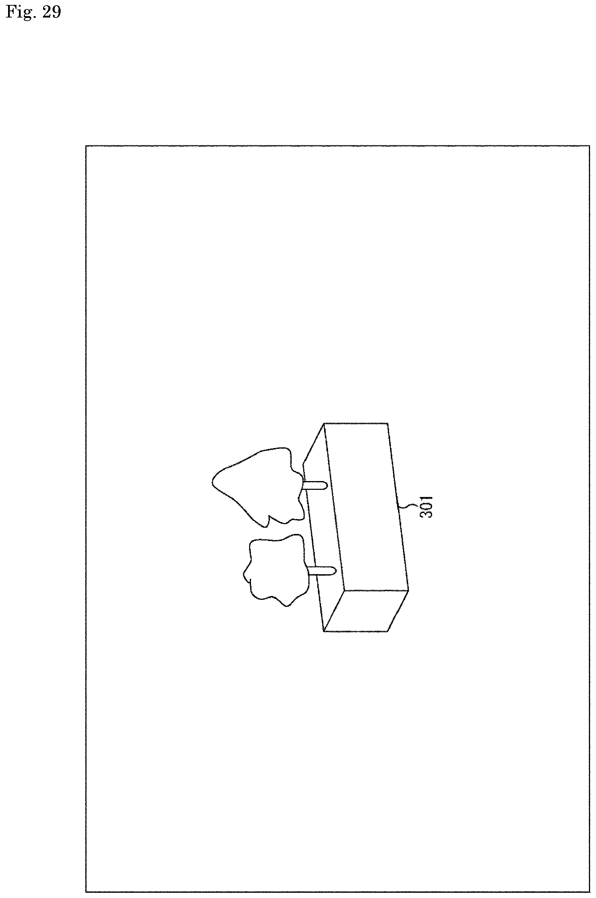

Fig. 29 is a diagram illustrating an example of a display image of 3D data.
[Fig. 30]

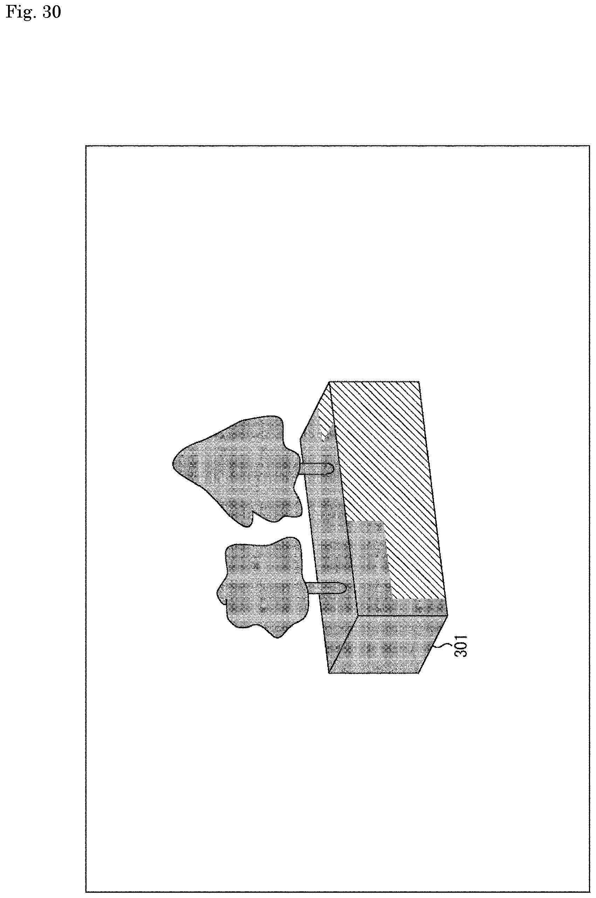

Fig. 30 is a diagram illustrating an example of a display image of 3D data.
[Fig. 31]

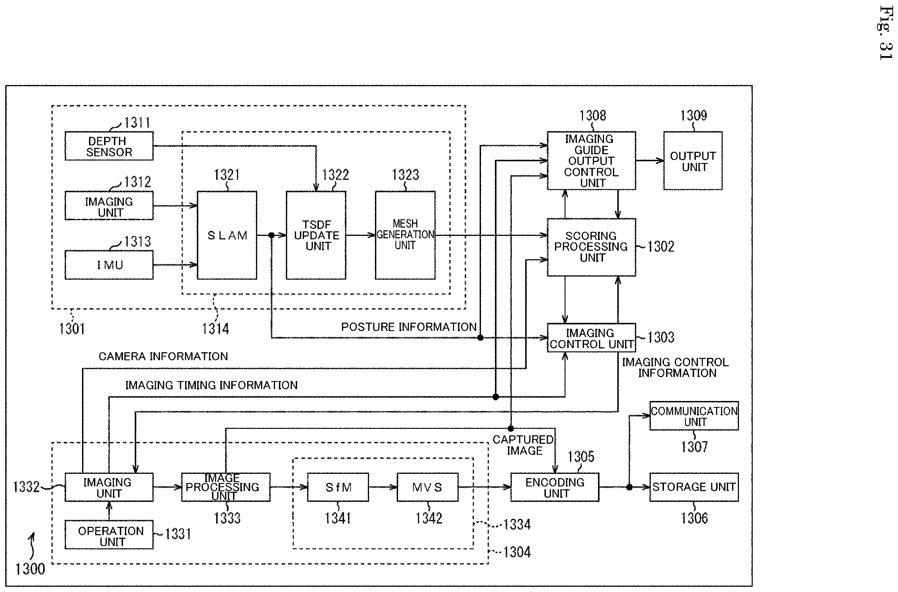

Fig. 31 is a block diagram illustrating a main configuration example of the imaging device.
[Fig. 32]

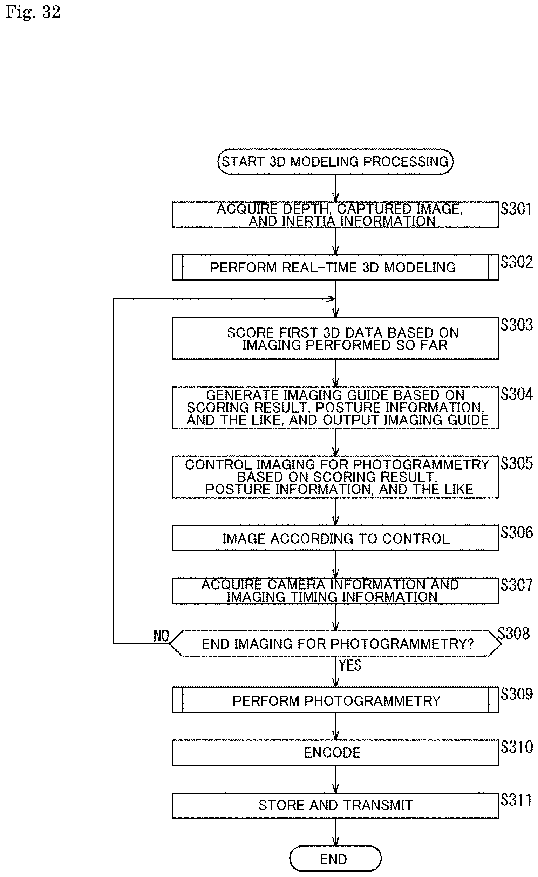

Fig. 32 is a flowchart describing an example of a flow of 3D modeling processing.
[Fig. 33]

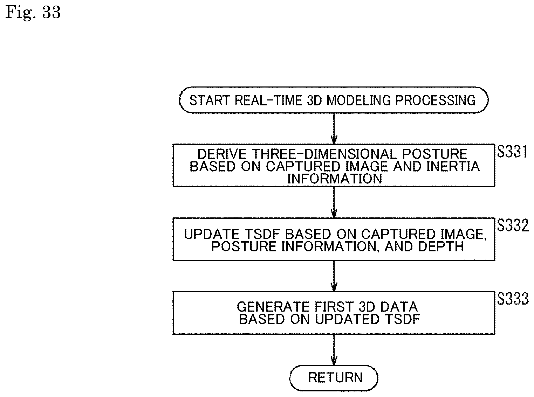

Fig. 33 is a flowchart describing an example of a flow of real-time 3D modeling processing.
[Fig. 34]

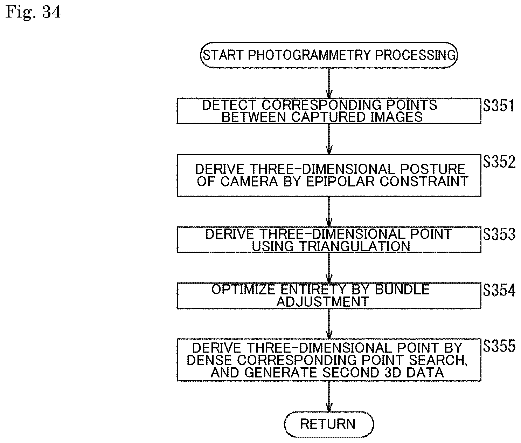

Fig. 34 is a flowchart describing an example of a flow of photogrammetry processing.
[Fig. 35]

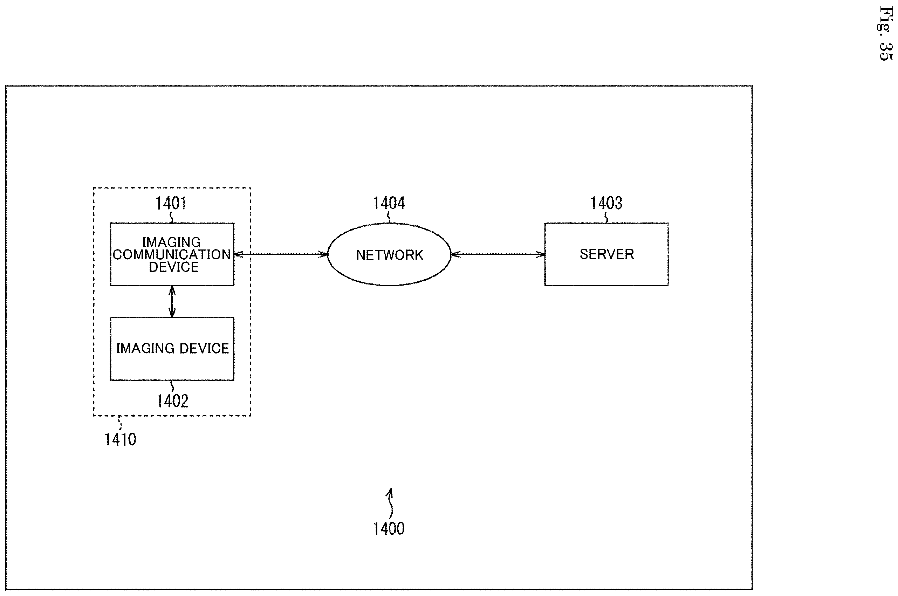

Fig. 35 is a diagram illustrating a main configuration example of an information processing system.
[Fig. 36]

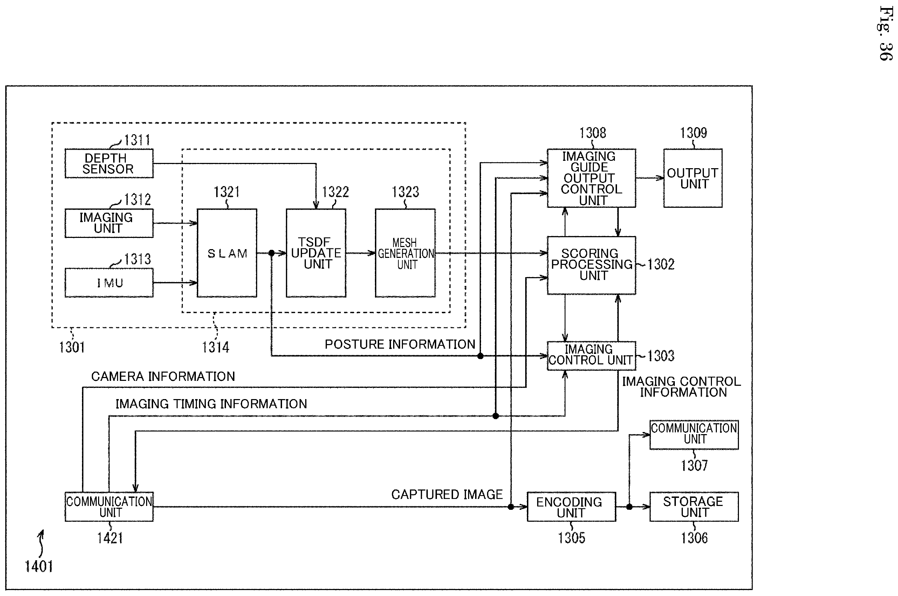

Fig. 36 is a block diagram illustrating a main configuration example of the imaging communication device.
[Fig. 37]

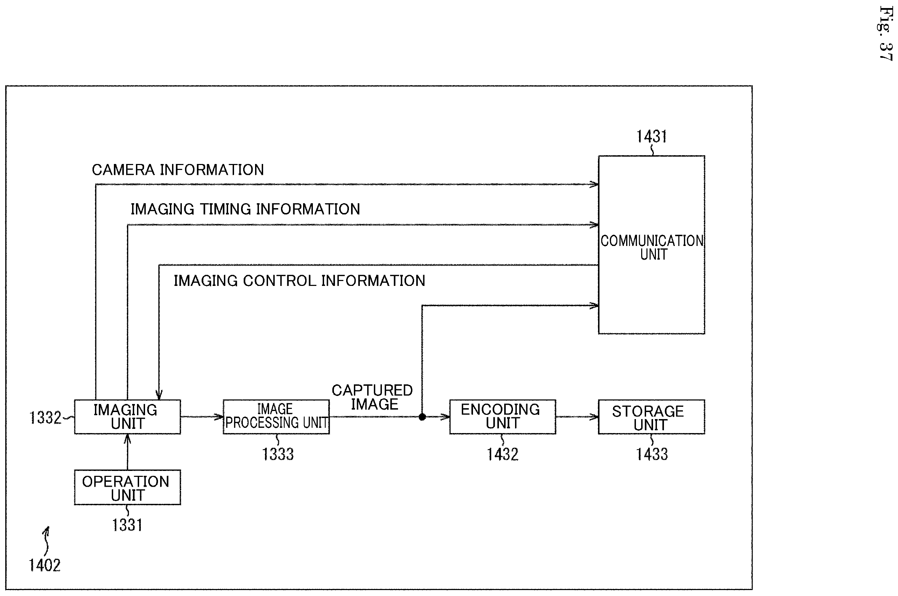

Fig. 37 is a block diagram illustrating a main configuration example of the imaging device.
[Fig. 38]

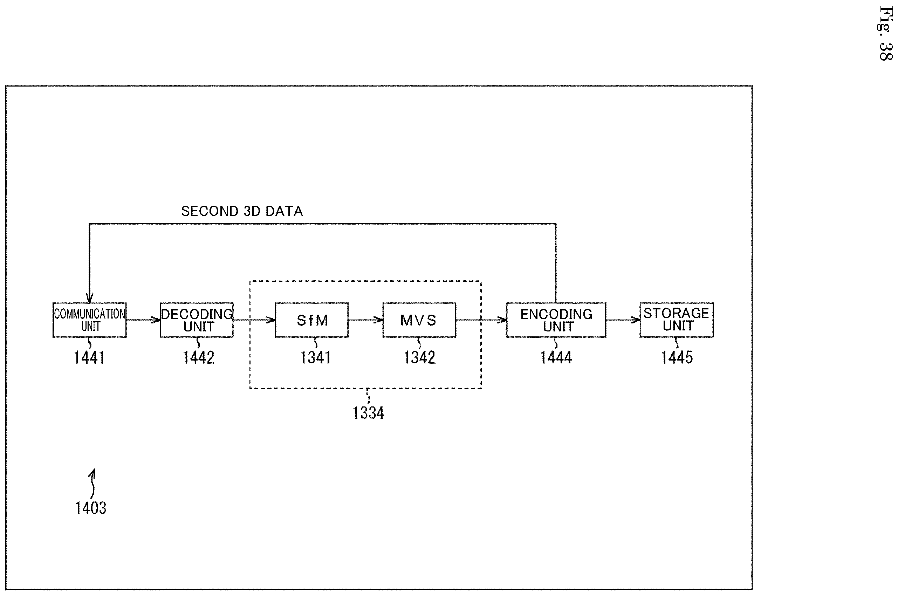

Fig. 38 is a block diagram illustrating a main configuration example of a server.
[Fig. 39]

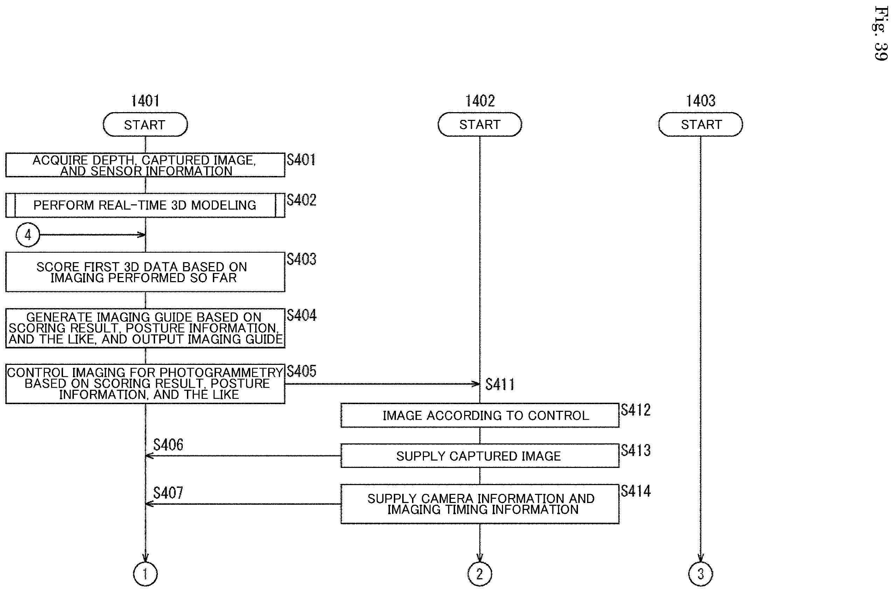

Fig. 39 is a flowchart describing an example of a flow of 3D modeling processing.
[Fig. 40]

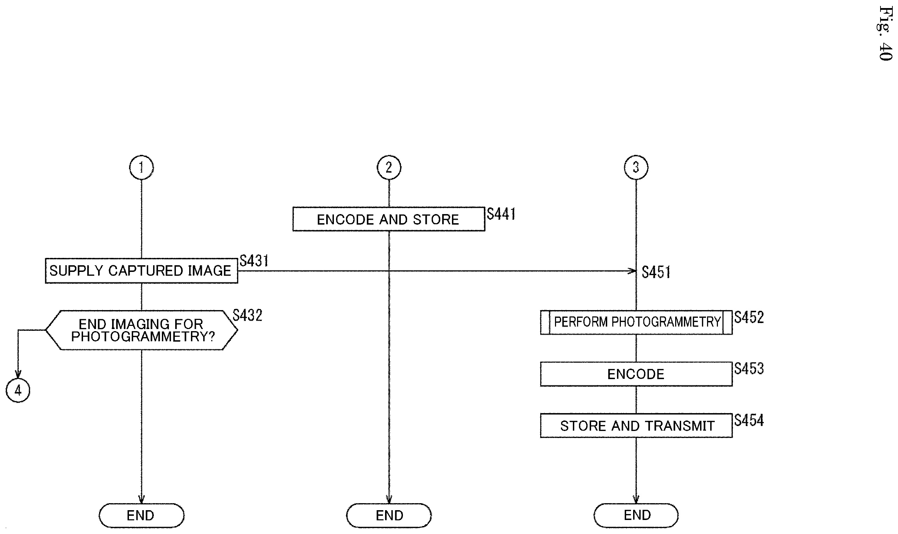

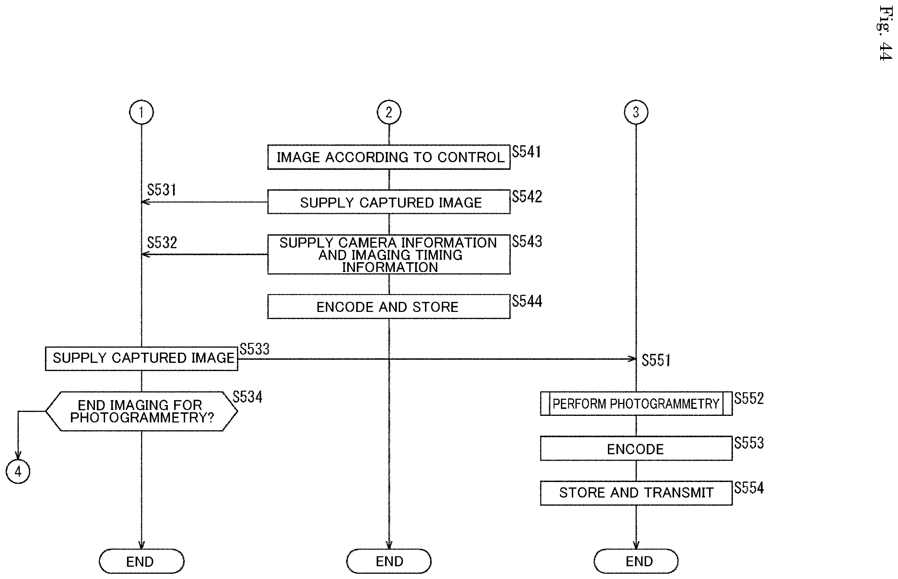

Fig. 40 is a flowchart describing an example of the flow of the 3D modeling processing, and continuing from Fig. 44.
[Fig. 41]

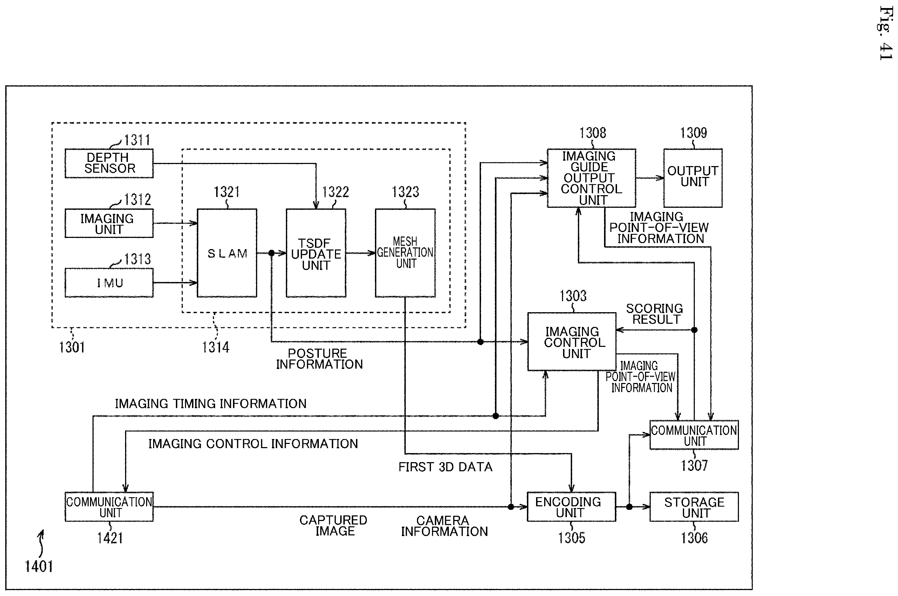

Fig. 41 is a block diagram illustrating a main configuration example of the imaging communication device.

[Fig. 42]

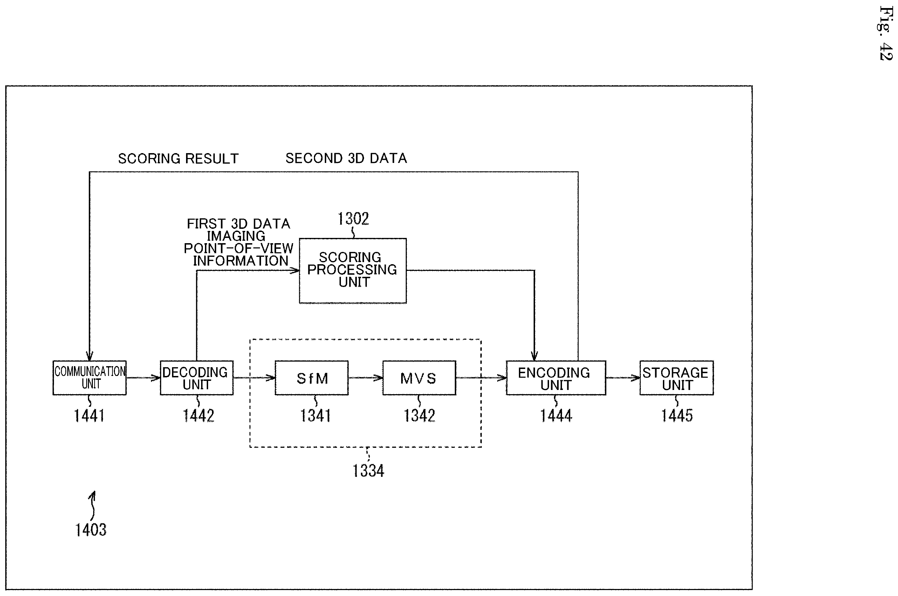

Fig. 42 is a block diagram illustrating a main configuration example of the server.

[Fig. 43]

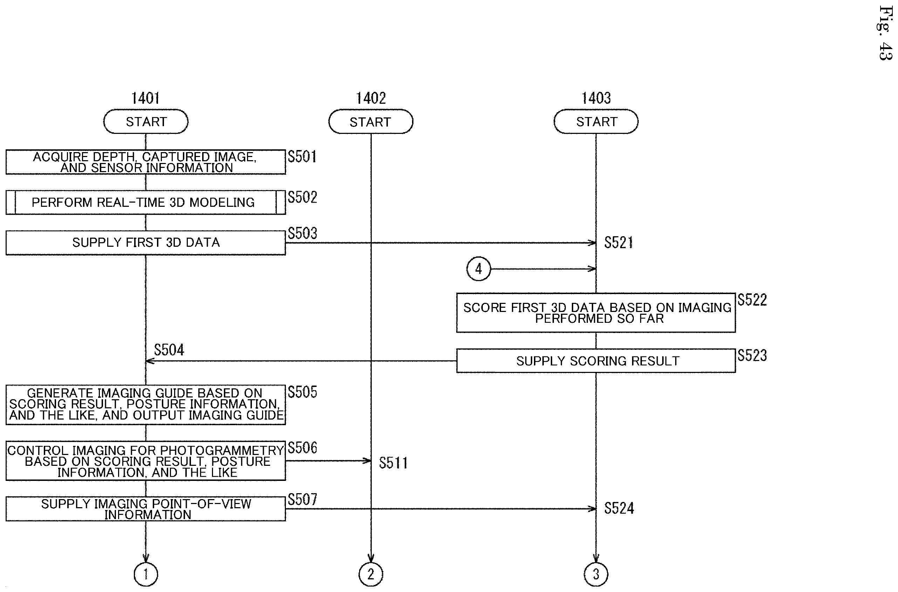

Fig. 43 is a flowchart describing an example of the flow of the 3D modeling processing.

[Fig. 44]

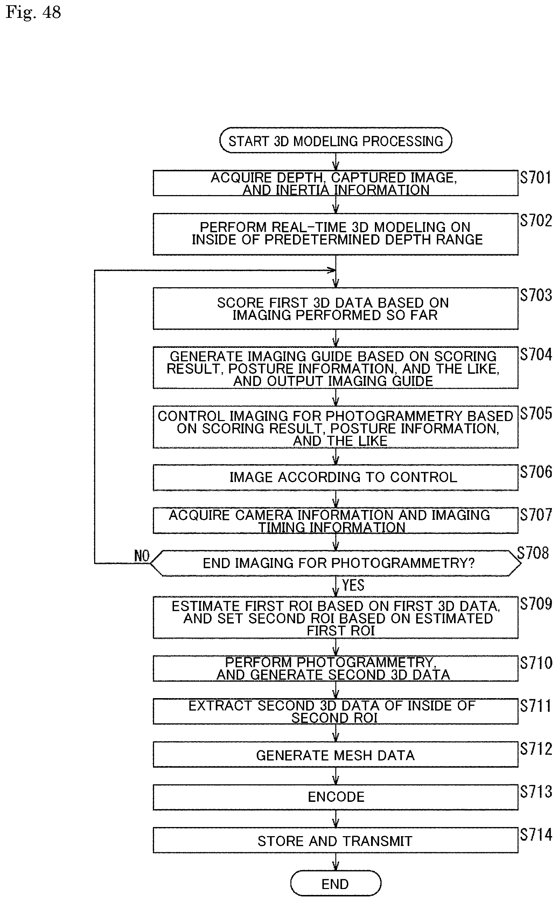

Fig. 44 is a flowchart describing an example of the flow of the 3D modeling processing, and continuing from Fig. 48.

[Fig. 45]

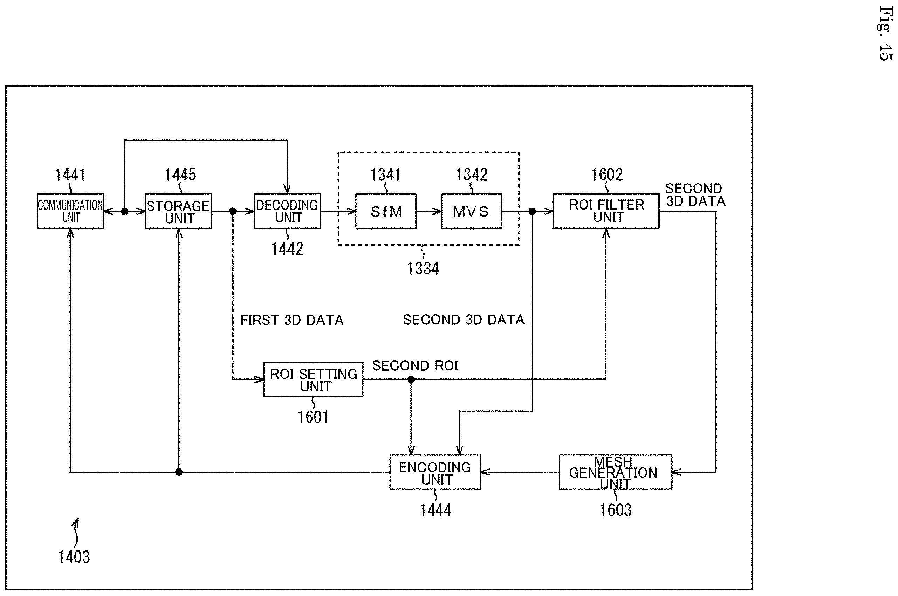

Fig. 45 is a block diagram illustrating a main configuration example of the server.

[Fig. 46]

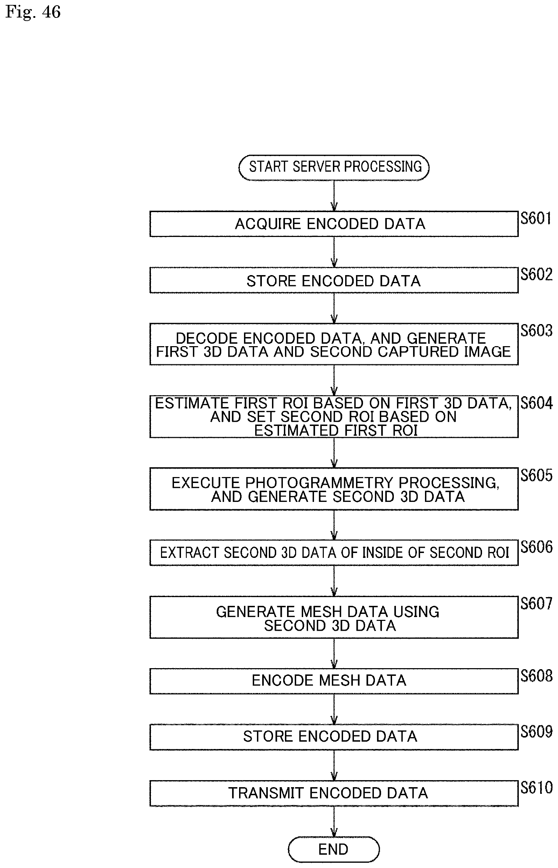

Fig. 46 is a flowchart illustrating an example of the flow of server processing.

[Fig. 47]

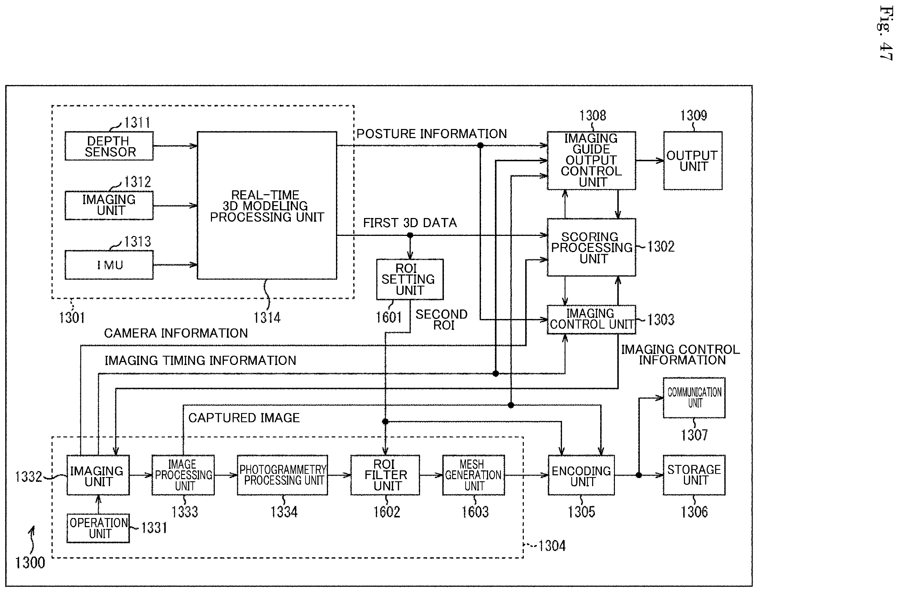

Fig. 47 is a block diagram illustrating a main configuration example of an image device.

[Fig. 48]

Fig. 48 is a flowchart describing an example of a flow of 3D modeling processing.

[Fig. 49]

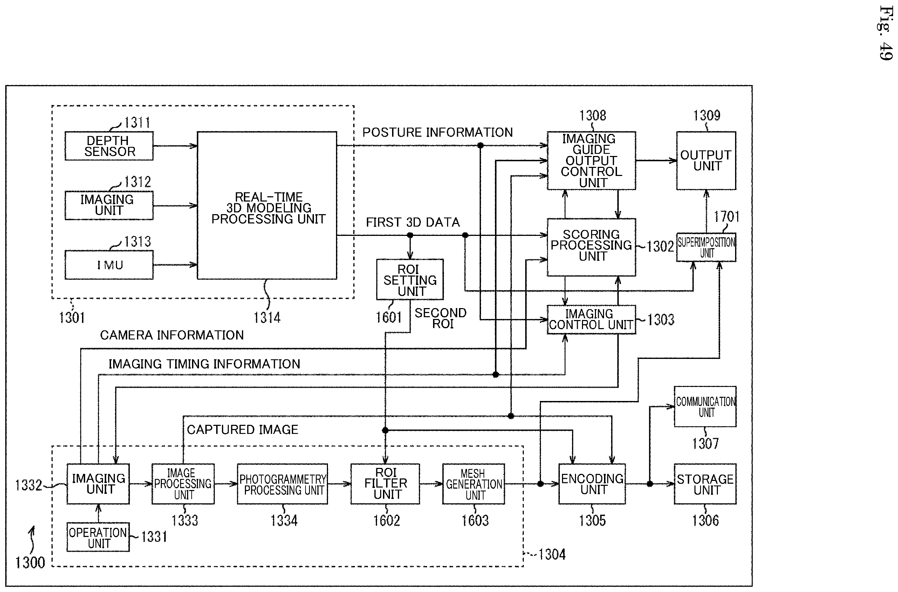

Fig. 49 is a block diagram illustrating a main configuration example of an imaging device.

[Fig. 50]

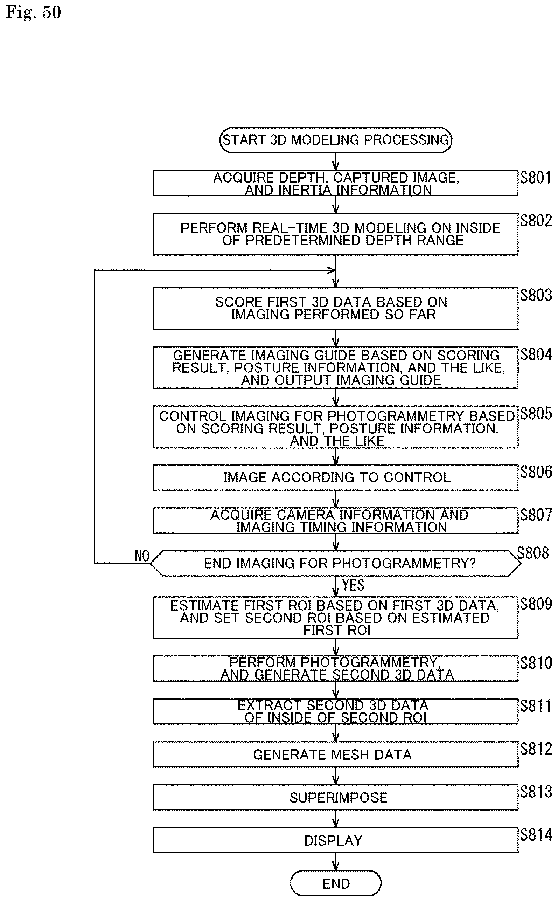

Fig. 50 is a flowchart describing an example of a flow of 3D modeling processing.

[Fig. 51]

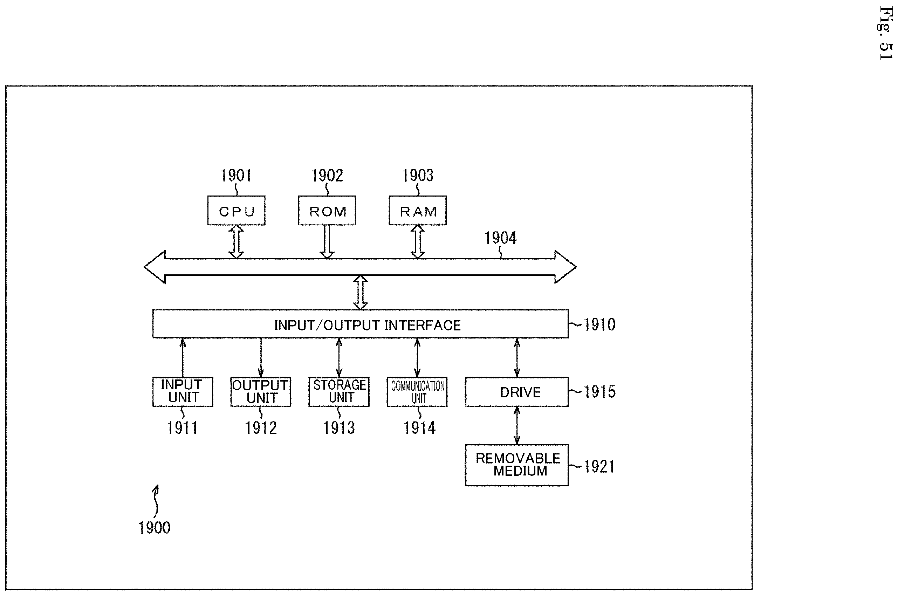

Fig. 51 is a block diagram of a main configuration example of a computer.

[Description of Embodiments]

Modes for carrying out the present disclosure (hereinafter, referred to as embodiments) will be described below. Note that the description will be given in the following order.

1. 3D Modeling
2. Imaging Control
3. Imaging Guide Output
4. Combination
5. ROI Setting Processing
6. First Embodiment (Imaging Device)
7. Second Embodiment (Information Processing System)
8. Third Embodiment (Application of ROI Setting)
9. Supplements

<1. 3D Modeling>

<Photogrammetry>

Conventionally, as a method for generating (reconfiguring) a model of a three-dimensional shape of an object (also referred to as a 3D object in the present specification) having the three-dimensional shape, there has been a method called photogrammetry for imaging this 3D object from multiple directions, and generating 3D data based on a plurality of obtained captured images. Note that, in the present specification, generating a model of a three-dimensional shape of a 3D object will be also referred to as 3D modeling.

Photogrammetry is a method for reconfiguring a very high-definition three-dimensional model using the principle of triangulation from a plurality of images photographed from various points of view. Note that "accuracy" of 3D data (3D model) in the present specification may include not only reproducibility (accuracy, definition, and the like) of a three-dimensional shape of a target 3D object, but also reproducibility (accuracy, definition, and the like) of a texture to be applied to a surface of this 3D model. For example, a camera 11-1 to a camera 11-5 illustrated in Fig. 1 image a 3D object 10 from a plurality of points of view, and obtains a plurality of captured images. Furthermore, processing called Structure from Motion (SfM) and processing called Multi view Stereo (MVS) are performed using these captured images and the like, and, moreover, meshing and texturing are performed as post-processing to generate 3D data 15.

According to SfM, for example, corresponding points are searched between captured images, a position and a posture of the camera are derived by epipolar constraint, and a position of each corresponding point in a three-dimensional space is specified by triangulation based on the position and the posture of this camera. In the present specification, a point in this three-dimensional space will be also referred to as a three-dimensional point. That is, a three-dimensional point corresponding to each corresponding point is specified. Furthermore, an entire three-dimensional point cloud specified as described above is optimized by bundle adjustment.

According to MVS, for example, dense corresponding point search is further performed using the three-dimensional point cloud derived as described above to add the three-dimensional point.

As described above, according to photogrammetry, since total optimization calculation that is called bundle adjustment and minimizes an error is performed, a very high-definition result can be obtained, yet a calculation load is great. Furthermore, the result is based not on physical measurement, but on geometric calculation, so that, principally, as an image having a higher resolution is used, a higher-definition model can be restored.

<Real-Time 3D Modeling>

As a 3D modeling method different from such photogrammetry, there has been a method called real-time 3D modeling for generating 3D data immediately (in real time) based on captured images, posture information, information of a depth, and the like. In a case of this method, as illustrated in, for example, Fig. 2, the 3D object 10 is imaged by moving a camera 21 in the surroundings of the 3D object 10 as indicated by a dotted line 22. The camera 21 includes not only an image sensor, but also a Light Detection And Ranging (Lidar) scanner (Direct Time of Flight (dToF) module), and obtains a captured image and detects a depth (a distance to a subject).

In recent years, advancement of miniaturization and higher functionality of a dToF module with development of science and technology also enables accurate measurement of a depth of a relatively long distance (e.g., approximately 5 m) irrespective of indoor or outdoor. Thus, real-time modeling/capturing experiences have become easily available at a consumer level.

Furthermore, the camera 21 includes an inertial sensor, and detects an acceleration and an angular velocity of the camera 21 (also referred to as inertia information in the present specification).

According to real-time 3D modeling, processing called Simultaneous Localization and Mapping (SLAM) is performed to generate posture information indicating the position and the posture of the camera 21. Furthermore, a Truncated Signed Distance Function (TSDF) is updated using this posture information and the depth, and 3D data 25 (a mesh and a texture) is generated by processing called Marching Cubes (MC).

According to SLAM, for example, the position and the posture of a camera are estimated based on a captured image and inertia information (own position estimation). When the TSDF is updated, a depth and a voxel are associated, and a volume is detected. According to MC, an isosurface is calculated using a neighboring voxel. When there is real-time posture information of SLAM, it is possible to detect the volume of the voxel (without a point cloud) by overlaying the depth (how far a beam has reached) across a plurality of frames. By making a voxel expression, it is possible to estimate a point of view (lacking point of view) that is in shade and needs to be photographed. Consequently, it is possible to detect a perforated structure or a protrusion structure of a 3D object.

<Neural Rendering>

Furthermore, there has been proposed a method (e.g., Neural Radiance Fields (NeRF) or the like) generically called Neural Rendering of configuring Neural Fields based on postures of photographed images and the photographed images, and generating images of arbitrary points of view and a three-dimensional model.

<Comparison>

Such 3D modeling methods have respectively different features, and any one of the methods is not superior in all aspects. Fig. 3 illustrates comparison between features of photogrammetry and real-time 3D modeling. As illustrated in Fig. 3, comparison of the methods shows that, while SfM (including own position estimation) and MVS are used for photogrammetry, own position estimation (SLAM) and the TSDF are used for real-time 3D modeling. Furthermore, comparison of data to be used shows that, while only image data is used in a case of photogrammetry, a depth and posture data are used in addition to the image data in a case of real-time 3D modeling. Furthermore, comparison of a processing time shows that, while a long time of several minutes to several ten hours are required in the case of photogrammetry, substantially immediate (real-time) processing can be performed at, for example, 30 fps (frame/sec) in the case of real-time 3D modeling.

Furthermore, comparison of required computation capability shows that, while computation capability of high end Central Processing Unit (CPU) and Graphics Processing Unit (GPU) levels are required in the case of photogrammetry, computation capability of a mobile Application Processor (AP) level is required in the case of real-time 3D modeling. Furthermore, comparison of definition of a model to be generated shows that, while the definition is relatively high although the definition depends on a resolution of a captured image, the number of captured images, and how the captured image is photographed in the case of photogrammetry, the definition is relatively low although the definition depends on the depth, own position estimation accuracy, and the like in the case of real-time 3D modeling.

Furthermore, an internal expression of three-dimensional data to be generated is based on a point cloud in the case of photogrammetry, and is based on a voxel in the case of real-time 3D modeling. Furthermore, while there is no constraint of a subject size and a resolution in the case of photogrammetry, the constraint depends on a sensor in the case of real-time 3D modeling. Furthermore, comparison of absolute accuracy of a model shows that the absolute accuracy is relatively high because the absolute accuracy is optimized by bundle adjustment in the case of the photogrammetry, the absolute accuracy is relatively low although the absolute accuracy depends on the sensor and the own position estimation accuracy in the case of the real-time 3D modeling. Furthermore, comparison of a scale shows that, while the scale is unstable (the size cannot be grasped) in the case of photogrammetry, the scale is uniform (the absolute size can be grasped) in the case of real-time 3D modeling.

Photogrammetry and real-time 3D modeling have these differences in features, for example. That is, applying real-time 3D modeling can reduce a workload and a processing load of 3D modeling compared to a case where photogrammetry or Neural Rendering is applied. In this regard, applying photogrammetry or Neural Rendering can generate high-definition 3D data compared to a case where real-time 3D modeling is applied.

<Facilitation of 3D Modeling>

To, for example, make it possible to obtain higher-definition 3D data, it is sufficient to apply photogrammetry or Neural Rendering as described above. However, in this case, too, a lower workload and processing load of 3D modeling are desirable. To reduce the workload and the processing load of 3D modeling, it is required to generate high-definition 3D data with small a number of times of imaging as possible.

For example, it has been concerned that, when a captured image necessary for 3D modeling cannot be obtained, accuracy of 3D data lowers. By contrast with this, it has been concerned that obtaining excessive captured images such that the captured images do not run short increases the number of times of imaging unnecessarily, and increases a workload of a user. Furthermore, it has been concerned that 3D modeling processing is performed using unnecessary captured images in this case, and therefore a processing load unnecessarily increases.

That is, to obtain higher-definition 3D data with a lower workload and processing load, it has been necessary to image a 3D object at a more appropriate position and posture. However, each conventional 3D modeling method has difficulty in grasping what position and what posture are appropriate for a photographer to perform imaging.

In the case of, for example, photogrammetry, 3D modeling processing requires time, and therefore it is difficult for a photographer to immediately check a 3D modeling processing result. Hence, it has been difficult for the photographer to grasp what position and what posture are appropriate to perform imaging at a time of photographing. As a result, it has been concerned that, for example, photographed images taken at an appropriate position and posture run short, and accuracy of 3D data obtained by photogrammetry lowers. Furthermore, excessively performing imaging at every position and posture without a plan such that captured images captured at an appropriate position and posture do not run short not only increases the workload of the user, but also unnecessarily increases captured images, and unnecessarily increases a load (a processing load, a processing time, and the like) of 3D modeling processing.

<2. Imaging Control>

<Imaging Control Based on Scoring Result>

Hence, 3D modeling is performed twice, and imaging for second 3D modeling is controlled using a first 3D modeling result.

For example, it is assumed that second imaging of imaging a 3D object having a three-dimensional shape, and second 3D modeling processing of generating second 3D data (second three-dimensional shape information) for expressing the three-dimensional shape of this 3D object using a second captured image obtained by this second imaging are performed (second 3D data generation processing 104 in Fig. 4). At this time, second imaging is controlled such that the second imaging for this second 3D modeling processing can be performed at an appropriate position and posture (imaging control processing for second 3D modeling 103 in Fig. 4). To implement such control, first 3D data generation processing 101 and scoring processing 102 in Fig. 4 are executed.

The first 3D modeling processing 101 is processing of generating first 3D data (first three-dimensional shape information) for expressing a three-dimensional shape of a 3D object. That is, according to the first 3D data generation processing 101, first imaging of imaging the 3D object, and first 3D modeling processing of generating the first 3D data using the first captured image obtained by this first imaging are performed.

The scoring processing 102 is processing of evaluating (scoring) accuracy of second 3D data that can be generated using the second captured image generated by second imaging performed so far. This scoring is performed based on the first 3D data generated by the first 3D modeling processing. According to the imaging control processing for second 3D modeling 103, the second imaging is controlled based on this scoring result.

That is, accuracy of the second 3D data that can be generated based on the second captured image obtained by second imaging performed until a current point of time is evaluated (scored) based on the first 3D data generated based on the first captured image obtained by first imaging. By so doing, it is possible to more easily generate a scoring result. Furthermore, the second imaging is controlled based on this scoring result. By so doing, it is possible to control the second imaging such that the second imaging is performed at a more appropriate position and posture. That is, it is possible to execute the second 3D modeling processing using the second captured image captured at the more appropriate position and posture. Consequently, it is possible to generate higher-definition 3D data while suppressing an increase in a load (a workload and a processing load) of 3D modeling. That is, it is possible to more easily perform 3D modeling.

Note that, in the present specification, a captured image refers to an image in general obtained by an image sensor or the like unless mentioned in particular. For example, an imaging device and the like can generally obtain following images. For example, a still image is obtained by an image sensor or the like at a timing at which a shutter button or the like is operated, and is stored as an imaging result in a storage medium or the like. Furthermore, acquiring a moving image is started by the image sensor or the like from a timing at which the shutter button or the like is operated, and this moving image is stored as an imaging result in the storage medium or the like. Furthermore, an image (that may be also referred to as an imported image) is acquired by the image sensor or the like before the shutter button or the like is operated, is not stored as an imaging result in the storage medium, and is used to, for example, display on a monitor or the like. In the present specification, a captured image indicates these images. That is, the captured image may be a still image or may be a moving image. Furthermore, the captured image may be stored as an imaging result in the storage medium or the like or may not be stored. Furthermore, the captured image may be displayed on the monitor or the like or may not be displayed. Furthermore, the captured image may be obtained before the shutter button or the like is operated, may be obtained at a timing at which the shutter button or the like is operated, or may be obtained after the shutter button or the like is operated. Furthermore, the captured image may be data itself (so-called RAW data) obtained by the image sensor or the like. Furthermore, the captured image may be an image on which color separation processing or color conversion processing has been performed. Furthermore, the captured image may be an image subjected to defect correction, noise reduction, Automatic White Balance (AWB), or signal processing such as gamma correction. Furthermore, the captured image may be subjected to other image processing.

<First Imaging>

In the present specification, an imaging unit (image sensor) that performs first imaging will be also referred to as a first imaging unit. Furthermore, an imaging unit (image sensor) that performs second imaging will be also referred to as a second imaging unit.

As described above, according to the first 3D data generation processing 101, the first imaging is performed. That is, the first imaging unit generates the first captured image. At this time, a distance (depth) from the first imaging unit to a subject (3D object) included in the first captured image may be detected by a depth sensor. A depth detection method of this depth sensor may be any method. Furthermore, the depth sensor may be integrated with the first imaging unit, or may be a sensor that is provided at a position different from that of the first imaging unit and is different from the first imaging unit. Note that it is assumed hereinafter that this depth is appropriately calibrated for the first captured image unless mentioned in particular. Furthermore, when first imaging is performed, inertia information (an angular velocity and an acceleration) of the first imaging unit may be detected by an inertia information sensor. An inertia information detection method of this inertia information sensor may be any method. Furthermore, the inertia information sensor may be integrated with the first imaging unit, or may be a sensor that is provided at a position different from that of the first imaging unit and is different from the first imaging unit.

The generated first captured image is used for the first 3D data generation processing. Furthermore, when a depth and inertia information are generated, the depth and the inertia information are also used for the first 3D data generation processing.

Note that the numbers of the first imaging units (image sensors), the depth sensors, and the inertia information sensors may be any number, may be singular, or may be plural. Note that all of the numbers of the first imaging units, the depth sensors, and the inertia information sensors may be identical, two of these numbers may be identical, these numbers may be different from each other.

<First 3D Modeling Processing>

As described above, according to the first 3D data generation processing 101, the first 3D modeling processing is performed. According to the first 3D modeling processing, first 3D data (first three-dimensional shape information) for expressing a three-dimensional shape of a 3D object is generated based on a first captured image generated by first imaging of imaging the 3D object.

This first 3D data may have a smaller information amount than that of second 3D data (second three-dimensional shape information) generated by the second 3D data generation processing 104, and low accuracy.

By so doing, it is possible to suppress an increase in loads of the scoring processing 102 and the imaging control processing for second 3D modeling 103. That is, the first 3D data is simplified more (an information amount is reduced more and accuracy is lowered more), so that it is possible to suppress an increase in loads of scoring and imaging control performed using this first 3D data. Furthermore, it is also generally possible to suppress an increase in load of generation of first 3D data (first 3D modeling processing). That is, it is possible to control second imaging with a less load.

Furthermore, a method of this first 3D modeling processing may be any method. According to, for example, the first 3D modeling processing, posture information associated with an angle of view of the first captured image may be derived, and the first 3D data may be generated based on this posture information, this first captured image, and the depth of a subject (3D object) of this first captured image. By, for example, updating a TSDF and performing MC based on these pieces of information, the first 3D data may be generated.

Note that this posture information may be information indicating a position and a posture of the first imaging unit in the three-dimensional space. A method for deriving this posture information may be any method. For example, the posture information may be derived based on inertia information of this first imaging unit (the acceleration and the angular velocity). For example, SLAM may be applied.

That is, the above-described real-time 3D modeling may be applied as the first 3D modeling processing. By so doing, it is possible to perform the first 3D modeling processing immediately (in real time), and obtain the first 3D data immediately (in real time). Consequently, it is possible to perform the imaging control processing for second 3D modeling immediately (in real time). That is, it is possible to more easily perform 3D modeling. Note that the posture information of the first imaging unit and the first 3D data may be generated using a neural network that receive an input of the first captured image, the inertia information of the first imaging unit, and the depth.

Furthermore, the first 3D data may be any data as long as the data expresses a three-dimensional shape of a 3D object, may be, for example, a point cloud, or may be data including a mesh indicating the three-dimensional shape of the 3D object formed by connecting vertices, and a texture to be applied to the surface of this mesh. This first 3D data is supplied for the scoring processing 102.

<Scoring Processing>

According to the scoring processing 102, as described above, accuracy of second 3D data that can be generated using a second captured image generated by second imaging performed so far is evaluated. This scoring is performed based on first 3D data generated by first 3D modeling processing, and a position and a posture of the second imaging performed so far. That is, the first 3D data is regarded as a 3D object modeled by the second 3D modeling processing, and a score is calculated per local portion of this first 3D data. In a case where, for example, the first 3D data includes a mesh indicating the three-dimensional shape of the 3D object formed by connecting the vertices, and a texture to be applied to the surface of this mesh, a scoring result is generated per polygon of this mesh. That is, a portion of the first 3D data from which higher-definition second 3D data can be obtained is more highly evaluated (a higher score is set thereto).

For example, it is assumed that first 3D data 120 illustrated in Fig. 5 is generated by the first 3D data generation processing 101 in Fig. 4. Furthermore, it is assumed that second imaging is performed on a 3D object corresponding to this first 3D data 120 at positions and postures of a camera 121-1 to a camera 121-3. In this case, an upper side of the first 3D data 120 in Fig. 5 is evaluated as a highly high score, and a lower side (gray portion) of the first 3D data 120 in Fig. 5 is evaluated as a relatively low score by the scoring processing 102. An example of a scoring method will be described later.

Note that, although, for convenience of description, Fig. 5 illustrates only two types of a high score and a low score as scoring results, the number of score types (the number of classifications of clustering) may be any number. For example, scores may be classified into three levels (e.g., a low score, a middle score, and a high score), may be classified into 10 levels (e.g., 0 point to 9 points), may be classified into 100 levels (e.g., 0 point to 99 points), or may be classified into levels other than these levels.

The scoring results generated by the scoring processing 102 are supplied for the imaging control processing for second 3D modeling 103.

<Imaging Control Processing for Second 3D Modeling>

According to the imaging control processing for second 3D modeling 103, the second imaging is controlled based on the position and the posture of the second imaging unit and the scoring result obtained by the scoring processing 102. For example, the second imaging is controlled such that the second imaging is performed at such a position and posture that the scoring result becomes better.

For example, it is assumed that the scoring result illustrated in Fig. 5 is obtained by the scoring processing 102. It is clear from this scoring result that imaging a lower side (e.g., gray portion) of a 3D object in Fig. 5 corresponding to the first 3D data 120 is insufficient.

Hence, according to the imaging control processing for second 3D modeling 103, the second imaging is controlled so as to image the 3D object from the lower side in Fig. 5 such that the captured images of the gray portion for which imaging is insufficient can be obtained. For example, it is determined that a position and a posture of a camera 121-4 are more appropriate as a position and a posture for performing the second imaging, and the second imaging is controlled such that imaging is performed at the position and the posture of this camera 121-4.

By so doing, it is possible to generate a second captured image captured at a more appropriate position and posture. In other words, it is possible to execute the second 3D modeling processing using the second captured image captured at a more appropriate position and posture. Consequently, it is possible to suppress an increase in a load (a workload and a processing load) of 3D modeling, and generate higher-definition 3D data. That is, it is possible to more easily perform 3D modeling.

A method for finding a position and a posture at which such second imaging needs to be performed may be any method. For example, according to the imaging control processing for second 3D modeling 103, (a range of) a position and a posture at which a score of a portion (gray portion) for which the second imaging is insufficient can be improved may be specified based on the scoring result. Furthermore, current posture information (a position and a posture) of the second imaging unit is provided as imaging point-of-view information for the scoring processing 102, a scoring result in a case where the second captured image temporarily obtained at the current position and posture is added is acquired, and, when this score is a predetermined threshold or more higher than a score obtained before this second captured image is added, it may be determined that the current position and posture are a position and a posture at which the second imaging needs to be performed.

Note that, when a relationship between the positions and the postures is known between the first imaging unit and the second imaging unit, the posture information of the first imaging unit may be provided for the scoring processing 102 as the imaging point-of-view information instead of the posture information of the second imaging unit. In this case, according to the scoring processing 102, the posture information of the second imaging unit may be derived using the posture information of the first imaging unit, and a scoring result may be generated using the posture information of this second imaging unit. Furthermore, a scoring result may be generated using a neural network that includes the posture information of the first imaging unit in an input parameter.

Furthermore, according to the imaging control processing for second 3D modeling 103, whether or not a position and a posture are a position and a posture at which second imaging needs to be performed may be determined based on an overlap ratio with respect to imaging ranges of the second imaging performed so far. The overlap ratio indicates a degree (rate) of a region (overlap region) in which imaging ranges overlap. That is, whether or not the position and the posture of this second imaging are a more appropriate position and posture may be determined depending on to what degree the imaging range of the second imaging to be performed from now and a region shown in the second captured images obtained so far overlap.

When, for example, a method for performing 3D modeling based on corresponding points between a plurality of second captured images like photogrammetry is applied as the second 3D modeling processing, at least part of imaging ranges of the plurality of second captured images need to overlap (there are overlap regions) to find these corresponding points. Hence, a position and a posture at which the second captured image whose overlap ratio makes it easy to perform the second 3D modeling processing on the second captured images obtained so far (enables more accurate 3D modeling processing) can be obtained may be determined as a more appropriate position and posture (a position and a posture at which the second imaging needs to be performed).

Note that what value the overlap ratio that makes it easy to perform the second 3D modeling processing makes it possible to perform (more accurate 3D modeling processing) takes also depends on a three-dimensional shape of a 3D object or the like. In a case of, for example, photographing from a so-called drone, a subject can be regarded as a plane 130 as illustrated on the left side in Fig. 6. For example, an imaging range in a case where a camera 131-1 images the plane 130 is a range indicated by a two-way arrow 132-1. Similarly, an imaging range in a case where a camera 131-2 images the plane 130 is a range indicated by a two-way arrow 132-2. Accordingly, an overlap region of these captured images is a range indicated by a two-way arrow 133. In such a case, how captured images overlap is simple, so that, if an overlap ratio equal to or more than a predetermined rate can be obtained, it is possible to perform more accurate 3D modeling processing.

However, in a case of second imaging, since a subject is a 3D object (first 3D data 135), and the entire subject is imaged, how the captured images overlap is stereoscopic as shown in a second captured image 136-1 and a second captured image 136-2 in an example on the right side in Fig. 6. Therefore, what overlap ratio enables sufficiently accurate 3D modeling processing depends on a three-dimensional shape of a 3D object or the like. Accordingly, when an overlap ratio of the second captured images obtained so far is taken into account to find a position and a posture at which second imaging needs to be performed, it is also desirable to take into account the three-dimensional shape of the 3D object (first 3D data) or the like (it is possible to more accurately find the position and the posture at which the second imaging needs to be performed).

Furthermore, when the position and the posture at which the second imaging needs to be performed are found, a distance from an imaging position of the second imaging to a subject (3D object) may be controlled. That is, not only which portion of the 3D object to image from which angle, but also at what distance this portion is imaged may be controlled.

As in an example illustrated on the left side in Fig. 7, when a 3D object 141 is imaged from a distant position (a position indicated a black triangle in Fig. 7) as indicated by a dotted line 142, the entire 3D object 141 can be imaged with a smaller number of times of imaging. In this regard, a situation that a complex portion (e.g., a diagonal line portion 141A or the like) of a three-dimensional shape of the 3D object 141 cannot be imaged may occur. Therefore, there has been probability that accuracy of the second 3D modeling processing (accuracy of the second 3D data) lowers.

By contrast with this, as in an example illustrated on the right side in Fig. 7, imaging the 3D object 141 from a close position (a position indicated by a black triangle in Fig. 7) as indicated by a dotted line 143 increases the number of times of imaging necessary to image the entire 3D object 141 compared to the example on the left side in Fig. 7. In this regard, a complex portion (e.g., the diagonal line portion 141A or the like) of the three-dimensional shape of the 3D object 141 can be imaged compared to the example on the left side in Fig. 7. That is, it is possible to reliably image the entire 3D object 141 compared to the example on the left side in Fig. 7. Consequently, it is possible to suppress a decrease in accuracy of the second 3D modeling processing (the accuracy of the second 3D data).

That is, an appropriate distance of a position of second imaging from a 3D object depends on a three-dimensional shape of this 3D object. Hence, according to the imaging control processing for second 3D modeling 103, a distance from the position of the second imaging to the 3D object (subject) may be controlled according to (complexity of) a three-dimensional shape of the 3D object. By so doing, it is possible to suppress an unnecessary increase in the number of times of imaging of second imaging while suppressing a decrease in accuracy of the second 3D modeling processing (the accuracy of the second 3D data) as described above. That is, it is possible to control the second imaging such that the second imaging is performed at a more appropriate position and posture.

Note that a method for deriving complexity of a three-dimensional shape of a 3D object may be any method. For example, this complexity may be derived based on first 3D data. In this regard, in this case, for example, the first 3D data is processed as a two-dimensional image, and the complexity of the three-dimensional shape of the 3D object may be derived from a pattern of the two-dimensional image or the like. By so doing, it is possible to suppress an increase in processing load related to deriving of the complexity of the three-dimensional shape of the 3D object.

Furthermore, a detection frame may be provided to derive complexity of a three-dimensional shape of a 3D object in this detection frame. This detection frame may have any shape, and may have any size. For example, how many polygons of the first 3D data directly face an imaging plane of second imaging may be found in this detection frame, the degree of variation in a normal direction in this detection frame may be converted into a numerical value, and complexity of a three-dimensional shape of a 3D object in this detection frame may be derived based on the degree of variation. Generally speaking, a greater variation indicates a more complex shape, and, in a case where polygons face the same direction, a shape can be regarded as a shape close to a planar shape. Furthermore, an average of polygons in the normal direction in the detection frame may be a representative value of the degree of direct facing on the imaging plane, and complexity of a three-dimensional shape of a 3D object may be derived based on this representative value.

Furthermore, according to the Marching Cubes method, when there are many cases of vertex arrangement that makes it easy to form a plane in detection frames, it may be determined that complexity of a three-dimensional shape of a 3D object is low.

That is, the complexity of the three-dimensional shape of the 3D object may be (a value based on) any parameter as long as the complexity indicates a quantitative value that serves as a base for estimating in which direction, how frequent, and at what distance imaging needs to be performed from an outline of a subject in a certain region. Furthermore, a method for controlling a distance from a 3D object of second imaging based on complexity of a three-dimensional shape of the 3D object may be any method. For example, second imaging may be controlled such that the second imaging is performed from a position closer to the 3D object as the three-dimensional shape of this 3D object is more complex. Furthermore, second imaging may be controlled such that the second imaging is performed from a position farther from the 3D object as the three-dimensional shape of this 3D object is more simple.

According to the imaging control processing for second 3D modeling 103, the position and the posture (the more appropriate position and posture) at which second imaging needs to be performed are found as described, and control information (imaging control information) for controlling the second imaging such that the second imaging is performed at this position and posture is generated. Furthermore, this imaging control information is supplied for the second 3D data generation processing 104. When, for example, the user or the like moves the second imaging unit, and a position and a posture of this second imaging unit match with the found "position and posture at which the second imaging needs to be performed", the imaging control information for instructing the second imaging may be generated and supplied for the second 3D data generation processing 104 (that is, the second imaging may be performed at "the position and the posture at which the second imaging needs to be performed").

<Second Imaging>

According to the second 3D data generation processing 104, the second imaging unit performs second imaging under control of the imaging control processing for second 3D modeling 103, and generates a second captured image. For example, the second imaging unit may perform the second imaging based on the imaging control information generated by the imaging control processing for second 3D modeling 103. For example, the second imaging unit may perform the second imaging when the imaging control information instructs imaging (at a timing at which imaging is instructed). Furthermore, a control unit that controls the position and the posture of the second imaging unit may move the second imaging unit to a position designated by this imaging control information and causes the second imaging unit to take a posture designated by this imaging control information, and the second imaging unit may perform the second imaging at these position and posture.

The numbers of the second imaging units may be any number, may be singular, or may be plural. Furthermore, the first imaging unit and the second imaging unit may be a common imaging unit (identical imaging unit), or may be respectively different imaging units provided at respectively different positions.

A specification (e.g., the number of pixels and the like) of the second imaging unit may be identical to or different from a specification of the first imaging unit. For example, the second captured image may have higher image quality than that of the first captured image.

Furthermore, the second captured image may have a higher resolution than that of the first captured image. Furthermore, the second captured image may have a higher dynamic range than that of the first captured image.

<Second 3D Modeling Processing>

Furthermore, a method of the second 3D modeling processing executed by the second 3D data generation processing 104 may be any method. For example, the method of the second 3D modeling processing may be identical to or different from that of the first 3D modeling processing.

For example, the above-described photogrammetry may be applied as the second 3D modeling processing. That is, according to the second 3D modeling processing, SfM and MVS may be applied, and a point cloud may be generated from a plurality of second captured images. Furthermore, by performing meshing and texturing as post-processing on this point cloud, the second 3D data may be generated. Furthermore, the second 3D data may be any data as long as the data expresses a three-dimensional shape of a 3D object, may be, for example, a point cloud, or may be data including a mesh indicating the three-dimensional shape of the 3D object formed by connecting vertices, and a texture to be applied to the surface of this mesh. Furthermore, above-described Neural Rendering may be applied as the second 3D modeling processing.

For example, using the second captured image and, in addition, posture information (posture information associated with angles of view of the second captured images obtained so far) of the second imaging unit that performs second imaging, the second 3D data may be generated. This posture information may be information indicating a position and a posture of the second imaging unit in the three-dimensional space.

Furthermore, when a relationship between positions and postures is known between the first imaging unit that performs first imaging, and the second imaging unit, the second 3D data may be generated using the posture information (the position and the posture in the three-dimensional space) of the first imaging unit. That is, the second 3D data may be generated using the posture information derived by the first 3D modeling processing. For example, the posture information of the second imaging unit may be derived using the posture information of the first imaging unit, and the second 3D data may be generated using the posture information of this second imaging unit. Furthermore, the second 3D data may be generated using a neural network that receives an input of the posture information of the first imaging unit or the second captured image.

Furthermore, the second 3D data may be encoded. This encoding method may be any method.

<Manual Imaging>

Furthermore, as illustrated in Fig. 4, second imaging may be performed without being based on imaging control information (e.g., manually) by the second 3D data generation processing 104. In the present specification, such an imaging method will be also referred to as manual imaging. When this manual imaging is performed, imaging timing information indicating this imaging timing is generated by (the second imaging of) the second 3D data generation processing 104, and is supplied for the imaging control processing for second 3D modeling 103. Furthermore, according to the imaging control processing for second 3D modeling 103, posture information of the second imaging unit at this imaging timing is found based on this imaging timing information, and the posture information of the second imaging unit at this imaging timing is supplied as the imaging point-of-view information for the scoring processing 102. Furthermore, a score is calculated based on this imaging point-of-view information by the scoring processing 102. As described above, (the posture information of the second imaging unit associated with an angle of view of) the second captured image obtained by manual imaging may be reflected in (a scoring result derived by) the scoring processing 102.

<Camera Information>

Furthermore, as illustrated in Fig. 4, camera information related to the second imaging unit is generated by (the second imaging of) the second 3D data generation processing 104, and is supplied for the scoring processing 102. Furthermore, according to the scoring processing 102, scoring may be performed based on this camera information, and a scoring result may be generated. This camera information may include any information. For example, the camera information may include internal parameters of the imaging unit. Furthermore, the camera information may include external parameters of the imaging unit. Furthermore, the camera information may include a captured image. Furthermore, the camera information may include angle-of-view information (focal distance information) of the second captured image. Furthermore, the camera information may include distortion correction information. Furthermore, the camera information may include shading compensation information. Furthermore, the camera information may include breathing compensation information. Furthermore, the camera information may include focus position information. Furthermore, the camera information may include image plane phase difference information. That is, these pieces of information may be used for scoring (evaluation of accuracy of the second three-dimensional shape information that can be generated).

<Real-Time Processing>

Note that the first 3D data generation processing 101 (first imaging and first 3D modeling processing), the scoring processing 102, and the imaging control processing for second 3D modeling 103 in Fig. 4 may be executed in parallel to each other.

For example, first 3D data of a portion subjected to first imaging of a 3D object that is a subject may be sequentially generated by the first 3D data generation processing 101. By, for example, applying real-time 3D modeling as the first 3D modeling processing, it is possible to generate 3D data immediately (in real time) based on a captured image, depth information, and the like. That is, in this case, it is possible to perform the first 3D modeling while performing the first imaging (while obtaining the first captured image), and generate the first 3D data. Although each portion of a 3D object is imaged while moving a camera around this 3D object that is a subject as described with reference to, for example, Fig. 2, it is possible to perform 3D modeling based on an obtained captured image or a depth before the captured image of the entire 3D object can be obtained. That is, it is possible to sequentially generate the 3D data of the imaged portion.

Furthermore, according to the scoring processing 102, the first 3D data corresponding to part of this 3D object may be scored (accuracy of second three-dimensional shape information that can be generated using a second captured image generated by second imaging performed so far may be evaluated). That is, every time the first 3D data corresponding to part of the 3D object is generated by the first 3D modeling processing (before the first 3D data of the entire 3D object is generated), a portion of this 3D object from which the first 3D data is generated may be sequentially scored (accuracy of the second 3D data that can be generated may be evaluated). By so doing, it is possible to start the scoring processing 102 before ending the first 3D data generation processing 101 (before generating the first 3D data of the entire 3D object). That is, it is possible to execute the first 3D data generation processing 101 and the scoring processing 102 in parallel.

Furthermore, according to the imaging control processing for second 3D modeling 103, every time a scoring result is obtained by the scoring processing 102 (before the scoring result of the entire 3D object is obtained), second imaging may be controlled based on the obtained scoring result (the scoring result of the first 3D data corresponding to part of the 3D object). By so doing, before the scoring processing 102 is ended (before a scoring result of an entire 3D object is obtained), it is possible to start the imaging control processing for second 3D modeling 103. That is, it is possible to execute the scoring processing 102 and the imaging control processing for second 3D modeling 103 in parallel.

By combining the above methods, it is possible to execute the first 3D data generation processing 101, the scoring processing 102, and the imaging control processing for second 3D modeling 103 in parallel to each other.

In, for example, Fig. 8, a time axis goes from the left to the right in Fig. 8 as indicated by an arrow. According to the first 3D data generation processing 101, by executing the first imaging and the first 3D modeling processing in parallel, it is possible to sequentially generate the first 3D data of the portion on which the first imaging has been performed like first 3D data 151-1, first 3D data 151-2, and first 3D data 151-3. Furthermore, by executing the first 3D data generation processing (first 3D modeling processing) and the scoring processing 102 in parallel, it is possible to sequentially derive a scoring result of a portion from which the first 3D data has been generated like a scoring result 152-1, a scoring result 152-2, and a scoring result 152-3. Furthermore, by executing the scoring processing 102 and the imaging control processing for second 3D modeling 103 in parallel, it is possible to control the second imaging based on scoring results (the scoring result 152-1, the scoring result 152-2, and the scoring result 152-3) obtained so far at each timing.

That is, by executing the first 3D data generation processing 101, the scoring processing 102, and the imaging control processing for second 3D modeling 103 in parallel to each other, it is possible to control second imaging while performing first imaging. That is, it is possible to perform the first imaging and the second imaging in parallel (immediately).

<Scoring>

This scoring method will be described. Examples of a condition that photogrammetry succeeds include that SfM succeeds, MVS succeeds, and texturing (mapping of a texture) succeeds. Examples of a condition that SfM succeeds include that a baseline can be secured, and feature points can be matched. Furthermore, examples of a condition that MVS succeeds include that a baseline can be secured. Examples of a condition that texturing succeeds include that a high-definition texture can be obtained from a captured image, and a face to which the texture is applied is photographed from a front side as much as possible. The baseline indicates a distance between imaging point-of-view positions (positions of cameras at a time of imaging).

<Scoring of Polygon>

Examples of a condition that a certain polygon face can be stored by SfM or MVS include a visible minimum condition (whether or not the polygon can be seen from an imaging position), a favorable condition of accuracy (the condition that the accuracy improves more), and a favorable condition of matching (detection of a corresponding point) (a condition that matching becomes easier).

Examples of the visible minimum condition include that the center of gravity of a target polygon exists in a field of view (an angle of view of imaging) seen from a point of view (imaging position), an inner product of a normal line and a line of sight (a vector from the line of sight to the center of gravity of the target polygon) of the target polygon is at least positive and there is no other polygon that blocks the line of sight, and there are two or more (visible) lines of sight through which the target polygon can be seen.

In a case of, for example, Fig. 9, since there is a line of sight 162 from a certain point of view to the center of gravity of a target polygon 160, the target polygon 160 is located in this line of sight. Furthermore, an inner product of a normal line 161 and the line of sight 162 of this target polygon 160 is positive. Furthermore, the line of sight 162 reaches the target polygon 160 without being blocked by other polygons, and is "a line of sight through which the target polygon 160 can be seen". Accordingly, the line of sight 162 satisfies the visible minimum condition.

By contrast with this, the line of sight 163 is blocked by a polygon 164, and therefore is not "the line of sight through which the target polygon 160 can be seen".

Furthermore, examples of the favorable condition of accuracy include that a baseline is sufficiently long, a ratio of the length of the baseline to a distance to a subject (length of baseline/distance to subject) is sufficiently large, and there are sufficiently large number of visible points of view and dispersion of angles formed by these points of view is great.

In a case of, for example, Fig. 10, examples of a condition that accuracy improves more include that a baseline 173 between a point of view 171 and a point of view 172 through which a target polygon 170 can be seen is sufficiently long (the point of view 171 and the point of view 172 are sufficiently apart), and a ratio of the length of the baseline 173 to a distance 174 to a subject is sufficiently large (a value of "length of baseline/distance to subject" is sufficiently large).

Furthermore, in a case of an example on the left side in Fig. 11, points of view through which a target polygon 180 can be seen are two points of a point of view 181 and a point of view 182. By contrast with this, in a case of an example on the right side in Fig. 11, points of view through which the target polygon 180 can be seen are six points of the point of view 181 to a point of view 186. That is, there are more visible points of view in the example on the right side than in the example on the left side, and dispersion of angles formed by the points of view is great. It is possible to robustly perform triangulation from a plurality of pieces of different information when there are many visible points, and expect improvement of accuracy. Accordingly, the condition that accuracy improves more is satisfied in the example on the right side compared to the example on the left side.

Furthermore, examples of the favorable condition of matching include that an angle formed by a normal line of a target polygon, and a line of sight from a point of view to the center of gravity of the target polygon is sufficiently small, a ratio of a distance between a point of view and a subject that form a pair is sufficiently small, and there is a texture that can be matched.

In a case of an example on the left side in Fig. 12, an angle formed by a normal line 191 and a point of view 192 of a target polygon 190 is smaller than an angle formed by the normal line 191 and a point of view 193. Accordingly, the point of view 192 makes it easy to more correctly detect a feature point of the face of the target polygon 190 than the point of view 193. Furthermore, in a case of an example on the right side in Fig. 12, a distance from a point of view 194 to a subject (target polygon 190) is remarkably longer than a distance from a point of view 195 to the subject (target polygon 190). That is, a ratio of the distances to the subject is high between the point of view 194 and the point of view 195. In such a case, how feature points of the 190 face of the target polygon are seen from both points of view are greatly different even when a baseline is long, and therefore difficulty of matching may increase. In other words, the points of view that have a low ratio with respect to distances to the subject like the point of view 192 and the point of view 193 in the example on the left side in Fig. 12 make it easier to perform matching.

<Scoring of Texture>

Examples of the condition that a certain polygon face includes sufficient points of view include a minimum condition (whether or not a texture can be seen) and a favorable condition of texturing (a condition that enables texturing more beautifully).

Examples of the minimum condition include that there is a point of view that satisfies the above-described visible minimum condition.

Furthermore, examples of the favorable condition of texturing include that an angle formed by a normal line of a target polygon, and a line of sight from a point of view to the center of gravity of the target polygon is small, and a sufficient resolution can be obtained when a distance from the point of view to a subject is a certain distance or less.

Note that the above-described conditions are merely examples. Any condition may be applied to scoring. Furthermore, the condition may have any contents. For example, the above-described conditions may be omitted, or conditions other than the above-described conditions may be added.

<Scoring of Second Captured Image>

A second captured image obtained by second imaging may be scored. For example, the second captured image may be scored based on camera information. For example, whether or not the focus is adjusted to a desired position may be evaluated for the second captured image. Furthermore, whether or not hand shake occurs may be evaluated. Furthermore, whether or not exposure is appropriate may be evaluated. Furthermore, whether or not it is easy to obtain feature points may be evaluated.

<Computation Example of Scoring>

As illustrated in, for example, Fig. 13, a distance between a target captured image 201 and a target polygon 202 is put as d. Furthermore, an ideal distance to a subject is put as $d_{opt}$. Furthermore, $c_d$ represents a predetermined coefficient. A score $s_d$ in this case may be derived as in following equation (1).

$$s_d = \frac{1}{1 + c_d \left( d - d_{opt} \right)^2}$$

$$\dots (1)$$

Furthermore, the center of the target polygon 202 is put as $c_p$. A line of sight from the target captured image 201 to the center $c_p$ is put as $v_p$. Furthermore, a normal line of the target polygon 202 is put as $n_p$. Furthermore, an angle formed by the line of sight $v_p$ and the normal line $n_p$ is put as $\alpha$. The angle $\alpha$ formed in this case can be derived as in following equation (2). Furthermore, a score $s_\alpha$ based on this formed angle $\alpha$ may be derived as in following equation (3). Furthermore, $c_\alpha$ represents a predetermined coefficient.

$$\alpha = \cos^{-1} \frac{v_p \cdot n_p}{|v_p| \cdot |n_p|}$$

$$\dots (2)$$

$$s_\alpha = \frac{2}{1 + \exp c_\alpha \alpha^2}$$

$$\dots (3)$$

The optical axis of the camera (a normal line vector of a target captured image whose starting point is the center of the target captured image 201) is put as $v_c$. Furthermore, an angle formed by this optical axis $v_c$ and the line of sight $v_p$ is put as $\beta$. The angle $\beta$ formed in this case can be derived as in following equation (4). Furthermore, a score $s_\beta$ based on this formed angle $\beta$ may be derived as in following equation (5). Furthermore, $c_\beta$ represents a predetermined coefficient.

$$\beta = \cos^{-1} \frac{v_c \cdot v_p}{|v_c| \cdot |v_p|}$$

$$\dots (4)$$

$$s_\beta = \frac{2}{1 + \exp c_\beta \beta^2}$$

$$\dots (5)$$

A total score $s_{total}$ may be derived as in following equation (6) using the scores $s_d$, $s_\alpha$, and $s_\beta$ derived as described above.

$$S_{total} = S_d \cdot S_\alpha \cdot S_\beta$$

$$\dots (6)$$

Furthermore, a weighted addition value of a total score of two highest points of view among total scores of points of view derived as described above may be a final score.

Note that this computation method is an example. A computation method of the scoring processing 102 may be any method, and is not limited to this example.

<Example of Configuration of Executing Processing>

Each of the above-described processing in Fig. 4 may be executed by any device. For example, the information processing device may execute the above-described first 3D modeling processing of the first 3D data generation processing 101, scoring processing 102, and imaging control processing for second 3D modeling 103.

That is, the information processing device may include a first 3D modeling processing unit that generates first three-dimensional shape information for expressing a three-dimensional shape of a 3D object based on a first captured image generated by first imaging of imaging the 3D object, a scoring processing unit that evaluates accuracy of second three-dimensional shape information that can be generated using a second captured image generated by second imaging performed so far using the first three-dimensional shape information, and generates a scoring result, and an imaging control unit that controls second imaging of imaging the 3D object based on this scoring result. In this section, this information processing device will be also referred to as a first information processing device.

Furthermore, the information processing method executed by the first information processing device may include generating first three-dimensional shape information for expressing a three-dimensional shape of a 3D object based on a first captured image generated by first imaging of imaging the 3D object, evaluating accuracy of second three-dimensional shape information that can be generated using a second captured image generated by second imaging performed so far using this first three-dimensional shape information, and generating a scoring result, and controlling second imaging of imaging the 3D object based on this scoring result.

By so doing, it is possible to image (perform second imaging on) the 3D object at a more appropriate position and posture, and execute the second 3D modeling processing using the obtained second captured image. Consequently, it is possible to generate higher-definition 3D data while suppressing an increase in a load (a workload and a processing load) of 3D modeling. That is, it is possible to more easily perform 3D modeling.

Furthermore, this first 3D modeling processing unit may include a posture information generation unit that generates posture information indicating a position and a posture of this first imaging unit based on the first captured image and an acceleration and an angular velocity of the first imaging unit, and a three-dimensional shape generation unit that generates the first three-dimensional shape information of this 3D object based on this posture information and a depth of the 3D object.

Furthermore, the first information processing device may further perform the first imaging of the above-described first 3D data generation processing 101. For example, the first information processing device may further include the first imaging unit. Furthermore, the first information processing device including this first imaging unit may include a depth detection unit that detects the depth, may include an inertia measurement unit that detects the acceleration and the angular velocity of the first imaging unit, or may include both.

Furthermore, the first information processing device may further perform the second imaging of the above-described second 3D data generation processing 104. For example, the first information processing device may further include a second imaging unit.

Note that the second captured image generated by this second imaging may be encoded. For example, the first information processing device including the second imaging unit may include an encoding unit that encodes the second captured image generated by this second imaging unit. This encoded second captured image may be supplied to another information processing device by communication or may be stored in a storage medium.

Furthermore, the first information processing device may further perform the second 3D modeling processing of the above-described second 3D data generation processing 104. For example, the first information processing device including the second imaging unit may include a second 3D modeling processing unit that generates the second three-dimensional shape information based on the second captured image generated by this second imaging unit. For example, this second 3D modeling processing unit may include a corresponding point position deriving unit that derives three-dimensional positions of corresponding points between a plurality of second captured images, and a three-dimensional point addition unit that adds three-dimensional points based on the three-dimensional positions of these corresponding points. According to the second 3D modeling processing, meshing and texturing may be further performed as post-processing. For example, the second three-dimensional shape information may further include a mesh indicating the three-dimensional shape of a 3D object formed by connecting vertices, and a texture to be applied to the surface of this mesh.

Note that second 3D data generated by this second 3D modeling processing may be encoded. For example, the first information processing device including the second imaging unit and the second 3D modeling processing unit may further include the encoding unit that encodes the second three-dimensional shape information generated by this second 3D modeling processing unit. This encoded second three-dimensional shape information (second 3D data) may be supplied to another information processing device by communication or may be stored in a storage medium.

Note that the second imaging of the above-described second 3D data generation processing 104 may be performed by a second information processing device different from the first information processing device. For example, the first information processing device may include a communication unit that communicates with the second information processing device (imaging device) including the second imaging unit, the imaging control unit may generate imaging control information for controlling the second imaging, and this communication unit may supply this imaging control information to the second information processing device.

Furthermore, in this case, the first information processing device may acquire the second captured image generated by the second information processing device. For example, the first information processing device including the communication unit may acquire the second captured image supplied from the second information processing device. This second captured image may be encoded. For example, the first information processing device including the communication unit may include an encoding unit that encodes the second captured image acquired by this communication unit. This encoded second captured image may be supplied to another information processing device by communication or may be stored in a storage medium.

Furthermore, the second captured image supplied from the second information processing device may be encoded. That is, the communication unit may acquire encoded data of the second captured image. Furthermore, this encoded data may be supplied to another information processing device by communication or may be stored in a storage medium. Furthermore, the first information processing device may decode the encoded data acquired by the communication unit, and generate (restore) the second captured image. For example, the first information processing device including the communication unit may include a decoding unit that decodes the encoded data of the second captured image acquired by this communication unit.

As described above, when the second information processing device performs the second imaging, the first information processing device may further perform the second 3D modeling processing of the above-described second 3D data generation processing 104. For example, the first information processing device including the communication unit may include a second 3D modeling processing unit that generates the second three-dimensional shape information based on the second captured image acquired by this communication unit. For example, this second 3D modeling processing unit may include a corresponding point position deriving unit that derives three-dimensional positions of corresponding points between a plurality of second captured images, and a three-dimensional point addition unit that adds three-dimensional points based on the three-dimensional positions of these corresponding points. According to the second 3D modeling processing, meshing and texturing may be further performed as post-processing. For example, the second three-dimensional shape information may further include a mesh indicating the three-dimensional shape of a 3D object formed by connecting vertices, and a texture to be applied to the surface of this mesh.

Note that the second 3D data generated by this second 3D modeling processing may be supplied to another information processing device by communication or may be stored in a storage medium. Furthermore, this second 3D data may be encoded. For example, the first information processing device including the communication unit and the second 3D modeling processing unit may further include the encoding unit that encodes the second three-dimensional shape information generated by this second 3D modeling processing unit. Furthermore, the encoded data of the generated second three-dimensional shape information (second 3D data) may be supplied to another information processing device by communication or may be stored in a storage medium.

By the way, as described above, the second imaging can be performed by manual imaging. In this case, the second captured image obtained by this manual imaging can be used for the second 3D modeling processing. According to the scoring processing 102, as described above, accuracy of the second three-dimensional shape information that can be generated using the second captured images obtained so far is evaluated. In this case, this second captured image may include the second captured image obtained by the manual imaging. That is, posture information of the manual imaging may be reflected in the scoring processing 102. For example, the scoring processing unit of the first information processing device may generate a scoring result based on a position and a posture of the second information processing device associated with a timing of the second imaging indicated by imaging timing information indicating the timing of the second imaging that is not based on the imaging control information. For example, the imaging control unit may find the posture information of the second imaging unit at this imaging timing based on this imaging timing information, and the scoring processing unit may calculate a score based on this posture information. By so doing, the posture information of the manual imaging is reflected in the scoring result.

Note that, in this case, the second imaging (manual imaging) may be performed by the first information processing device, or may be performed by the second information processing device. In a case where the first information processing device includes the second imaging unit, for example, this second imaging unit may generate the imaging timing information indicating a timing of the manual imaging when performing the manual imaging, and supply the imaging timing information to the imaging control unit. Furthermore, in a case where the first information processing device includes the communication unit, for example, this communication unit may acquire the imaging timing information supplied from the second information processing device, and supply the imaging timing information to the imaging control unit.

By so doing, it is possible to control the second imaging based on the imaging timing information such that the second imaging is performed at a more appropriate position and posture.

By the way, as described above, the first information processing device may reflect camera information related to the second imaging unit in the scoring processing 102. For example, the scoring processing unit of the first information processing device may generate a scoring result based on this camera information. In this case, the second imaging may be performed by the first information processing device, or may be performed by the second information processing device. In a case where the first information processing device includes the second imaging unit, for example, this second imaging unit may generate the camera information and supply the camera information to the scoring processing unit. Furthermore, in a case where the first information processing device includes the communication unit, for example, this communication unit may acquire the camera information supplied from the second information processing device, and supply the camera information to the scoring processing unit.

By so doing, it is possible to control the second imaging based on the camera information such that the second imaging is performed at a more appropriate position and posture.

By the way, the second information processing device may further perform the second imaging of the above-described second 3D data generation processing 104. In a case where, for example, the second information processing device may include the second imaging unit and a communication unit that communicates with the first information processing device, the communication unit may acquire the imaging control information supplied from the first information processing device, and the second imaging unit images a 3D object based on this imaging control information and generate the second captured image. This imaging control information is information that is generated based on the scoring result derived based on the first 3D data and controls the second imaging.

Furthermore, an information processing method executed by the second information processing device may include acquiring imaging control information supplied from the first information processing device, performing the second imaging based on this imaging control information, and generating the second captured image for generating the second 3D data.

By so doing, it is possible to image (perform second imaging on) the 3D object at a more appropriate position and posture, and execute the second 3D modeling processing using the obtained second captured image. Consequently, it is possible to generate higher-definition 3D data while suppressing an increase in a load (a workload and a processing load) of 3D modeling. That is, it is possible to more easily perform 3D modeling.

The generated second captured image may be supplied to the first information processing device. For example, the communication unit may supply the second captured image generated by the second imaging unit to the first information processing device. This second captured image is a captured image for generating three-dimensional shape information for expressing a three-dimensional shape of a 3D object. Furthermore, the second captured image may be encoded. For example, the second information processing device may include an encoding unit that encodes the second captured image generated by the second imaging unit. Furthermore, the communication unit may supply encoded data of the second captured image generated by this encoding unit to the first information processing device. Note that the second captured image (or the encoded data of the second captured image) may be supplied to an information processing device other than the first information processing device. For example, the communication unit may supply the second captured image (or the encoded data of the second captured image) to another information processing device. Furthermore, this second captured image (or the encoded data of the second captured image) may be stored in a storage medium. For example, the second information processing device may include a storage unit that stores the encoded data of the second captured image generated by the encoding unit.

Furthermore, the second information processing device may further perform the above-described second 3D modeling processing. That is, the second information processing device may perform the second 3D modeling processing using the second captured image generated by the second imaging, and generate second 3D data. For example, the second information processing device may further include a second 3D modeling processing unit that generates the second three-dimensional shape information (second 3D data) for expressing a three-dimensional shape of a 3D object based on the second captured image generated by the second imaging unit. For example, this second 3D modeling processing unit may include a corresponding point position deriving unit that derives three-dimensional positions of corresponding points between a plurality of second captured images, and a three-dimensional point addition unit that adds three-dimensional points based on the three-dimensional positions of these corresponding points. According to the second 3D modeling processing, meshing and texturing may be further performed as post-processing. For example, the second three-dimensional shape information may further include a mesh indicating the three-dimensional shape of a 3D object formed by connecting vertices, and a texture to be applied to the surface of this mesh.

Note that the second 3D data generated by this second 3D modeling processing may be supplied to another information processing device by communication or may be stored in a storage medium. Furthermore, this second 3D data may be encoded. For example, the second information processing device including the second 3D modeling processing unit may further include the encoding unit that encodes the second three-dimensional shape information generated by this second 3D modeling processing unit. Furthermore, the encoded data of the generated second three-dimensional shape information (second 3D data) may be supplied to another information processing device by communication or may be stored in a storage medium.

By the way, as described above, the second imaging can be performed by manual imaging. In this case, the second captured image obtained by this manual imaging can be used for the second 3D modeling processing. According to the scoring processing 102, as described above, accuracy of the second three-dimensional shape information that can be generated using the second captured images obtained so far is evaluated. In this case, this second captured image may include the second captured image obtained by the manual imaging. That is, posture information of the manual imaging may be reflected in the scoring processing 102.

In this case, the second information processing device may generate imaging timing information indicating a timing of the manual imaging, and supply the imaging timing information to the first information processing device. When, for example, performing the manual imaging, the second imaging unit of the second information processing device generates the imaging timing information indicating the timing of the manual imaging, and the communication unit may supply this imaging timing information to the first information processing device.

By so doing, it is possible to image a 3D object at a more appropriate position and posture based on the imaging timing information (it is possible to perform the second imaging).

By the way, as described above, the camera information related to the second imaging unit may be reflected in the scoring processing 102. For example, the second imaging unit of the second information processing device may generate the camera information, and the communication unit may supply this camera information to the first information processing device. Furthermore, in this case, the communication unit may acquire the imaging control information generated based on this camera information, and the second imaging unit may perform the second imaging based on this imaging control information. For example, the information processing method executed by the second information processing device may include generating the camera information related to the second imaging unit, and supplying this camera information to the first information processing device. Furthermore, the imaging control information generated based on this camera information may be acquired, and the second imaging may be performed based on this imaging control information.

By so doing, it is possible to image a 3D object at a more appropriate position and posture based on the camera information (it is possible to perform the second imaging).

<3. Imaging Guide Output>

<Imaging Guide Output Processing for Second 3D Modeling>

Furthermore, instead of controlling imaging for second 3D modeling, guide information for assisting imaging for the second 3D modeling may be output. In, for example, Fig. 4, the first 3D data generation processing 101 and the scoring processing 102 may be executed, and imaging guide output processing for second 3D modeling 105 may be further executed. In this case, too, the first 3D data generation processing 101 and the scoring processing 102 are executed similarly to the case described above in <2. Imaging Control>. In this regard, according to the scoring processing 102, a scoring result is supplied for the imaging guide output processing for second 3D modeling 105.

According to the imaging guide output processing for second 3D modeling 105, the guide information for the second imaging is generated based on the scoring result obtained by the scoring processing 102, output of this guide information is controlled, and the guide information is output from an output device.

A user or the like manually performs second imaging referring to such guide information. That is, in this case, the second imaging is manual imaging (imaging that is not based on imaging control information). By performing the second imaging in this way, it is possible to generate the second captured image captured at a more appropriate position and posture. Furthermore, the second 3D data generation processing 104 (the second imaging and the second 3D modeling processing) is executed using this second captured image, and second 3D data of interest is generated. In other words, it is possible to execute the second 3D modeling processing using the second captured image captured at a more appropriate position and posture. Consequently, it is possible to suppress an increase in a load (a workload and a processing load) of 3D modeling, and generate higher-definition 3D data. That is, it is possible to more easily perform 3D modeling.

<Generation of Guide Information>

To generate this guide information, a position and a posture at which second imaging needs to be performed (a more appropriate position and posture as the position and the posture at which the second imaging needs to be performed) are found based on the scoring result by the imaging guide output processing for second 3D modeling 105. A method for finding the position and the posture at which this second imaging needs to be performed may be any method. For example, the method may be a method similar to a case of the above-described imaging control processing for second 3D modeling 103. For example, (a range of) a position and a posture at which a score of a portion (gray portion) for which the second imaging is insufficient can be improved may be specified based on the scoring result.

Furthermore, according to the imaging guide output processing for second 3D modeling 105, whether or not a current position and posture are the position and the posture at which the second imaging needs to be performed may be determined based on fluctuation of the scoring result of current posture information (the position and the posture) of the second imaging unit. In a case where (the posture information of) the second captured image obtained when the second imaging unit performs the second imaging at the current position and posture is reflected in scoring, and, as a result, this score becomes a predetermined threshold or more higher than a score obtained before this second captured image is added, it may be determined that the current position and posture are a position and a posture at which the second imaging needs to be performed. That is, in this case, according to the scoring processing 102, scoring results in cases where the second imaging performed by the second imaging unit at the current position and posture is included in the "second imaging performed so far" are derived, and compared with each other. Accordingly, in this case, according to the scoring processing 102, scoring is performed based on current posture information (imaging point-of-view information) of the second imaging unit.

This imaging point-of-view information may be supplied by the imaging guide output processing for second 3D modeling 105. As described above, in this case, the imaging guide output processing for second 3D modeling 105 is executed, and the second imaging is manually performed. Hence, similarly to the case described above in <2. Imaging Control>, imaging timing information indicating this imaging timing is generated by (the second imaging of) the second 3D data generation processing 104, and is supplied for the imaging guide output processing for second 3D modeling 105. Furthermore, according to the imaging guide output processing for second 3D modeling 105, posture information of the second imaging unit at this imaging timing is obtained based on this imaging timing information, and the posture information of the second imaging unit at this imaging timing is supplied as the imaging point-of-view information for the scoring processing 102.

Furthermore, when a relationship between the positions and the postures is known between the first imaging unit and the second imaging unit, the posture information of the first imaging unit may be supplied for the scoring processing 102 as the imaging point-of-view information instead of the posture information of the second imaging unit.

Furthermore, according to the imaging guide output processing for second 3D modeling 105, whether or not a position and a posture are a position and a posture at which second imaging needs to be performed may be determined based on an overlap ratio with respect to the imaging ranges of the second imaging performed so far.

Note that, as described above with reference to Fig. 6, what value the overlap ratio that makes it easy to perform the second 3D modeling processing makes it possible to perform (more accurate 3D modeling processing) takes also depends on a three-dimensional shape of a 3D object or the like. Accordingly, when an overlap ratio of the second captured images obtained so far is taken into account to find a position and a posture at which second imaging needs to be performed, it is also desirable to take into account the three-dimensional shape of the 3D object (first 3D data) or the like (it is possible to more accurately find the position and the posture at which the second imaging needs to be performed).

Furthermore, as described above with reference to Fig. 7, when the position and the posture at which the second imaging needs to be performed are found, a distance from an imaging position of the second imaging to a subject (3D object) may be controlled. At this time, this distance may be controlled according to (complexity of) a three-dimensional shape of the 3D object. By so doing, it is possible to suppress an unnecessary increase in the number of times of imaging of second imaging while suppressing a decrease in accuracy of the second 3D modeling processing (the accuracy of the second 3D data). That is, it is possible to control the second imaging such that the second imaging is performed at a more appropriate position and posture.

Furthermore, according to the imaging guide output processing for second 3D modeling 105, guide information is generated based on the position and the posture that have been found as described above and at which the second imaging needs to be performed. This guide information may be any type of information, and may include, for example, image information or may include audio information.

Furthermore, this guide information may be output such that, for example, contents of the guide information is presented to the user or the like who performs the second imaging. The output device may be any device, and may include, for example, a monitor that displays image information or may include a speaker that outputs audio information.

<Guide Information>

Next, the contents of the guide information will be described. The contents of this guide information may be any contents. For example, information indicating to the user a more appropriate position and posture for the second imaging may be included in this guide information.

For example, it is assumed that the first 3D data 120 illustrated in Fig. 5 is generated by the first 3D data generation processing 101 in Fig. 4. Furthermore, it is assumed that second imaging has been performed so far on a 3D object corresponding to this first 3D data 120 at positions and postures of the camera 121-1 to the camera 121-3. In this case, an upper side of the first 3D data 120 in Fig. 5 is evaluated as a relatively high score, and a lower side (gray portion) of the first 3D data 120 in Fig. 5 is evaluated as a relatively low score by the scoring processing 102. It is clear from the scoring result that imaging a lower side (e.g., gray portion) of a 3D object corresponding to the first 3D data 120 in Fig. 5 is insufficient.

Hence, according to the imaging guide output processing for second 3D modeling 105, the guide information for guiding the second imaging such that the captured image of the gray portion for which imaging is insufficient can be obtained is generated and output. That is, this guide information guides the second imaging so as to image the 3D object from the lower side in Fig. 5. For example, it is determined that the position and the posture of the camera 121-4 are more appropriate as a position and a posture for performing the second imaging, and this determination is notified to the user or the like.

By so doing, the user can image a 3D object at a more appropriate position and posture by performing the second imaging according to this guide information. That is, it is possible to execute 3D modeling (second 3D data generation processing 104) using this captured image. Consequently, it is possible to generate higher-definition 3D data while suppressing an increase in load of 3D modeling. That is, it is possible to more easily perform 3D modeling.

<Display of Scoring Result>

Note that guide information may include information indicating a scoring result. That is, according to the imaging guide output processing for second 3D modeling 105, the guide information including the information indicating the scoring result may be generated, and an image showing this scoring result may be displayed as the guide information on the monitor. Furthermore, the information indicating the scoring result of an inside of a current angle of view of the second imaging unit may be included in the guide information. That is, according to the imaging guide output processing for second 3D modeling 105, the guide information including the information indicating the scoring result of the inside of the angle of view of this second imaging unit may be generated based on the current position and posture of this second imaging unit, and an image showing this scoring result may be displayed as the guide information on the monitor.

As illustrated in, for example, Fig. 14, the second imaging unit is at a position of a camera 211, and takes a posture for imaging an inside of a dotted line frame 212 of scored first 3D data 210. In this case, according to the imaging guide output processing for second 3D modeling 105, an image showing a scoring result of the inside of the current angle of view (imaging range) of the second imaging unit, that is, an image showing a portion inside the dotted line frame 212 of the first 3D data 210 may be displayed as the guide information as shown in an image 213 on the monitor. By so doing, it is possible to display the scoring result in a state matching the current position and posture of the second imaging unit. Consequently, the user can more easily grasp an appropriate position and posture for second imaging.

Furthermore, this guide information (the image showing the scoring result of the inside of the current angle of view of the second imaging unit) may be superimposed on a captured image generated by the second imaging unit, and displayed. The image 213 illustrated in, for example, Fig. 14 (the image showing the scoring result of the inside of the current angle of view of the second imaging unit) may be superimposed on the captured image generated at the current angle of view by the second imaging unit, and displayed. By so doing, it is possible to superimpose a captured image and the guide information (the image showing the scoring result) whose angles of view are identical to each other to display on the monitor. The user can more easily associate a 3D object in a real space and the scoring result based on such display. Consequently, the user can more easily grasp an appropriate position and posture for second imaging. Furthermore, a bird's-eye image showing the scoring result of the entire 3D object may be displayed. By displaying such a bird's-eye image, the user can more easily grasp which portion of the entire 3D object a currently displayed portion of the 3D object included in a captured image is.

<Display of Overlap Region>

Furthermore, information indicating an overlap region in which imaging ranges of second captured images overlap between the plurality of second captured images may be included in the guide information. For example, according to the imaging guide output processing for second 3D modeling 105, the guide information including the information indicating the overlap region in which the imaging ranges of the second captured images overlap between the plurality of second captured images may be generated, and an image showing this overlap region may be displayed as the guide information. It is assumed that, when the second imaging unit is at a position and a posture of a camera 221-1 on, for example, the left side in Fig. 15, an imaging range of the second imaging unit is an imaging range 222-1. Furthermore, it is assumed that, when the second imaging unit is at a position and a posture of a camera 221-2, an imaging range of the second imaging unit is an imaging range 222-2. In this case, the imaging range 222-1 and the imaging range 222-2 are partially superimposed (overlap) on each other. As described above, there is the region in which the imaging ranges of the second captured images overlap between the plurality of second captured images, so that it is possible to detect corresponding points between both images. That is, there is an appropriate overlap region between the plurality of second captured images, so that it is possible to generate high-definition second 3D data (suppress a decrease in accuracy of the second 3D data) by the second 3D modeling processing.

Hence, it is desirable to generate the second captured image (perform the second imaging) such that there is an appropriate overlap region between the plurality of second captured images. As described above, an image showing such an overlap region is displayed as the guide information on the monitor, so that the user or the like who operates the second imaging unit can determine the position and posture of the second imaging based on this guide information while taking the overlap region into account. That is, the user or the like can more easily perform second imaging at such a position and a posture that there is an appropriate overlap region between the plurality of second captured images. That is, the user or the like can more easily perform the second imaging at an appropriate position and posture.

Note that the image showing this overlap region may show the overlap region in any way. For example, the overlap region may be shown using a color, a density, a pattern, a pictorial pattern, letters, a symbol, a figure, or the like. For example, the overlap region may be highlighted compared to other regions (expressed subjectively distinctively compared to the other regions).

Furthermore, this overlap region may be an overlap region of a current angle of view of the second imaging unit and the imaging ranges of the second captured images obtained so far. That is, an image showing an overlap region of the second captured images obtained so far and the second captured image to be generated from now on may be displayed as the guide information. For example, according to the imaging guide output processing for second 3D modeling 105, the guide information including the information indicating the overlap region of the angle of view of this second imaging unit and the imaging ranges of the second captured images obtained so far is generated based on the current position and posture of this second imaging unit, and an image showing this overlap region may be displayed as the guide information on the monitor. In, for example, Fig. 15, the second imaging unit is at a position of the camera 221-2, and takes a posture for imaging the imaging range 222-2. In this case, an image 223 showing an overlap region 224 in this imaging range 222-2 may be generated and displayed as the guide information.

By so doing, it is possible to display the overlap region in a state matching the current position and posture of the second imaging unit. Consequently, the user or the like who operates the second imaging unit can more easily grasp how the imaging ranges of the second captured images obtained so far overlap the imaging range of the second captured image obtained by performing the second imaging at the current position and posture based on this guide information. That is, the user or the like can more easily perform the second imaging appropriately overlapping the imaging ranges of the second captured images obtained so far. That is, the user or the like can more easily perform the second imaging at an appropriate position and posture.

Furthermore, this guide information (an image showing the overlap region in which imaging ranges of the second captured images overlap between the second captured images, or an overlap region of the current angle of view of the second imaging unit and the imaging ranges of the second captured images obtained so far) may be superimposed on a captured image generated by the second imaging unit, and displayed. For example, the image 223 illustrated in Fig. 15 (the image showing the overlap region of the current angle of view of the second imaging unit and the imaging ranges of the second captured images obtained so far) may be superimposed on the captured image generated at the current angle of view by the second imaging unit, and displayed.

By so doing, it is possible to superimpose a captured image and the guide information (the image showing the overlap region of the current angle of view of the second imaging unit and the imaging ranges of the second captured images obtained so far) whose angles of view are identical to each other to display on the monitor. The user can more easily associate a 3D object in the real space and the overlap region based on such display. Consequently, the user can more easily grasp an appropriate position and posture for second imaging.

Note that an image showing the overlap ratio indicating a rate of the overlap region that occupies in this angle of view may be further displayed. This overlap ratio may be expressed as, for example, a numerical value, or may be expressed as, for example, a color, a density, a pattern, or the like. The user can more intuitively grasp to what degree images overlap based on such display.

<Display of Imaging Assistance Image>

Furthermore, an imaging assistance image for assisting second imaging may be included in the guide information. For example, according to the imaging guide output processing for second 3D modeling 105, the guide information including the imaging assistance image for assisting the second imaging may be generated, and this imaging assistance image may be displayed as the guide information. The contents of this imaging assistance image may be any contents.

For example, a recommended imaging position/posture guide indicating a recommended imaging position and posture that are a recommended position and posture of the second imaging may be included in the imaging assistance image. For example, according to the imaging guide output processing for second 3D modeling 105, the recommended imaging position and posture that are the recommended imaging position and posture of the second imaging are derived based on a scoring result, and the recommended imaging position/posture guide indicating these recommended imaging position and posture may be displayed as the guide information (imaging assistance image).

When, for example, the current position and posture of the second imaging unit are identical to the recommended imaging position and posture, an image showing that the current position and posture and the recommended imaging position and posture are identical may be displayed as the recommended imaging position/posture guide. That is, when, for example, the user or the like moves the second imaging unit, and the current position and posture of the second imaging unit match with the recommended imaging position and posture, this match may be notified to the user or the like. This notification method may be any method. When, for example, the current position and posture of the second imaging unit match with the recommended imaging position and posture, an image such as a white image completely different from images obtained so far may be displayed. Furthermore, instead of such an image, letters, a pictorial pattern, a symbol, or the like may indicate that the current position and posture of the second imaging unit are the recommended imaging position and posture. The user or the like who operates the second imaging unit can easily grasp that the current position and posture of the second imaging unit are the recommended imaging position and posture based on such display (recommended imaging position/posture guide). Consequently, this user or the like can more easily perform the second imaging at an appropriate position and posture.

Furthermore, an image showing a relative position and a relative posture of the recommended imaging position and posture for which the second imaging unit serves as a reference may be displayed as the recommended imaging position/posture guide. That is, in which direction the recommended imaging position and posture face seen from the current position and posture of the second imaging unit, to what degree the recommended imaging position and posture are apart from the current position and posture of the second imaging unit, and the like may be indicated by, for example, letters, a pictorial pattern, a symbol, or the like. The user or the like who operates the second imaging unit can more easily move the second imaging unit close to these recommended imaging position and posture based on such display even when the current position and posture of the second imaging unit are not the recommended imaging position and posture. Consequently, this user or the like can more easily perform the second imaging at an appropriate position and posture.

Note that this recommended imaging position/posture guide may be superimposed on a captured image generated by the second imaging unit and displayed. The user can more easily associate a 3D object in the real space and the recommended imaging position/posture guide based on such display. Consequently, the user can more easily grasp an appropriate position and posture for second imaging.

<Imaging Guide Based on Complexity of Subject>

As described above with reference to Fig. 7, an appropriate distance of a position of second imaging from a 3D object depends on a three-dimensional shape of this 3D object. Hence, the recommended imaging position and posture of the second imaging derived by the imaging guide output processing for second 3D modeling 105 may include the distance from the 3D object (subject). Furthermore, when the recommended imaging position and posture of the second imaging are derived by the imaging guide output processing for second 3D modeling 105, this distance from the 3D object may be derived according to complexity of the three-dimensional shape of the 3D object.

Note that a method for deriving this complexity of the three-dimensional shape of the 3D object may be any method, and may be, for example, the method described above in <2. Imaging Control>. Furthermore, a method for deriving a distance (recommended imaging position and posture) from the 3D object based on the complexity of the three-dimensional shape of the 3D object may be any method. For example, a position closer to the 3D object may be set as the recommended imaging position and posture as the three-dimensional shape of this 3D object is more complex. Furthermore, a position farther from the 3D object may be set as the recommended imaging position and posture as the three-dimensional shape of this 3D object is more simple.

Furthermore, a detection frame may be also displayed in the guide information to be displayed on the monitor as illustrated in Fig. 16. In Fig. 16, a display image 230 is the guide information displayed on the monitor by the imaging guide output processing for second 3D modeling 105. This display image 230 displays scored first 3D data 231 and a detection frame 232. By displaying the detection frame 232 as described above, it is possible to enable the user to more easily perform for a portion of interest of the subject an operation of bringing the second imaging unit close to the 3D object (subject) or moving the second imaging unit away from the 3D object according to the complexity of the three-dimensional shape of the 3D object. Of course, the detection frame may not be displayed.

For example, a captured image generated by the second imaging unit may be displayed on the monitor and further superimposed on this captured image, the detection frame and the first 3D data corresponding to the 3D object (subject) may be displayed as the guide information, and a portion of this first 3D data (3D object) that needs to be imaged may be indicated. Furthermore, by moving the second imaging unit to adjust to the detection frame the portion of the first 3D data that needs to be imaged in this display, the user may move the second imaging unit to an appropriate position and posture for performing the second imaging.

As in, for example, Figs. 17 to 19, a display image 240 may be displayed on the monitor, and a detection frame 241 and a portion 242 that needs to be imaged in the 3D object derived based on the first 3D data may be displayed in this display image 240. Furthermore, by moving the second imaging unit to bring the portion 242 that needs to be imaged in this display image 240 closer to (ideally match with) the detection frame 241, the user may move the second imaging unit to an appropriate position and posture for performing the second imaging.

In a case of, for example, the left side in Fig. 17, the portion 242 that needs to be imaged is displayed smaller than the detection frame 241. In this case, for example, the user brings the second imaging unit close to the 3D object such that this portion 242 that needs to be imaged is displayed larger to make the display of this portion 242 that needs to be imaged match with (approximate to) the detection frame 241 as illustrated on the right side in Fig. 17. By moving the second imaging unit in this way, the second imaging unit takes a more appropriate position and posture for performing the second imaging.

Furthermore, in a case of an example on the left side in Fig. 18, an imaging direction and a normal direction of the portion 242 that needs to be imaged are misaligned (the portion 242 that needs to be imaged and the detection frame 241 (imaging plane) do not directly face each other). In this case, for example, the user changes the orientation of the second imaging unit (i.e., imaging direction) to make this portion 242 that needs to be imaged directly face (directly face more) the detection frame 241 as illustrated on the right side in Fig. 18. By moving the second imaging unit in this way, the second imaging unit takes a more appropriate position and posture for performing the second imaging.

Furthermore, in a case of an example on the left side in Fig. 19, the height of the portion 242 that needs to be imaged is different from that of the detection frame 241. In this case, for example, the user changes a distance between the second imaging unit and the 3D object to make the height of this portion 242 that needs to be imaged match with (approximate to) the height of the detection frame 241 as illustrated on the right side in Fig. 19. By moving the second imaging unit in this way, the second imaging unit takes a more appropriate position and posture for performing the second imaging.

Furthermore, as in an example in Fig. 20, an arrow indicating a movement direction recommended by the second imaging unit (a movement direction to move close to the recommended imaging position and posture) may be displayed as guide display. In a case on, for example, the left side in Fig. 20, a display image 250 for displaying the guide display is displayed on the monitor, and an arrow 251 is displayed as the guide display in this display image 250. The arrow 251 is an arrow that is directed toward the depth side (front) in Fig. 20, and guides the second imaging unit to move forward (move close to the 3D object (subject)). Furthermore, in a case of an example on the right side in Fig. 20, the arrow 252 is displayed as the guide display in the display image 250 to be displayed on the monitor. The arrow 252 is an arrow that is directed toward the front side (rear) in Fig. 20, and guides the second imaging unit to move rearward (move away from the 3D object (subject)). By moving the second imaging unit according to these arrows, the user can bring the second imaging unit close to the recommended imaging position and posture.

Furthermore, as in an example in Fig. 21, an indicator indicating a positional relationship in a depth direction between a current position of the second imaging unit and a recommended imaging position and posture may be displayed. In a case on, for example, the left side in Fig. 21, a display image 260 for displaying the guide display is displayed on the monitor, and an indicator 261 is displayed as the guide display in this display image 260. The indicator 261 indicates the positional relationship in the depth direction between the current position of the second imaging unit and the recommended imaging position and posture. In a case of an example on the left side in Fig. 21, the indicator 261 indicates that the position of the recommended imaging position and posture is shifted from (in front of) the current position of the second imaging unit, and guides the second imaging unit to move forward (move close to the 3D object (subject)). Furthermore, in a case of an example on the right side in Fig. 21, the indicator 261 indicates that the current position of the second imaging unit and the position of the recommended imaging position and posture substantially match (approximate). That is, in this case, the indicator 261 provides a guide that the second imaging unit may not be moved substantially. By moving the second imaging unit according to this indicator 261, the user can bring the second imaging unit closer to the recommended imaging position and posture.

Note that the indicator 261 may have any design, and is not limited to the example in Fig. 21. For example, the indicator 261 may be designed as illustrated in Fig. 22. In a case of this example, display changes according to the positional relationship in the depth direction between the current position of the second imaging unit and the recommended imaging position and posture as illustrated on the upper side in Fig. 22.

Furthermore, as in an example in Fig. 23, the degree of direct facing (a relationship between orientations) of a portion of the first 3D data (3D object) that needs to be imaged, and a distance of the second imaging unit may be displayed as the guide information. In a case of, for example, Fig. 23, a display image 270 for displaying the guide display is displayed on the monitor, and this display image 270 displays scored first 3D data 271. Furthermore, this display image 270 displays as guide display a line (or an equivalent line) 272 that connects the optical axis of the second imaging unit (the center of a pixel region of the second imaging unit), and the center of a portion of the first 3D data (3D object) 271 that needs to be imaged. Furthermore, this display image 270 displays as guide display an arrow 273 indicating an orientation of the surface of a subject in a center region of the portion of the first 3D data (3D object) 271 that needs to be imaged.

These line 272 and arrow 273 in the display image 270 indicate the positional relationship between the current position of the second imaging unit and the recommended imaging position and posture, and the degree of direct facing (the relationship between the orientations of) the portion of the first 3D data (3D object) that needs to be imaged, and the distance of the second imaging unit.

It is shown that, when, for example, the orientations of the line 272 and the arrow 273 are different from each other as illustrated on the left side at an upper part in Fig. 24, (a normal direction of) a face of the portion of the first 3D data (3D object) that needs to be imaged is shifted from (does not directly face) the imaging plane (the orientation of the second imaging unit) by this difference (angle).

By contrast with this, it is shown that, when the orientations of the line 272 and the arrow 273 match with each other as illustrated at the center at the upper part in Fig. 24, (the normal direction of) the face of the portion of the first 3D data (3D object) that needs to be imaged directly faces the imaging plane (the orientation of the second imaging unit).

Furthermore, it is shown that, when the line 272 and the arrow 273 are apart from each other as illustrated on the right side at the upper part in Fig. 24, a distance between the portion of the first 3D data (3D object) that needs to be imaged and the second imaging unit is longer than a distance appropriate for the second imaging. That is, in this case, a guide for moving the second imaging unit close to the first 3D data (3D object) is provided.

Furthermore, when the line 272 is shorter than the arrow 273 as illustrated on the left side at a lower part in Fig. 24, a distance between the portion of the first 3D data (3D object) that needs to be imaged and the second imaging unit is shorter than a distance appropriate for the second imaging. That is, in this case, a guide for moving the second imaging unit away from the first 3D data (3D object) is provided.

Furthermore, it is shown that, when a circle 274 is displayed at a connection part of the line 272 and the arrow 273 as illustrated at the center at the lower part in Fig. 24, a distance between the portion of the first 3D data (3D object) that needs to be imaged and the second imaging unit approximates to a distance appropriate for the second imaging. That is, in this case, a guide for not moving the second imaging unit in the depth direction is provided.

Furthermore, it is shown that, when the circle 274 is displayed at the connection part of the line 272 and the arrow 273 and the orientations of the line 272 and the arrow 273 match with each other as illustrated on the right side at the lower part in Fig. 24, a distance between the portion of the first 3D data (3D object) that needs to be imaged and the second imaging unit approximates to a distance appropriate for the second imaging, and (the normal direction of) the face of the portion of the first 3D data (3D object) that needs to be imaged directly faces the imaging plane (the orientation of the second imaging unit). That is, in this case, a guide indicating that the current position and posture of the second imaging unit and the recommended imaging position and posture match or approximate is provided.

By moving the second imaging unit according to such guide information, the user can more easily bring the second imaging unit closer to the recommended imaging position and posture.

Note that the posture information of the second imaging unit (first imaging unit) is derived by SLAM or the like, so that it is possible to easily derive a distance between the second imaging unit and a subject. Consequently, the above-described display examples can be updated in real time (immediately).

<Real-Time Processing>

Note that the first 3D data generation processing 101 (first imaging and first 3D modeling processing), the scoring processing 102, and the imaging guide output processing for second 3D modeling 105 in Fig. 4 may be executed in parallel to each other. As described above in <2. Imaging Control>, 3D data of a portion of a 3D object on which first imaging is performed can be sequentially generated by the first 3D modeling processing. Furthermore, it is possible to execute the first 3D data generation processing 101 and the scoring processing 102 in parallel.

Furthermore, according to the imaging guide output processing for second 3D modeling 105, every time a scoring result is obtained by the scoring processing 102 (before the scoring result of the entire 3D object is obtained), guide information for second imaging may be generated based on the obtained scoring result (the scoring result of the first 3D data corresponding to part of the 3D object) and output. By so doing, before the scoring processing 102 is ended (before a scoring result of an entire 3D object is obtained), it is possible to start the imaging guide output processing for second 3D modeling 105. That is, it is possible to execute the scoring processing 102 and the imaging guide output processing for second 3D modeling 105 in parallel.

By combining the above methods, it is possible to execute the first 3D data generation processing 101, the scoring processing 102, and the imaging guide output processing for second 3D modeling 105 in parallel to each other.

As illustrated in, for example, Fig. 25, a display image 280 is displayed on the monitor, and this display image 280 displays a captured image of the second imaging unit. This captured image shows a 3D object 281 as a subject. As described above, by executing the first 3D data generation processing 101, the scoring processing 102, and the imaging guide output processing for second 3D modeling 105 in parallel to each other, it is possible to display guide information in the display image 280 before scoring the first 3D data of the entire 3D object 281 is ended. In the display image 280 in Fig. 25, a display 282 of a diagonal line pattern indicates a portion from which the first 3D data of the 3D object 281 has already been generated. Furthermore, a gray-based display 283 indicates a portion at which the second captured images are in short as a result of scoring. By executing the first 3D data generation processing 101, the scoring processing 102, and the imaging guide output processing for second 3D modeling 105 in parallel to each other, it is possible to display the imaging guide while performing first imaging. Consequently, the user can perform second imaging in parallel to the first imaging (immediately).

<Camera Information>

Note that, similar to the case described above in <2. Imaging Control>, even when this imaging guide output processing for second 3D modeling 105 is executed, too, according to (the second imaging of) the second 3D data generation processing 104, camera information related to the second imaging unit may be generated, and supplied for the scoring processing 102. Furthermore, scoring is performed based on this camera information, and a scoring result may be generated by the scoring processing 102. This camera information may include any information similarly to the case described above in <2. Imaging Control>.

<Example of Configuration of Executing Processing>

Each of the above-described processing in Fig. 4 may be executed by any device. For example, the information processing device may execute the above-described first 3D modeling processing of the first 3D data generation processing 101, scoring processing 102, and imaging guide output processing for second 3D modeling 105.

That is, the information processing device may include a first 3D modeling processing unit that generates first three-dimensional shape information for expressing a three-dimensional shape of a 3D object based on a first captured image generated by first imaging of imaging the 3D object, a scoring processing unit that evaluates accuracy of second three-dimensional shape information that can be generated using a second captured image generated by second imaging performed so far using the first three-dimensional shape information, and generates a scoring result, and a guide information output control unit that generates guide information for second imaging of imaging the 3D object based on the scoring result, and controls output of the guide information. In this section, this information processing device will be also referred to as a first information processing device.

Furthermore, the information processing method executed by the first information processing device may include generating first three-dimensional shape information for expressing a three-dimensional shape of a 3D object based on a first captured image generated by first imaging of imaging the 3D object, evaluating accuracy of second three-dimensional shape information that can be generated using a second captured image generated by second imaging performed so far using the first three-dimensional shape information, and generating a scoring result, and generating guide information for the second imaging of imaging the 3D object based on the scoring result, and controlling output of the guide information.

By so doing, the user can image a 3D object at a more appropriate position and posture by performing the second imaging according to this guide information. That is, it is possible to execute 3D modeling (second 3D modeling processing) using this captured image. Consequently, it is possible to generate higher-definition 3D data while suppressing an increase in load of 3D modeling. That is, it is possible to more easily perform 3D modeling.

Note that this guide information output control unit generates an image showing a scoring result as guide information, and displays this image. Furthermore, this guide information output control unit generates an image showing a scoring result of an inside of the angle of view of the second imaging unit based on a position and a posture of the second imaging unit, and displays this image. Furthermore, this guide information output control unit may superimpose a captured image generated by the second imaging unit on the image showing the scoring result of the inside of the angle of view of the second imaging unit to display. Furthermore, this guide information output control unit may further cause a bird's-eye image showing the scoring result of the entire 3D object to be displayed.

Furthermore, this guide information output control unit may generate as guide information an image showing an overlap region in which imaging ranges overlap between a plurality of second captured images to display this image. Furthermore, this guide information output control unit may generate an image showing an overlap region in which the current angle of view of the second imaging unit and the imaging ranges of the second captured images obtained so far, based on the position and the posture of the second imaging unit to display this image. Furthermore, this guide information output control unit may superimpose on this image a captured image generated by the second imaging unit to display. Furthermore, this guide information output control unit may cause an image showing the overlap ratio indicating a rate of the overlap region that occupies in the current angle of view of the second imaging unit to be displayed.

Furthermore, this guide information output control unit may generate as guide information an imaging assistance image for assisting second imaging, and display this imaging assistance image. Furthermore, this guide information output control unit may derive a recommended imaging position and posture that are a recommended position and posture of the second imaging based on a scoring result, and display the recommended imaging position/posture guide indicating these recommended imaging position and posture as the guide information. Furthermore, when the position and the posture of the second imaging unit are identical to the recommended imaging position and posture as this recommended imaging position/posture guide, this guide information output control unit may cause an image showing that the current position and posture of the second imaging unit are the recommended imaging position and posture to be displayed. Furthermore, this guide information output control unit may display as this recommended imaging position/posture guide an image showing a relative position and a relative posture of the recommended imaging position and posture for which the second imaging unit serves as a reference. Furthermore, this guide information output control unit may superimpose on the recommended imaging position/posture guide a captured image generated by the imaging unit that performs second imaging to display.

By the way, in the above-described first information processing device, the first three-dimensional shape information may have a smaller information amount than that of the second three-dimensional shape information and has low definition. Furthermore, this first 3D modeling processing unit of this first information processing device may include a posture information generation unit that generates posture information indicating a position and a posture of the first imaging unit based on a first captured image, and an acceleration and an angular velocity of the first imaging unit, and a three-dimensional shape generation unit that generates the first three-dimensional shape information based on this posture information and a depth of the 3D object. Note that the first three-dimensional shape information in this case may include a mesh indicating the three-dimensional shape of the 3D object formed by connecting vertices, and a texture to be applied to the surface of this mesh.

Furthermore, in the above-described first information processing device, the scoring processing unit may generate a scoring result per local portion of the first three-dimensional shape information based on the first three-dimensional shape information and the position and the posture of second imaging performed so far. For example, the first three-dimensional shape information may include a mesh indicating the three-dimensional shape of a 3D object formed by connecting vertices, and a texture to be applied to the surface of this mesh, and the scoring processing unit may generate a scoring result per polygon of the mesh.

Furthermore, the first information processing device may further perform the second imaging of the above-described second 3D data generation processing 104. The configuration of the first information processing device in this case is similar to the case described above in <2. Imaging Control>. Furthermore, the first information processing device may further perform the second 3D modeling processing of the above-described second 3D data generation processing 104. The configuration of the first information processing device in this case is also similar to the case described above in <2. Imaging Control>.

Note that, as described above, the second imaging is performed by manual imaging. Hence, the scoring processing unit of the first information processing device may generate a scoring result based on a position and a posture of the second information processing device associated with a timing of the second imaging indicated by imaging timing information indicating the timing of the second imaging. For example, the guide information output control unit may find the posture information of the second imaging unit at this imaging timing based on this imaging timing information, and the scoring processing unit may calculate a score based on this posture information. By so doing, the posture information of the manual imaging is reflected in the scoring result. The configuration of the first information processing device in this case is also similar to the case described above in <2. Imaging Control>. In this regard, the imaging timing information generated by the second imaging unit or the imaging timing information acquired by the communication unit is supplied to the guide information output control unit. By so doing, it is possible to control the second imaging based on the imaging timing information such that the second imaging is performed at a more appropriate position and posture.

Furthermore, as described above, the first information processing device may reflect camera information related to the second imaging unit in the scoring processing 102. For example, the scoring processing unit of the first information processing device may generate a scoring result based on this camera information. The configuration of the first information processing device in this case is also similar to the case described above in <2. Imaging Control>. By so doing, it is possible to control the second imaging based on the camera information such that the second imaging is performed at a more appropriate position and posture.

By the way, when the first information processing device executes the imaging guide output processing for second 3D modeling 105, the second information processing device may perform second imaging of the above-described second 3D data generation processing 104. The configuration of the second information processing device in this case is also similar to the case described above in <2. Imaging Control>. Furthermore, the second information processing device may further perform the above-described second 3D modeling processing. The configuration of the second information processing device in this case is also similar to the case described above in <2. Imaging Control>.

Furthermore, the second information processing device may generate imaging timing information indicating a timing of the manual imaging, and supply the imaging timing information to the first information processing device. The configuration of the second information processing device in this case is also similar to the case described above in <2. Imaging Control>.

Furthermore, the camera information related to the second imaging unit may be reflected in the scoring processing 102. The configuration of the second information processing device in this case is also similar to the case described above in <2. Imaging Control>.

<4. Combination>

<Combination of Imaging Control and Guide Information Output>

Note that, in Fig. 4, both of the imaging control processing for second 3D modeling 103 and the imaging guide output processing for second 3D modeling 105 may be executed. By performing both of imaging control and output of the guide information, the user can more easily perform the second imaging at an appropriate position and posture.

For example, the first information processing device described above in <2. Imaging Control> may further include a guide information output control unit that generates guide information for second imaging of imaging a 3D object based on a scoring result. In this case, the guide information output control unit performs processing similar to the case described above in <3.

Imaging Guide Output>.

Furthermore, the first information processing device described above in <3. Imaging Guide Control> may further include an imaging control unit that controls second imaging of imaging a 3D object based on a scoring result. In this case, the imaging control unit performs processing similar to the case described above in <2. Imaging Control>.

<5. ROI Setting Processing>

<Formation of Unnecessary Point Clouds During 3D Modeling>

By the way, it has been concerned that, when 3D modeling is performed using a captured image, not only a 3D object of a subject is formed, but also unnecessary point clouds are formed therearound. In a case of, for example, the above-described photogrammetry, a point cloud has been formed only from a captured image, and therefore a point cloud has been formed irrespectively of whether or not a 3D object is a target 3D object (irrespectively of whether the 3D object is required or not required). Hence, it has been concerned that multiple point clouds are also formed around the 3D object, and cause noise.

It has been concerned that, when, for example, a point cloud 302 is formed around a 3D model 301 corresponding to a 3D object in a display image as illustrated in Fig. 26, this point cloud 302 becomes noise and reduces subjective image quality of the display image, and visibility of the 3D model 301 lowers. Furthermore, these unnecessary point clouds increase the number of points, and therefore it has been concerned that a data amount (information amount) increases, and a load of processing of handling 3D data such as 3D modeling or generation of a mesh increases. As a result, it has been concerned that cost increases and a processing time increases. Furthermore, it has been also concerned that the unnecessary point clouds make the shape of the 3D model complicated, and formation of a mesh becomes difficult.

Although it is possible to reduce the number of these unnecessary point clouds by, for example, manually setting a Region Of Interest (ROI) (also referred to as a region of interest), complicated work has been required to set the ROI in this case. It has been concerned that, when, for example, the shape of a 3D object changes in a time domain (also referred to as dynamic) or when a captured image used for 3D modeling is occasionally added and a range of the 3D modeling is dynamic, a range of the ROI for this dynamic change may be dynamic, and therefore it is difficult to manually set the ROI.

By the way, in a case of the above-described real-time 3D modeling, a depth (depth value) of a 3D object that is a subject is measured and used, so that it is possible to easily set an ROI based on this depth. That is, in a case of this method, the position (depth) of the 3D object is known, so that, even when the shape or the position of this 3D object is dynamic, it is possible to easily set a range of the depth including this 3D object as the ROI.

As described above, some 3D modeling makes it possible to easily set the ROI. In this regard, as described with reference to Fig. 3, each method has various features in addition to a feature related to the ROI. Hence, selecting a method according to whether or not the method can easily set the ROI may not be appropriate.

By the way, when imaging for generating a captured image used for 3D modeling is performed as described above, it is considered to perform navigation (above-described control or guide) for this imaging using another 3D modeling result (3D data). That is, in such a case, 3D modeling is performed a plurality of times. It is also possible to apply respectively different methods as methods of 3D modeling. For example, it is also possible to navigate imaging for obtaining a captured image used for photogrammetry using a result (3D data) of real-time 3D modeling that can automatically set the ROI.

<Use of ROI During 3D Modeling for Navigation>

Hence, when such navigation is performed, ROI setting processing 106 is executed as illustrated in, for example, Fig. 4, and a ROI of second 3D modeling (second 3D data generation processing 104) is set based on a result (first 3D data) of first 3D modeling (first 3D data generation processing 101).

For example, the information processing device includes a region-of-interest setting unit that estimates a first region of interest (first ROI) of first three-dimensional shape information (first 3D data), and sets a second region of interest (second ROI) of second three-dimensional shape information (second 3D data) based on the estimated first region of interest. Furthermore, the information processing method includes estimating the first region of interest of the first three-dimensional shape information, and setting the second region of interest of the second three-dimensional shape information based on this estimated first region of interest.

Note that it is assumed that the first three-dimensional shape information is generated by the first 3D modeling processing (e.g., real-time 3D modeling) that is based on a first captured image. Furthermore, it is assumed that the first captured image is generated by first imaging of imaging a 3D object by the first imaging unit. Furthermore, it is assumed that the second three-dimensional shape information is generated by the second 3D modeling processing (e.g., photogrammetry) that is based on a second captured image. Furthermore, the second captured image is generated by second imaging of imaging the 3D object by the second imaging unit based on the first three-dimensional shape information.

As illustrated in, for example, Fig. 27, according to the first 3D modeling (first 3D data generation processing 101), an ROI 303 is set so as to include the 3D model 301 corresponding to the 3D object. That is, the ROI 303 is set to the first 3D data. This method for setting the ROI 303 may be any method. For example, this method may be a method that depends on the method of the first 3D modeling. Furthermore, although Fig. 27 illustrates the ROI 303 of a cuboid, the shape of this ROI 303 may be any shape, yet is not limited to the cuboid.

According to the ROI setting processing 106 (Fig. 4), a second ROI (i.e., an ROI for the second 3D data) used for the second 3D modeling (second 3D data generation processing 104) is set based on the ROI 303 (first ROI) for such first 3D data. For example, the region-of-interest setting unit sets the second ROI (ROI 304) to the inside of the first ROI (ROI 303) as illustrated in Fig. 28. That is, the second ROI is set to include the first ROI. This method for setting the ROI 304 may be any method. For example, this method may be a method that depends on the method of the second 3D modeling. Furthermore, the shape of the ROI 304 may be any shape. The shape of the ROI 304 may have an identical shape (similar) to or a different shape from that of the ROI 303. Furthermore, the region-of-interest setting unit may set the ROI 304 as a region identical to the ROI 303.

Note that the first three-dimensional shape information (first 3D data) has a less information amount and lower definition than those of the second three-dimensional shape information (second 3D data).

The region-of-interest setting unit executes the ROI setting processing 106 as described above, so that, as illustrated in, for example, Fig. 29, it is possible to remove the point cloud 302 around the 3D model 301 corresponding to the 3D object. That is, it is possible to suppress a decrease in subjective image quality of a display image, and suppress a decrease in visibility of the 3D model 301. Furthermore, it is possible to suppress an increase in unnecessary point clouds, and consequently it is possible to suppress an increase in a data amount (information amount). Consequently, it is possible to suppress an increase in a load of processing of handling 3D data such as 3D modeling or generation of a mesh. Consequently, it is possible to suppress an increase in cost. Furthermore, it is possible to suppress an increase in a processing time. Furthermore, it is possible to suppress the shape of a 3D model from becoming complicated by suppressing an increase in unnecessary point clouds. Consequently, it is possible to more easily form a mesh.

<Addition of Configuration>

Note that the information processing device including above-described region-of-interest setting unit may further include a second 3D modeling processing unit that performs the second 3D modeling processing and generates second three-dimensional shape information. Furthermore, this second 3D modeling processing unit may include a corresponding point position deriving unit that derives three-dimensional positions of corresponding points between a plurality of second captured images, and a three-dimensional point addition unit that adds three-dimensional points based on the three-dimensional positions of these corresponding points.

Furthermore, this information processing device may further include an extraction unit that extracts the second three-dimensional shape information of an inside of the second region of interest from the second three-dimensional shape information generated by the second 3D modeling processing unit. Furthermore, this information processing device may further include a mesh generation unit that generates a mesh indicating a three-dimensional shape of the 3D object formed by connecting vertices using the second three-dimensional shape information of the inside of the second region of interest extracted by the extraction unit.

Furthermore, this information processing device may further include a display control unit that superimposes a mesh on the first three-dimensional shape information to display. Furthermore, the information processing device may further include a display unit that displays the mesh superimposed on the first three-dimensional shape information to display under control of this display control unit.

Furthermore, this information processing device may further include a communication unit that communicates with another device and acquires the second captured image. Furthermore, the second 3D modeling processing unit may perform the second 3D modeling processing based on the second captured image acquired by the communication unit.

Furthermore, this information processing device may further include a communication unit that communicates with another device and acquires this first three-dimensional shape information. In this regard, the region-of-interest setting unit sets the second region of interest based on the first region of interest of the first three-dimensional shape information acquired by the communication unit.

Furthermore, this information processing device may further include a first 3D modeling processing unit that performs the first 3D modeling processing and generates the first three-dimensional shape information of the inside of the first region of interest. Furthermore, the region-of-interest setting unit may set the second region of interest based on the first region of interest of the first three-dimensional shape information generated by the first 3D modeling processing unit. Note that the first 3D modeling processing unit may include a posture information generation unit that generates posture information indicating a position and a posture of the first imaging unit based on a first captured image, and an acceleration and an angular velocity of the first imaging unit, and a three-dimensional shape generation unit that generates the first three-dimensional shape information based on this posture information and a depth of the 3D object. Furthermore, this information processing device may further include an inertia measurement unit that detects the acceleration and the angular velocity.

Note that the first 3D modeling processing unit may set the first region of interest based on the depth of the 3D object, and generate the first three-dimensional shape information of the inside of this first region of interest. Furthermore, the information processing device may further include a depth detection unit that measures the depth of the 3D object. The information processing device may further include the first imaging unit.

<Superimposed Display>

Note that, as illustrated in, for example, Fig. 30, first 3D data and second 3D data obtained by each modeling processing may be superimposed and displayed. In an example in Fig. 30, the first 3D data (a gray portion in Fig. 30) and the second 3D data (a diagonal line pattern portion in Fig. 30) are superimposed on the 3D model 301 and displayed.

By superimposing the first 3D data and the second 3D data as described above to display, the user can easily grasp which portion of the 3D model 301 is sufficiently imaged, which portion is imaged insufficiently, and the like. In other words, the information processing device can perform more appropriate navigation. Note that, as described above, the range of the first 3D data is limited to the inside of the first ROI, and the range of the second 3D data is limited to the inside of the second ROI. Furthermore, since the second ROI is set based on the first ROI, a positional relationship between the second ROI and the first ROI is known. Consequently, it is possible to superimpose the first 3D data and the second 3D data according to a more accurate positional relationship. That is, the user can more accurately grasp a superimposition result.

<6. First Embodiment>

<Imaging Device>

Fig. 31 is a block diagram illustrating an example of the configuration of an imaging device according to one aspect of an information processing device to which the present technology is applied. An imaging device 1300 illustrated in Fig. 31 is a device that images a 3D object and performs 3D modeling using this captured image. Note that Fig. 31 illustrates main processing units, data flows, and the like, and the present disclosure is not limited to those illustrated in Fig. 31. That is, the imaging device 1300 may include devices and processing units that are not illustrated as blocks in Fig. 31. Furthermore, there may be data flows and processing that are not indicated as arrows or the like in Fig. 31.

As illustrated in Fig. 31, the imaging device 1300 includes a first 3D data generation unit 1301, a scoring processing unit 1302, an imaging control unit 1303, a second 3D data generation unit 1304, an encoding unit 1305, a storage unit 1306, a communication unit 1307, an imaging guide output control unit 1308, and an output unit 1309. Furthermore, the first 3D data generation unit 1301 includes a depth sensor 1311, an imaging unit 1312, an Inertial Measurement Unit (IMU) 1313, and a real-time 3D modeling processing unit 1314. Furthermore, the real-time 3D modeling processing unit 1314 includes a Simultaneous Localization and Mapping (SLAM) 1321, a Truncated Signed Distance Function (TSDF) update unit 1322, and a mesh generation unit 1323. Furthermore, the second 3D data generation unit 1304 includes an operation unit 1331, an imaging unit 1332, an image processing unit 1333, and a photogrammetry processing unit 1334. Furthermore, the photogrammetry processing unit 1334 includes a Structure From Motion (SfM) 1341 and a Multi View Stereo (MVS) 1342.

The first 3D data generation unit 1301 performs processing related to generation of first 3D data. For example, the first 3D data generation unit 1301 executes the first 3D data generation processing 101 in Fig. 4. The depth sensor 1311 includes a Lidar sensor (dToF module) and the like, and detects a depth to a subject and supplies the depth to the TSDF update unit 1322. The imaging unit 1312 includes an image sensor, and images a subject and generates a captured image. The imaging unit 1312 performs first imaging of the first 3D data generation processing 101 in Fig. 4 (i.e., first 3D modeling (real-time 3D modeling)). The imaging unit 1312 supplies the generated captured image to the SLAM 1321. The IMU 1313 detects inertia information (an acceleration and an angular velocity) of the imaging device, and supplies the inertia information to the SLAM 1321.

The real-time 3D modeling processing unit 1314 performs processing related to the real-time 3D modeling. For example, the real-time 3D modeling processing unit 1314 executes the first 3D modeling processing (real-time 3D modeling) of the first 3D data generation processing 101 in Fig. 4. That is, the real-time 3D modeling processing unit 1314 generates first three-dimensional shape information for expressing a three-dimensional shape of a 3D object based on a first captured image generated by first imaging of imaging the 3D object.

The SLAM 1321 performs own position estimation based on the supplied first captured image and inertia information, and generates posture information indicating a position and a posture of the imaging device 1300. The SLAM 1321 supplies the generated posture information to the TSDF update unit 1322, the imaging control unit 1303, and the imaging guide output control unit 1308. The TSDF update unit 1322 updates the TSDF based on this posture information and the depth, and supplies the updated TSDF to the mesh generation unit 1323. The mesh generation unit 1323 generates a mesh (or a texture) using this updated TSDF. The mesh generation unit 1323 supplies these mesh and texture as the first 3D data (first three-dimensional shape information) to the scoring processing unit 1302.

The scoring processing unit 1302 performs processing related to scoring. For example, the scoring processing unit 1302 performs the scoring processing 102 in Fig. 4 based on the supplied first 3D data and imaging point-of-view information (information indicating a position and a posture at which second imaging has been performed) supplied from the imaging control unit 1303. That is, the scoring processing unit 1302 evaluates accuracy of second three-dimensional shape information that can be generated using a second captured image generated by second imaging performed so far using the first three-dimensional shape information, and generates a scoring result. For example, the scoring processing unit 1302 may generate a scoring result per local portion of the first three-dimensional shape information based on the first three-dimensional shape information and the position and the posture of second imaging performed so far. For example, the scoring processing unit 1302 may generate the scoring result per polygon of the mesh. The scoring processing unit 1302 supplies this scoring result to the imaging control unit 1303 and the imaging guide output control unit 1308.

Note that the scoring processing unit 1302 may acquire camera information related to the imaging unit 1332, and generate a scoring result based on this camera information. Furthermore, the scoring processing unit 1302 may generate a scoring result based on a position and a posture of the imaging device 1300 associated with a timing of the second imaging that is not based on the imaging control information of the imaging unit 1332.

The imaging control unit 1303 performs processing related to control of second imaging. For example, the imaging control unit 1303 executes the imaging control processing for second 3D modeling 103 in Fig. 4. That is, the imaging control unit 1303 generates imaging control information for controlling the second imaging based on the supplied scoring result and posture information, and supplies the imaging control information to the imaging unit 1332. This imaging control information is, for example, control information for causing the imaging unit 1332 to execute the second imaging (for causing the imaging unit 1332 to generate a second captured image). That is, the imaging control unit 1303 finds an appropriate position and posture of the second imaging based on the scoring result, and causes the imaging unit 1332 to execute the second imaging at these position and posture. Furthermore, the imaging control unit 1303 supplies imaging point-of-view information indicating the position and the posture of the executed second imaging to the scoring processing unit 1302.

Furthermore, the imaging control unit 1303 may acquire imaging timing information indicating a timing of the second imaging that is not based on the imaging control information of the imaging unit 1332, and supply the posture information of the imaging device 1300 associated with this imaging timing as the imaging point-of-view information to the scoring processing unit 1302.

The second 3D data generation unit 1304 performs processing related to generation of second 3D data. For example, the second 3D data generation unit 1304 executes the second 3D data generation processing 104 in Fig. 4. The operation unit 1331 accepts an instruction of the user or the like to the imaging unit 1332, and supplies this instruction to the imaging unit 1332.

The imaging unit 1332 includes an image sensor, and images a subject and generates a captured image. The imaging unit 1332 performs second imaging of the second 3D data generation processing 104 in Fig. 4 (i.e., imaging for second 3D modeling (photogrammetry)). The imaging unit 1332 supplies the generated captured image to the image processing unit 1333.

For example, the imaging unit 1332 may perform second imaging under control of the imaging control unit 1303 (based on the imaging control information supplied from the imaging control unit 1303), and generate the second captured image. Furthermore, the imaging unit 1332 may perform the second imaging according to the instruction supplied from the operation unit 1331, and generate the second captured image. Furthermore, the imaging unit 1332 may supply the camera information (internal parameters, external parameters, angle-of-view information, and the like of the imaging unit 1332) to the scoring processing unit 1302. Furthermore, the imaging unit 1332 may supply imaging timing information indicating a timing of the second imaging that is not based on the imaging control information to the imaging control unit 1303 and the imaging guide output control unit 1308.

The image processing unit 1333 performs predetermined image processing on the captured image (second captured image) generated by the imaging unit 1332. Contents of this image processing may be any contents. The image processing unit 1333 supplies this captured image to the SfM 1341. Furthermore, the image processing unit 1333 may supply this captured image to the encoding unit 1305 and the imaging guide output control unit 1308.

The photogrammetry processing unit 1334 performs processing related to the photogrammetry on the second captured image. For example, the photogrammetry processing unit 1334 executes the second 3D modeling processing of the second 3D data generation processing 104 in Fig. 4. That is, the photogrammetry processing unit 1334 generates second three-dimensional shape information based on the second captured image generated by the imaging unit 1332.

For example, the SfM 1341 searches for corresponding points between the second captured images, derives a position and a posture of a camera by epipolar constraint, specifies a position of each corresponding point in the three-dimensional space by triangulation based on the position and the posture of this camera, optimizes entirety of the specified three-dimensional point cloud by bundle adjustment, and supplies the three-dimensional point cloud to the MVS 1342. For example, the MVS 1342 further performs dense corresponding point search using this three-dimensional point cloud, adds a three-dimensional point, performs meshing or texturing as post-processing, and generates second 3D data. The MVS 1342 supplies the generated second 3D data to the encoding unit 1305.

The encoding unit 1305 encodes the supplied second 3D data, and supplies this encoded data to the storage unit 1306 and the communication unit 1307. Furthermore, the encoding unit 1305 encodes the supplied second captured image, and supplies this encoded data to the storage unit 1306 and the communication unit 1307.

The storage unit 1306 stores the supplied encoded data. The communication unit 1307 transmits the supplied encoded data to another information processing device (e.g., the server or the like).

The imaging guide output control unit 1308 performs processing related to a guide for the second imaging. For example, the imaging guide output control unit 1308 executes the imaging guide output processing for second 3D modeling 105 in Fig. 4. That is, the imaging guide output control unit 1308 generates guide information for the second imaging, and controls output of this guide information. For example, the imaging guide output control unit 1308 generates the above-described guide information based on the supplied scoring result and posture information of the imaging device 1300. Furthermore, the imaging guide output control unit 1308 may generate the guide information based on the supplied imaging timing information. The imaging guide output control unit 1308 supplies the generated guide information to the output unit 1309, and output the guide information as, for example, an image, a voice, or the like. Furthermore, the imaging guide output control unit 1308 may superimpose the supplied captured image on this guide information (image) to display.

The output unit 1309 outputs the guide information as an image, a voice, or the like under control of the imaging guide output control unit 1308.

By employing such a configuration, the imaging device 1300 can image a 3D object at a more appropriate position and posture, and execute 3D modeling (second 3D modeling processing) using this captured image. Consequently, the imaging device 1300 can generate higher-definition 3D data while suppressing an increase in load of 3D modeling. Furthermore, the imaging device 1300 can output the guide information such that the user can perform the second imaging at a more appropriate position and posture. That is, the imaging device 1300 can execute 3D modeling (second 3D modeling processing) using this captured image. Consequently, the imaging device 1300 can generate higher-definition 3D data while suppressing an increase in load of 3D modeling. That is, the user can more easily perform 3D modeling.

<Flow of 3D Modeling Processing>

An example of a flow of 3D modeling processing executed by this imaging device 1300 will be described with reference to a flowchart in Fig. 32.

When the 3D modeling processing is started, the depth sensor 1311, the imaging unit 1312, and the IMU 1313 acquire a depth, a captured image, and inertia information in step S301.

In step S302, the real-time 3D modeling processing unit 1314 executes real-time 3D modeling processing, and generates first 3D data.

In step S303, the scoring processing unit 1302 scores the first 3D data based on second imaging performed so far.

In step S304, the imaging guide output control unit 1308 generates an imaging guide (guide information) for the second imaging based on the scoring result, the posture information, and the like. The output unit 1309 outputs this imaging guide (guide information).

In step S305, the imaging control unit 1303 controls imaging for photogrammetry (second imaging) based on the scoring result, the posture information, and the like.

In step S306, the imaging unit 1332 performs imaging (performs second imaging) under control of the imaging unit 1303.

In step S307, the imaging control unit 1303 and the imaging guide output control unit 1308 acquire the camera information from the imaging unit 1332. Furthermore, the scoring processing unit 1302 acquires the imaging timing information from the imaging unit 1332.

In step S308, the imaging control unit 1303 determines whether or not to end the imaging for photogrammetry (second imaging). When it is determined to not end the imaging for photogrammetry, the processing returns to step S303. Furthermore, when it is determined to end imaging for photogrammetry in step S308, the processing proceeds to step S309.

In step S309, the photogrammetry processing unit 1334 executes photogrammetry processing, and generates the second 3D data.

In step S310, the encoding unit 1305 encodes this second 3D data.

In step S311, the storage unit 1306 stores this encoded data. Furthermore, the communication unit 1307 transmits this encoded data to another device (e.g., the server or the like).

When the processing in step S311 ends, the 3D modeling processing ends.

<Flow of Real-Time 3D Modeling Processing>

An example of a flow of the real-time 3D modeling processing executed in step S302 in Fig. 32 will be described with reference to a flowchart in Fig. 33.

When the real-time 3D modeling processing is started, the SLAM 1321 derives posture information indicating the three-dimensional posture of the imaging device 1300 based on the captured image and inertia information in step S331.

In step S332, the TSDF update unit 1322 updates the TSDF based on the captured image, the posture information, and the depth.

In step S333, the mesh generation unit 1323 generates first 3D data based on this updated TSDF.

When the processing in step S333 ends, the real-time 3D modeling processing ends, and the processing returns to Fig. 32.

<Flow of Photogrammetry Processing>

An example of the flow of the photogrammetry processing executed in step S309 in Fig. 32 will be described with reference to a flowchart in Fig. 34.

When the photogrammetry processing is started, the SfM 1341 detects corresponding points between captured images in step S351.

In step S352, the SfM 1341 derives the three-dimensional posture of the camera by epipolar constraint.

In step S353, the SfM 1341 derives a three-dimensional point using triangulation.

In step S354, the SfM 1341 optimizes the entirety by bundle adjustment.

In step S355, the MVS 1342 derives the three-dimensional point by dense corresponding point search, and generates second 3D data.

When processing in step S355 ends, the photogrammetry processing ends, and the processing returns to Fig. 32.

By executing each processing as described above, the imaging device 1300 can image a 3D object at a more appropriate position and posture, and execute 3D modeling (second 3D modeling processing) using this captured image. Consequently, the imaging device 1300 can generate higher-definition 3D data while suppressing an increase in load of 3D modeling. Furthermore, the imaging device 1300 can output the guide information such that the user can perform the second imaging at a more appropriate position and posture. That is, the imaging device 1300 can execute 3D modeling (second 3D modeling processing) using this captured image. Consequently, the imaging device 1300 can generate higher-definition 3D data while suppressing an increase in load of 3D modeling. That is, the user can more easily perform 3D modeling.

<7. Second Embodiment>

<Information Processing System 1>

The present technology is not limited to the above-described example, and can be applied to any desired configuration. For example, the present technology may be applied to an information processing system that performs 3D modeling.

In, for example, the information processing system including the information processing device and the imaging device, the information processing device may include a first 3D modeling processing unit that generates first three-dimensional shape information for expressing a three-dimensional shape of a 3D object based on a first captured image generated by first imaging of imaging the 3D object, a scoring processing unit that evaluates accuracy of second three-dimensional shape information that can be generated using a second captured image generated by second imaging performed so far using the first three-dimensional shape information, and generates a scoring result, an imaging control unit that controls second imaging of imaging the 3D object based on a position and a posture of the imaging device and the scoring result, and a first communication unit that supplies this imaging control information to the imaging device. Furthermore, the imaging device includes a second communication unit that acquires the imaging control information supplied from this information processing device, and an imaging unit that images a 3D object based on this imaging control information and generates a second captured image.

Fig. 35 is a diagram illustrating a configuration example according to one aspect of the information processing system to which the present technology is applied. An information processing system 1400 illustrated in Fig. 35 is a system that images a 3D object and performs 3D modeling using this captured image. As illustrated in Fig. 35, the information processing system 1400 includes an imaging communication device 1401, an imaging device 1402, and a server 1403. The imaging communication device 1401 and the server 1403 are communicably connected via a network 1404. The network 1404 is, for example, a communication path constituted by an arbitrary communication medium such as the Internet, a Local Area Network (LAN), and a wireless LAN.

The imaging communication device 1401 is, for example, an information processing device such as a smartphone that has a communication function of communicating with an arbitrary device via the network 1404, and an imaging function. The imaging device 1402 is an information processing device such as a digital camera that has the imaging function. The imaging device 1402 can communicate only with the imaging communication device 1401. The imaging communication device 1401 and the imaging device 1402 are fixedly connected with each other, and is used as a terminal device 1410 by the user. The server 1403 acquires a second captured image generated by this terminal device 1410 (imaging device 1402), performs second 3D modeling (photogrammetry processing) using this second captured image, generates second 3D data, and stores (manages) the second 3D data.

Fig. 36 is a block diagram illustrating a main configuration example of the imaging communication device 1401. Note that Fig. 36 illustrates main processing units, data flows, and the like, and the present disclosure is not limited to those illustrated in Fig. 36. That is, the imaging communication device 1401 may include devices and processing units that are not illustrated as blocks in Fig. 36. Furthermore, there may be data flows and processing that are not indicated as arrows or the like in Fig. 36.

As illustrated in Fig. 36, the imaging communication device 1401 includes a communication unit 1421 instead of the second 3D data generation unit 1304 in the configuration of the imaging device 1300 (Fig. 31). That is, the other components are similar to those of the imaging device 1300.

The communication unit 1421 is communicably connected with the imaging device 1402, and communicates with the imaging device 1402 and sends and receives information. For example, the communication unit 1421 may supply to the imaging device 1402 the imaging control information supplied from the imaging control unit 1303. Furthermore, the communication unit 1421 may acquire the second captured image generated by the imaging device 1402, and supply the second captured image to the encoding unit 1305 and the imaging guide output control unit 1308. Furthermore, the communication unit 1421 may acquire the camera information supplied from the imaging device 1402, and supply the camera information to the scoring processing unit 1302. This camera information may include internal parameters, external parameters, angle-of-view information, and the like of (the imaging unit 1332 of) the imaging device 1402. Furthermore, the communication unit 1421 may acquire the imaging timing information supplied from the imaging device 1402, and supply the imaging timing information to the imaging control unit 1303 and the imaging guide output control unit 1308. This imaging timing information indicates a timing of imaging performed by (the imaging unit 1332 of) the imaging device 1402 without being based on the imaging control information.

Note that the communication unit 1307 is communicably connected with the server 1403 via the network 1404, and communicates with the server 1403 and sends and receives information. For example, the encoding unit 1305 encodes the second captured image supplied from the communication unit 1421, and supplies this encoded data to the storage unit 1306 and the communication unit 1307. The storage unit 1306 stores the encoded data of this second captured image. The communication unit 1307 supplies the encoded data of this second captured image to the server 1403 via the network 1404.

Fig. 37 is a block diagram illustrating a main configuration example of the imaging device 1402. Note that Fig. 37 illustrates main processing units, data flows, and the like, and the present disclosure is not limited to those illustrated in Fig. 37. That is, the imaging device 1402 may include devices and processing units that are not illustrated as blocks in Fig. 37. Furthermore, there may be data flows and processing that are not indicated as arrows or the like in Fig. 37.

As illustrated in Fig. 37, the imaging device 1402 includes the operation unit 1331, the imaging unit 1332, the image processing unit 1333, a communication unit 1431, an encoding unit 1432, and a storage unit 1433. The operation unit 1331, the imaging unit 1332, and the image processing unit 1333 perform processing similar to those in a case of the imaging device 1300 in Fig. 31.

The communication unit 1431 is communicably connected with the imaging communication device 1401, and communicates with and sends and receives information to and from the imaging communication device 1401. For example, the communication unit 1431 may acquire the imaging control information supplied from the imaging communication device 1401, and supply the imaging control information to the imaging unit 1332. Furthermore, the communication unit 1431 may acquire the camera information supplied from the imaging unit 1332, and supply the camera information to the imaging communication device 1401. This camera information may include internal parameters, external parameters, angle-of-view information, and the like of the imaging unit 1332. Furthermore, the communication unit 1431 may acquire the imaging timing information supplied from the imaging unit 1332, and supply the imaging timing information to the imaging communication device 1401. This imaging timing information indicates a timing of imaging performed by the imaging unit 1332 without being based on the imaging control information. Furthermore, the communication unit 1431 may acquire the second captured image supplied from the image processing unit 1333, and supply the second captured image to the imaging communication device 1401.

The encoding unit 1432 encodes the second captured image supplied from the image processing unit 1333, and supplies this encoded data to the storage unit 1433. The storage unit 1433 stores this encoded data.

Fig. 38 is a block diagram illustrating a main configuration example of the server 1403. Note that Fig. 38 illustrates main processing units, data flows, and the like, and the present disclosure is not limited to those illustrated in Fig. 38. That is, the server 1403 may include devices and processing units that are not illustrated as blocks in Fig. 38. Furthermore, there may be data flows and processing that are not indicated as arrows or the like in Fig. 38.

As illustrated in Fig. 38, the server 1403 includes a communication unit 1441, a decoding unit 1442, the photogrammetry processing unit 1334, an encoding unit 1444, and a storage unit 1445. The photogrammetry processing unit 1334 employs a configuration similar to that in the case of the imaging device 1300 in Fig. 31, and performs similar processing.

The communication unit 1441 is communicably connected with the imaging communication device 1401 via the network 1404, and communicates with and sends and receives information to and from another device such as the imaging communication device 1401. For example, the communication unit 1441 acquires the encoded data of the second captured image supplied from the imaging communication device 1401, and supplies the encoded data to the decoding unit 1442. Furthermore, the communication unit 1441 may supply the encoded data of the second 3D data supplied from the encoding unit 1444 to another device (e.g., imaging communication device 1401) via the network 1404.

The decoding unit 1442 decodes the encoded data of the second captured image supplied from the communication unit 1441, and generates (restores) the second captured image. The decoding unit 1442 supplies this second captured image to the photogrammetry processing unit 1334 (SfM 1341). The photogrammetry processing unit 1334 executes second 3D modeling (photogrammetry processing) using this second captured image, and generates second 3D data. The photogrammetry processing unit 1334 (MVS 1342) supplies the generated second 3D data to the encoding unit 1444.

The encoding unit 1444 encodes the supplied second 3D data, and supplies this encoded data to the storage unit 1445. Furthermore, the encoding unit 1444 may supply the encoded data of this second 3D data to the communication unit 1441. The storage unit 1445 stores the supplied encoded data of the second 3D data.

Each device employs such a configuration, so that the information processing system 1400 can image a 3D object at a more appropriate position and posture, and execute 3D modeling (second 3D modeling processing) using this captured image. Consequently, the information processing system 1400 can generate higher-definition 3D data while suppressing an increase in load of 3D modeling. Furthermore, the information processing system 1400 can output guide information such that the user can perform second imaging at a more appropriate position and posture. That is, the information processing system 1400 can execute 3D modeling (second 3D modeling processing) using this captured image. Consequently, the information processing system 1400 can generate higher-definition 3D data while suppressing an increase in load of 3D modeling. That is, the user can more easily perform 3D modeling.

<Flow of 3D Modeling Processing>

An example of a flow of the 3D modeling processing executed by this information processing system 1400 will be described with reference to flowcharts in Figs. 39 and 40.

When the 3D modeling processing is started, the depth sensor 1311, the imaging unit 1312, and the IMU 1313 of the imaging communication device 1401 acquire the depth, the captured image, and the inertia information in step S401 in Fig. 39.

In step S402, the real-time 3D modeling processing unit 1314 of the imaging communication device 1401 executes real-time 3D modeling processing, and generates first 3D data. This real-time 3D modeling processing is executed similarly to the example in Fig. 33.

In step S403, the scoring processing unit 1302 of the imaging communication device 1401 scores the first 3D data based on the second imaging performed so far.

In step S404, the imaging guide output control unit 1308 of the imaging communication device 1401 generates an imaging guide (guide information) for the second imaging based on the scoring result, the posture information, or the like. The output unit 1309 outputs this imaging guide (guide information).

In step S405, the imaging control unit 1303 of the imaging communication device 1401 generates imaging control information for controlling imaging for photogrammetry (second imaging) based on the scoring result, the posture information, and the like. The communication unit 1421 supplies this imaging control information to the imaging device 1402. The communication unit 1431 of the imaging device 1402 acquires this imaging control information in step S411.

In step S412, the imaging unit 1332 of the imaging device 1402 performs imaging (performs second imaging) according to the control of the imaging control information, and generates a second captured image. The image processing unit 1333 performs predetermined image processing on this second captured image.

In step S413, the communication unit 1431 of the imaging device 1402 supplies this second captured image to the imaging communication device 1401. The communication unit 1421 of the imaging communication device 1401 acquires this second captured image in step S406.

Furthermore, in step S414, the communication unit 1431 of the imaging device 1402 supplies the camera information and the imaging timing information of the imaging unit 1332 to the imaging communication device 1401. The communication unit 1421 of the imaging communication device 1401 acquires these camera information and imaging timing information in step S407.

In step S441 in Fig. 40, the encoding unit 1432 of the imaging device 1402 encodes the second captured image. The storage unit 1433 stores the encoded data of this second captured image.

In step S431, the encoding unit 1305 of the imaging communication device 1401 encodes the second captured image. The communication unit 1307 supplies the encoded data of the second captured image to the server 1403. The communication unit 1441 of the server 1403 acquires the encoded data of this second captured image in step S451. The decoding unit 1442 decodes this encoded data, and generates (restores) the second captured image.

In step S452, the photogrammetry processing unit 1334 of the server 1403 executes photogrammetry processing, and generates second 3D data. This photogrammetry processing is executed similarly to the example in Fig. 34.

In step S453, the encoding unit 1444 of the server 1403 encodes this second 3D data.

In step S454, the storage unit 1445 of the server 1403 stores this encoded data. Furthermore, the communication unit 1441 transmits this encoded data to another device (e.g., the imaging communication device 1401 or the like).

Furthermore, in step S432, the imaging control unit 1303 of the imaging communication device 1401 determines whether or not to end the imaging for photogrammetry (second imaging). When it is determined to not end the imaging for photogrammetry, the processing returns to step S403 in Fig. 39. Furthermore, when it is determined in step S432 in Fig. 40 to end the imaging for photogrammetry, the 3D modeling processing is ended.

By executing each processing as described above, the information processing system 1400 can image a 3D object at a more appropriate position and posture, and execute 3D modeling (second 3D modeling processing) using this captured image. Consequently, the information processing system 1400 can generate higher-definition 3D data while suppressing an increase in load of 3D modeling. Furthermore, the information processing system 1400 can output guide information such that the user can perform second imaging at a more appropriate position and posture. That is, the information processing system 1400 can execute 3D modeling (second 3D modeling processing) using this captured image. Consequently, the information processing system 1400 can generate higher-definition 3D data while suppressing an increase in load of 3D modeling. That is, the user can more easily perform 3D modeling.

<Information Processing System 2>

Note that scoring processing may be performed by the server 1403 in the information processing system 1400.

Fig. 41 illustrates a main configuration example of the imaging communication device 1401 in this case. Note that Fig. 41 illustrates main processing units, data flows, and the like, and the present disclosure is not limited to those illustrated in Fig. 41. That is, the imaging communication device 1401 may include devices and processing units that are not illustrated as blocks in Fig. 41. Furthermore, there may be data flows and processing that are not indicated as arrows or the like in Fig. 41.

As illustrated in Fig. 41, the scoring processing unit 1302 of the imaging communication device 1401 in this case is omitted from the configuration in Fig. 36. In this case, the communication unit 1307 supplies to the server 1403 the imaging point-of-view information supplied from the imaging control unit 1303.

Furthermore, in this case, the real-time 3D modeling processing unit 1314 (mesh generation unit 1323) supplies the generated first 3D data to the encoding unit 1305. The encoding unit 1305 encodes this first 3D data, and supplies this encoded data to the communication unit 1307. The communication unit 1307 supplies to the server 1403 the encoded data of the first 3D data supplied from the encoding unit 1305.

Furthermore, the communication unit 1307 acquires a scoring result derived by (the scoring processing unit 1302 of) the server 1403, and supplies the scoring result to the imaging control unit 1303 and the imaging guide output control unit 1308.

Furthermore, the communication unit 1307 supplies to the server 1403 the encoded data of the second captured image supplied from the encoding unit 1305 similarly to the case in Fig. 37.

Furthermore, in this case, the communication unit 1421 acquires the camera information (of the imaging unit 1332) supplied from the imaging device 1402, and supplies the camera information to the encoding unit 1305. The encoding unit 1305 encodes this camera information, and supplies the camera information to the communication unit 1307. The communication unit 1307 supplies the encoded data of this camera information to the server 1403.

Fig. 42 is a block diagram illustrating a main configuration example of the server 1403 in this case. Note that Fig. 42 illustrates main processing units, data flows, and the like, and the present disclosure is not limited to those illustrated in Fig. 42. That is, the server 1403 may include devices and processing units that are not illustrated as blocks in Fig. 42. Furthermore, there may be data flows and processing that are not indicated as arrows or the like in Fig. 42.

As illustrated in Fig. 42, in this case, the server 1403 includes the scoring processing unit 1302 in addition to the components illustrated in Fig. 38. In this case, the communication unit 1441 acquires the encoded data of the first 3D data supplied from the imaging communication device 1401, and supplies the encoded data to the decoding unit 1442. The decoding unit 1442 decodes this encoded data, and generates (restores) the first 3D data. The decoding unit 1442 supplies this first 3D data to the scoring processing unit 1302.

Furthermore, the communication unit 1441 acquires the imaging point-of-view information supplied from the imaging communication device 1401, and supplies the imaging point-of-view information to the decoding unit 1442. The decoding unit 1442 supplies this imaging control information to the scoring processing unit 1302.

Furthermore, the communication unit 1441 acquires the encoded data of the camera information supplied from the imaging communication device 1401, and supplies the encoded data to the decoding unit 1442. The decoding unit 1442 decodes this encoded data, and generates (restores) the camera information. The decoding unit 1442 supplies this camera information to the scoring processing unit 1302.

Furthermore, the communication unit 1441 acquires the encoded data of the second captured image supplied from the imaging communication device 1401, and supplies the encoded data to the decoding unit 1442 similarly to the case in Fig. 38. The decoding unit 1442 decodes this encoded data, and generates (restores) the second captured image. The decoding unit 1442 supplies this second captured image to the photogrammetry processing unit 1334.

In this case, too, the scoring processing unit 1302 performs the scoring processing 102 in Fig. 4 based on the supplied first 3D data and imaging point-of-view information, and derives a scoring result. Furthermore, the scoring processing unit 1302 may perform this scoring processing 102 based on the camera information. The scoring processing unit 1302 supplies this scoring result to the encoding unit 1444. The encoding unit 1444 supplies this scoring result to the communication unit 1441. The communication unit 1441 supplies this scoring result to the imaging communication device 1401.

The other processing is similar to those in Fig. 38.

Each device employs such a configuration, so that, in this case, too, the information processing system 1400 can image a 3D object at a more appropriate position and posture, and execute 3D modeling (second 3D modeling processing) using this captured image. Consequently, the information processing system 1400 can generate higher-definition 3D data while suppressing an increase in load of 3D modeling. Furthermore, the information processing system 1400 can output guide information such that the user can perform second imaging at a more appropriate position and posture. That is, the information processing system 1400 can execute 3D modeling (second 3D modeling processing) using this captured image. Consequently, the information processing system 1400 can generate higher-definition 3D data while suppressing an increase in load of 3D modeling. That is, the user can more easily perform 3D modeling.

<Flow of 3D Modeling Processing>

An example of a flow of the 3D modeling processing executed by the information processing system 1400 in this case will be described with reference to flowcharts in Figs. 43 and 44.

When the 3D modeling processing is started, the depth sensor 1311, the imaging unit 1312, and the IMU 1313 of the imaging communication device 1401 acquire the depth, the captured image, and the inertia information in step S501 in Fig. 43.

In step S502, the real-time 3D modeling processing unit 1314 of the imaging communication device 1401 executes real-time 3D modeling processing, and generates first 3D data. This real-time 3D modeling processing is executed similarly to the example in Fig. 33.

In step S503, the communication unit 1307 of the imaging communication device 1401 supplies the generated first 3D data to the server 1403. The communication unit 1441 of the server 1403 acquires this first 3D data in step S521.

In step S522, the scoring processing unit 1302 of the server 1403 scores the first 3D data based on second imaging performed so far.

In step S523, the communication unit 1441 of the server 1403 supplies this scoring result to the imaging communication device 1401. The communication unit 1307 of the imaging communication device 1401 acquires this scoring result in step S504.

In step S505, the imaging guide output control unit 1308 of the imaging communication device 1401 generates an imaging guide (guide information) for the second imaging based on the scoring result, the posture information, or the like. The output unit 1309 outputs this imaging guide (guide information).

In step S506, the imaging control unit 1303 of the imaging communication device 1401 generates imaging control information for controlling imaging for photogrammetry (second imaging) based on the scoring result, the posture information, and the like. The communication unit 1421 supplies this imaging control information to the imaging device 1402. The communication unit 1431 of the imaging device 1402 acquires this imaging control information in step S511.

Furthermore, the communication unit 1307 of the imaging communication device 1401 supplies the imaging point-of-view information to the server 1403 in step S507. The communication unit 1441 of the server 1403 acquires this imaging point-of-view information in step S524.

In step S541 in Fig. 44, the imaging unit 1332 of the imaging device 1402 performs imaging (performs second imaging) according to the imaging control information, and generates a second captured image. The image processing unit 1333 performs predetermined image processing on this second captured image.

In step S542, the communication unit 1431 of the imaging device 1402 supplies this second captured image to the imaging communication device 1401. The communication unit 1421 of the imaging communication device 1401 acquires this second captured image in step S531.

Furthermore, in step S543, the communication unit 1431 of the imaging device 1402 supplies the camera information and the imaging timing information of the imaging unit 1332 to the imaging communication device 1401. The communication unit 1421 of the imaging communication device 1401 acquires these camera information and imaging timing information in step S532.

In step S544, the encoding unit 1432 of the imaging device 1402 encodes the second captured image. The storage unit 1433 stores the encoded data of this second captured image.

In step S533, the encoding unit 1305 of the imaging communication device 1401 encodes the second captured image. The communication unit 1307 supplies the encoded data of the second captured image to the server 1403. The communication unit 1441 of the server 1403 acquires the encoded data of this second captured image in step S551. The decoding unit 1442 decodes this encoded data, and generates (restores) the second captured image.

In step S552, the photogrammetry processing unit 1334 of the server 1403 executes photogrammetry processing, and generates second 3D data. This photogrammetry processing is executed similarly to the example in Fig. 34.

In step S553, the encoding unit 1444 of the server 1403 encodes this second 3D data.

In step S554, the storage unit 1445 of the server 1403 stores this encoded data. Furthermore, the communication unit 1441 transmits this encoded data to another device (e.g., the imaging communication device 1401 or the like).

Furthermore, in step S534, the imaging control unit 1303 of the imaging communication device 1401 determines whether or not to end the imaging for photogrammetry (second imaging). When it is determined to not end the imaging for photogrammetry, the processing returns to step S522 in Fig. 43. Furthermore, when it is determined in step S534 in Fig. 44 to end the imaging for photogrammetry, the 3D modeling processing is ended.

By executing each processing as described above, the information processing system 1400 can image a 3D object at a more appropriate position and posture, and execute 3D modeling (second 3D modeling processing) using this captured image, in this case, too. Consequently, the information processing system 1400 can generate higher-definition 3D data while suppressing an increase in load of 3D modeling. Furthermore, the information processing system 1400 can output guide information such that the user can perform second imaging at a more appropriate position and posture. That is, the information processing system 1400 can execute 3D modeling (second 3D modeling processing) using this captured image. Consequently, the information processing system 1400 can generate higher-definition 3D data while suppressing an increase in load of 3D modeling. That is, the user can more easily perform 3D modeling.

<8. Third Embodiment>

<Application of ROI Setting to Information Processing System>

The present technology described above in <5. ROI Setting Processing> can be applied to an arbitrary information processing device. For example, this present technology can be applied to any system or device described in the first embodiment and the second embodiment.

For example, the present technology described above in <5. ROI Setting Processing> can be applied to the information processing system 1400 in Fig. 35. For example, the server 1403 may set an ROI to 3D data as described above. That is, for example, the imaging communication device 1401 performs the first 3D data generation processing 101 (Fig. 4) or the like, and generates first 3D data to which the first ROI has been set. The imaging device 1402 performs second imaging of the second 3D data generation processing 104 (Fig. 4), and generates a second captured image. The imaging communication device 1401 supplies to the server 1403 the first 3D data to which the first ROI has been set, and the second captured image generated by the imaging device 1402. When acquiring the first 3D data and the second captured image, the server 1403 performs the second 3D modeling processing of the second 3D data generation processing 104 (Fig. 4), and generates the second 3D data from the second captured image. Furthermore, the server 1403 performs the ROI setting processing 106 (Fig. 4), sets the second ROI based on the first 3D data to which the first ROI has been set, and extracts a portion of the inside of this second ROI from the second 3D data.

By so doing, the server 1403 can more easily set the second ROI so as to remove unnecessary portions of the second 3D data. Consequently, the server 1403 can suppress a decrease in subjective image quality of a display image, and suppress a decrease in visibility of the 3D model 301. Furthermore, by so doing, the server 1403 can suppress an increase in a data amount (information amount). Consequently, the server 1403 can suppress an increase in a load of processing of handling the second 3D data such as 3D modeling, generation of a mesh, and rendering. Consequently, the server 1403 can suppress an increase in cost required for these processing, and suppress an increase in these processing times. Furthermore, the increase in the data amount is suppressed, so that the server 1403 can suppress an increase in a load related to storage or transmission/reception of the second 3D data. Consequently, the server 1403 can suppress an increase in cost required for storage or transmission/reception of the second 3D data, and suppress an increase in times required for writing, reading, transmission/reception, or the like of the second 3D data. Furthermore, by so doing, the server 1403 can suppress an increase in unnecessary point clouds of the second 3D data, so that it is possible to suppress the shape of a 3D model from becoming complicated and more easily form a mesh.

<Server>

Fig. 45 is a block diagram illustrating a main configuration example of the server 1403 in this case. Note that Fig. 45 illustrates main processing units, data flows, and the like, and the present disclosure is not limited to those illustrated in Fig. 45. That is, the server 1403 may include devices and processing units that are not illustrated as blocks in Fig. 45. Furthermore, there may be data flows and processing that are not indicated as arrows or the like in Fig. 45.

As illustrated in Fig. 45, in this case, the imaging communication device 1401 includes an ROI setting unit 1601, an ROI filter unit 1602, and a mesh generation unit 1603 in addition the components (processing units) described with reference to Fig. 38. That is, the other components are similar to those in the case in Fig. 38.

The ROI setting unit 1601 acquires the first 3D data supplied from the imaging communication device 1401 or the like via the communication unit 1441. Furthermore, the ROI setting unit 1601 estimates a first ROI based on this first 3D data. The first ROI is set to this first 3D data. That is, the first 3D data includes 3D data of the inside of the first ROI. In other words, 3D data of the outside of the first ROI (points located outside the first ROI) is removed. Accordingly, the ROI setting unit 1601 estimates the first ROI by specifying a range in which this first 3D data exists. Furthermore, the ROI setting unit 1601 sets a second ROI based on this estimated first ROI. For example, the ROI setting unit 1601 sets the second ROI such that the second ROI is included in the estimated first ROI. The ROI setting unit 1601 supplies to the ROI filter unit 1602 information indicating this second ROI.

The ROI filter unit 1602 acquires the information supplied from the ROI setting unit 1601 and indicating the second ROI. Furthermore, the ROI filter unit 1602 acquires the second 3D data supplied from the MVS 1342 (photogrammetry processing unit 1334). The ROI filter unit 1602 extracts the 3D data of the inside of the second ROI from this second 3D data. That is, the ROI filter unit 1602 will be also referred to as an extraction unit. The ROI filter unit 1602 supplies the extracted second 3D data (i.e., the second 3D data of the inside of the second ROI) to the mesh generation unit 1603.

The mesh generation unit 1603 generates a mesh indicating a three-dimensional shape of a 3D object formed by connecting vertices using the second 3D data of the inside of this second ROI. The mesh generation unit 1603 supplies this generated mesh (the mesh of the inside of the second ROI) to the encoding unit 1444.

The encoding unit 1444 encodes the mesh of the inside of this second ROI, supplies this encoded data to the storage unit 1445, and causes the storage unit 1445 to store this encoded data. Furthermore, the encoding unit 1444 may supply the encoded data of the mesh of the inside of this second ROI to the communication unit 1441, and cause the communication unit 1441 to transmit the encoded data to another device.

Note that the server 1403 may set only the second ROI. That is, the server 1403 may associate the information indicating this set second ROI with the pre-extraction second 3D data, and store the information and the second 3D data or provide the information and the second 3D data to another device. In this case, the ROI setting unit 1601 supplies to the encoding unit 1444 the information indicating the second ROI. Furthermore, the MVS 1342 (photogrammetry processing unit 1334) supplies the (pre-extraction) second 3D data to the encoding unit 1444. The encoding unit 1444 associates and encodes the information indicating the second ROI and the (pre-extraction) second 3D data (or encode each of the information and the (pre-extraction) second 3D data, and associate each encoded data). The encoding unit 1444 supplies these encoded data (i.e., the information indicating the second ROI and the second 3D data associated with each other) to the storage unit 1445 to cause the storage unit 1445 to store these encoded data, or supply these encoded data to the communication unit 1441 to cause the communication unit 1441 to transmit these encoded data to the another device.

By employing such a configuration, the server 1403 can more easily suppress formation of unnecessary point clouds during 3D modeling.

<Flow of Server Processing>

An example of a flow of server processing executed by this server 1403 will be described with reference to a flowchart in Fig. 46. When the server processing is started, in step S601, the communication unit 1441 acquires the encoded data supplied from the imaging communication device 1401. In step S602, the storage unit 1445 stores this encoded data. In step S603, the decoding unit 1442 reads and decodes this encoded data, and generates the first 3D data and the second captured image.

In step S604, the ROI setting unit 1601 estimates the first ROI based on the first 3D data, and sets the second ROI based on the estimated first ROI as described above in <5. ROI Setting Processing>.

In step S605, the photogrammetry processing unit 1334 executes photogrammetry processing, and generates the second 3D data.

In step S606, the ROI filter unit 1602 extracts the second 3D data of the inside of the second ROI. In step S607, the mesh generation unit 1603 generates a mesh using this second 3D data.

In step S608, the encoding unit 1444 encodes mesh data. In step S609, the storage unit 1445 stores this encoded data. In step S610, the communication unit 1441 transmits this encoded data to the another device.

When step S610 ends, the server processing ends.

By executing each processing as described above, the server 1403 can more easily suppress formation of unnecessary point clouds during 3D modeling.

<Application to Imaging Device>

Furthermore, the present technology described above in <5. ROI Setting Processing> can be also applied to the imaging device 1300 (Fig. 31). For example, the imaging device 1300 may set an ROI to 3D data as described above. That is, for example, the imaging device 1300 performs the first 3D data generation processing 101 (Fig. 4) or the like, and generates first 3D data to which the first ROI has been set. Furthermore, the imaging device 1300 performs second imaging of the second 3D data generation processing 104 (Fig. 4), and generates a second captured image. Furthermore, the imaging device 1300 performs the second 3D modeling processing of the second 3D data generation processing 104 (Fig. 4), and generates second 3D data from this second captured image. Furthermore, the imaging device 1300 performs the ROI setting processing 106 (Fig. 4), sets the second ROI based on the first 3D data to which the first ROI has been set, and extracts a portion of the inside of this second ROI from the second 3D data.

By so doing, the imaging device 1300 can more easily set the second ROI so as to remove unnecessary portions of the second 3D data. Consequently, the imaging device 1300 can suppress a decrease in subjective image quality of a display image, and suppress a decrease in visibility of the 3D model 301. Furthermore, by so doing, the imaging device 1300 can suppress an increase in a data amount (information amount). Consequently, the imaging device 1300 can suppress an increase in a load of processing of handling second 3D data such as 3D modeling, generation of a mesh, and rendering. Consequently, the imaging device 1300 can suppress an increase in cost required for these processing, and suppress an increase in these processing times. Furthermore, the increase in the data amount is suppressed, so that the imaging device 1300 can suppress an increase in a load related to storage or transmission/reception of the second 3D data. Consequently, the imaging device 1300 can suppress an increase in cost required for storage or transmission/reception of the second 3D data, and suppress an increase in times required for writing, reading, transmission/reception, or the like of the second 3D data. Furthermore, by so doing, the imaging device 1300 can suppress an increase in unnecessary point clouds of the second 3D data, so that it is possible to suppress the shape of a 3D model from becoming complicated and more easily form a mesh.

<Imaging Device>

Fig. 47 illustrates a main configuration example of the imaging device 1300 in this case. As illustrated in Fig. 47, in this case, the imaging device 1300 includes the ROI setting unit 1601, the ROI filter unit 1602, and the mesh generation unit 1603 in addition the components illustrated in Fig. 31. The ROI setting unit 1601 to the mesh generation unit 1603 perform processing similarly to those in the case in Fig. 45.

For example, the ROI setting unit 1601 acquires the first 3D data output from the real-time 3D modeling processing unit 1314, estimates the first ROI, sets the second ROI based on this estimated first ROI, and supplies the second ROI to the ROI filter unit 1602.

The ROI filter unit 1602 extracts the second 3D data of the inside of this second ROI from the second 3D data supplied from the photogrammetry processing unit 1334, and supplies the second 3D data to the mesh generation unit 1603. The mesh generation unit 1603 generates a mesh using the second 3D data of the inside of this second ROI, and supplies the mesh to the encoding unit 1305.

By employing such a configuration, the imaging device 1300 can more easily suppress formation of unnecessary point clouds during 3D modeling similarly to the case of the server 1403.

<Flow of 3D Modeling Processing>

An example of the flow of 3D modeling processing in this case will be described with reference to a flowchart in Fig. 48.

When the 3D modeling processing is started, the depth sensor 1311, the imaging unit 1312, and the IMU 1313 acquire a depth, a captured image, and inertia information in step S701.

In step S702, the real-time 3D modeling processing unit 1314 sets a predetermined depth range as the first ROI, performs real-time 3D modeling on the inside of the first ROI, and generates first 3D data.

In step S703, the scoring processing unit 1302 scores the first 3D data based on second imaging performed so far.

In step S704, the imaging guide output control unit 1308 generates an imaging guide (guide information) for the second imaging based on the scoring result, the posture information, and the like. The output unit 1309 outputs this imaging guide (guide information).

In step S705, the imaging control unit 1303 controls imaging for photogrammetry (second imaging) based on the scoring result, the posture information, and the like.

In step S706, the imaging unit 1332 performs imaging (performs second imaging) under control of the imaging unit 1303.

In step S707, the imaging control unit 1303 and the imaging guide output control unit 1308 acquire the camera information from the imaging unit 1332. Furthermore, the scoring processing unit 1302 acquires the imaging timing information from the imaging unit 1332.

In step S708, the imaging control unit 1303 determines whether or not to end the imaging for photogrammetry (second imaging). When it is determined to not end the imaging for photogrammetry, the processing returns to step S703. Furthermore, when it is determined to end imaging for photogrammetry in step S708, the processing proceeds to step S709.

In step S709, the ROI setting unit 1601 estimates the first ROI based on the first 3D data, and sets the second ROI based on this estimated first ROI.

In step S710, the photogrammetry processing unit 1334 executes photogrammetry processing, and generates the second 3D data.

In step S711, the ROI filter unit 1602 extracts the second 3D data of the inside of this second ROI.

In step S712, the mesh generation unit 1603 generates a mesh using the second 3D data of the inside of this extracted second ROI.

In step S713, the encoding unit 1305 encodes this second 3D data (mesh).

In step S714, the storage unit 1306 stores this encoded data. Furthermore, the communication unit 1307 transmits this encoded data to another device (e.g., the server or the like).

When the processing in step S714 ends, the 3D modeling processing ends.

By executing each processing as described above, the imaging device 1300 can more easily suppress formation of unnecessary point clouds during 3D modeling.

<Superimposition>

Furthermore, in the case in Fig. 47, the first 3D data of the inside of the first ROI and the second 3D data of the inside of the second ROI may be superimposed and displayed. Fig. 49 illustrates a main configuration example of the imaging device 1300 in this case. As illustrated in Fig. 49, in this case, the imaging device 1300 includes a superimposition unit 1701 in addition to the components illustrated in Fig. 47.

The superimposition unit 1701 acquires the first 3D data (of the inside of the first ROI) output from the real-time 3D modeling processing unit 1314.

Furthermore, the superimposition unit 1701 acquires a mesh (the second 3D data of the inside of the second ROI) output from the mesh generation unit 1603. The superimposition unit 1701 superimposes these first 3D data and mesh to cause the output unit 1309 to display these first 3D data and mesh.

Since the ROI setting unit 1601 sets the second ROI based on the first ROI, an association relationship between the range of the first ROI and the range of the second ROI is known. For example, the second ROI is included in the first ROI. Alternatively, the second ROI is identical to the first ROI. In other words, the positional relationship between the first 3D data and the second 3D data is known. Consequently, the superimposition unit 1701 can easily superimpose the first 3D data and the second 3D data according to a correct positional relationship.

<3D Modeling Processing>

An example of the flow of 3D modeling processing in this case will be described with reference to a flowchart in Fig. 50.

When the 3D modeling processing is started, the processing in steps S801 to S812 is executed similarly to the processing in steps S701 to S712 in Fig. 48.

In step S813, the superimposition unit 1701 superimposes the first 3D data and the second 3D data.

In step S814, the output unit 1309 displays a result of this superimposition.

When the processing in step S814 ends, the 3D modeling processing ends. Note that, in this case, too, it is a matter of course that the second 3D data (mesh) may be encoded, this encoded data may be stored, or this encoded data may be transmitted to another device (e.g.,

the server or the like).

By so doing, the user can see the first 3D data and the second 3D data superimposed according to a correct positional relationship.

<9. Supplements>

<Computer>

The series of processing can be executed by hardware or software. When the series of processing is executed by software, a program that constitutes the software is installed on a computer. In this case, the computer includes, for example, a computer built in dedicated hardware and a general-purpose personal computer on which various programs are installed to enable various functions.

Fig. 51 is a block diagram illustrating a hardware configuration example of a computer that executes the above-described series of processing according to a program.

In a computer 1900 illustrated in Fig. 51, a Central Processing Unit (CPU) 1901, a Read Only Memory (ROM) 1902, and a Random Access Memory (RAM) 1903 are connected to each other via a bus 1904.

An input/output interface 1910 is also connected to the bus 1904. An input unit 1911, an output unit 1912, a storage unit 1913, a communication unit 1914, and a drive 1915 are connected to the input/output interface 1910.

The input unit 1911 includes, for example, a keyboard, a mouse, a microphone, a touch panel, an input terminal, and the like. The output unit 1912 includes, for example, a display, a speaker, an output terminal, and the like. The storage unit 1913 includes, for example, a hard disk, a RAM disk, and a non-volatile memory. The communication unit 1914 includes, for example, a network interface. The drive 1915 drives a removable recording medium 1921 such as a magnetic disk, an optical disc, a magneto-optical disk, or a semiconductor memory.

In the computer that is configured as described above, for example, the CPU 1901 loads a program stored in the storage unit 1913 into the RAM 1903 via the input/output interface 1910 and the bus 1904 and executes the program. Thus, the above-described series of processing is performed. Data necessary for the CPU 1901 to execute the various types of processing may be stored as appropriate in the RAM 1903.

A program executed by a computer may be recorded on the removable recording medium 1921 as package media or the like and applied thereto, for example. In this case, the program can be read from the removable recording medium 1921 mounted on the drive 1915, and installed in the storage unit 1913 via the input/output interface 1910.

Furthermore, this program can be also provided via an arbitrary wired or wireless transfer media such as a local area network, the Internet, and digital satellite broadcasting. In this case, the program may be received by the communication unit 1914, and installed in the storage unit 1913 via the input/output interface 1910.

In addition, this program may be installed in the ROM 1902, the storage unit 1913, or both in advance.

<Application of Present Technology>

The present technology can be applied to any configuration. For example, the present technology can be applied to various electronic devices.

Furthermore, for example, the present technology can be implemented as a configuration of part of a device such as a processor (e.g., video processor) of a system Large Scale Integration (LSI) circuit, a module (e.g., video module) using a plurality of processors or the like, a unit (e.g., video unit) using a plurality of modules or the like, or a set (e.g., video set) with other functions added to the unit.

Furthermore, for example, the present technology can also be applied to a network system including a plurality of devices. The present technology may be implemented as, for example, cloud computing shared and jointly processed among a plurality of devices via a network. For example, the present technology may be implemented in a cloud service that provides services regarding images (moving images) to any terminals such as a computer, an Audio Visual (AV) device, a mobile information processing terminal, and an Internet of Things (IoT) device or the like.

Note that, in the present specification, a system means a set of a plurality of components (devices, modules (parts), or the like) regardless of whether or not all the components are placed in the same casing. Accordingly, a plurality of devices accommodated in separate casings and connected via a network and a single device accommodating a plurality of modules in a single casing are referred to as systems.

<Other>

Note that, in the present specification, the term "associate" means that, when one data is processed, the other can be used (can be linked). In other words, mutually associated items of data may be integrated into one item of data or may be individual items of data. For example, information associated with certain data may be transmitted through a transmission path different from that of this data. Furthermore, for example, the information associated with the certain data may be recorded in a recording medium different from that of this data (or a different recording area in the same recording medium). Note that this "association" may be performed on part of the data instead of the entirety of the data. For example, dynamic 3D data and information corresponding to this dynamic 3D data may be associated with each other in an arbitrary unit such as a plurality of frames, one frame, or a portion in the frame.

Note that, in the present specification, terms such as "synthesize", "multiplex", "add", "integrate", "include", "store", "put in", "enclose", and "insert" may mean, for example, combining a plurality of objects into one, such as combining coded data and metadata into one piece of data, and means one method of "associating" described above.

Furthermore, the embodiments of the present technology are not limited to the above-described embodiments and can be changed in various ways without departing from the gist of the present technology.

For example, a configuration described as one device (or processing unit) may be split into and configured as a plurality of devices (or processing units). Conversely, configurations described above as a plurality of devices (or processing units) may be integrated and configured as one device (or processing unit). It is a matter of course that configurations other than the aforementioned configurations may be added to the configuration of each device (or each processing unit). Moreover, part of the configurations of a certain device (or processing unit) may be included in a configuration of another device (or another processing unit) as long as the configurations and operations of the overall system are substantially identical to one another.

Furthermore, for example, the above-described program may be executed by any device. In this case, the device only needs to have necessary functions (such as functional blocks) so as to be able to obtain necessary information.

Furthermore, for example, each step of one flowchart may be executed by one device, or may be shared and executed by a plurality of devices. Furthermore, when a plurality of processing is included in one step, one device may execute the plurality of processing, or the plurality of devices may share and execute the plurality of processing. In other words, it is also possible to execute the plurality of processing steps included in one step as processing of a plurality of steps. Reversely, processing described as the plurality of steps can be also collectively executed as one step.

Furthermore, for example, in a program that is executed by a computer, processing in steps of describing the program may be executed in time series in the order described in the present specification, or may be executed in parallel or individually at a required timing at which, for example, invocation is performed. In other words, the processing of steps may be executed in an order different from the above-described order if no contradiction arises. Furthermore, the processing of the steps of describing this program may be executed in parallel with processing of another program, or may be executed in combination with the processing of the other program.

Moreover, for example, a plurality of technologies related to the present technology can be independently implemented if no contradiction arises. As a matter of course, any number of the present technologies can be also implemented in combination. For example, the present technology described in any one of the embodiments may be implemented partially or entirely in combination with at least part or all of the present technology described in other embodiments. Furthermore, part or all of the any above-described present technologies may be implemented in combination with other technologies that are not described above.

Note that the present technology can also have the following configuration.

(1) An information processing device includes:

a region-of-interest setting unit that estimates a first region of interest of first three-dimensional shape information, and sets a second region of interest of second three-dimensional shape information based on the estimated first region of interest,

the first three-dimensional shape information is generated by first 3D modeling processing that is based on a first captured image,

the first captured image is generated by first imaging of imaging a 3D object by a first imaging unit,

the second three-dimensional shape information is generated by second 3D modeling processing that is based on a second captured image, and

the second captured image is generated by second imaging of imaging the 3D object by a second imaging unit based on the first three-dimensional shape information.

(2) In the information processing device described in (1), the region-of-interest setting unit sets the second region of interest to an inside of the first region of interest.

(3) In the information processing device described in (1), the region-of-interest setting unit sets the second region of interest as a region identical to the first region of interest.

(4) The information processing device described in (1) further includes a second 3D modeling processing unit that performs the second 3D modeling processing and generates the second three-dimensional shape information.

(5) In the information processing device described in (4), the second 3D modeling processing unit includes

a corresponding point position deriving unit that derives three-dimensional positions of corresponding points between a plurality of the second captured images, and

a three-dimensional point addition unit that adds a three-dimensional point based on the three-dimensional positions of the corresponding points.

(6) The information processing device described in (4) further includes an extraction unit that extracts the second three-dimensional shape information of an inside of the second region of interest from the second three-dimensional shape information generated by the second 3D modeling processing unit.

(7) The information processing device described in (6) further includes a mesh generation unit that generates a mesh indicating a three-dimensional shape of the 3D object formed by connecting vertices using the second three-dimensional shape information of the inside of the second region of interest extracted by the extraction unit.

(8) The information processing device described in above (7) further includes a display control unit that superimposes the mesh on the first three-dimensional shape information to display.

(9) The information processing device described in (8) further includes a display unit that displays the mesh superimposed on the first three-dimensional shape information to display under control of the display control unit.

(10) The information processing device described in (4) further includes a communication unit that communicates with another device and acquires the second captured image, and

the second 3D modeling processing unit performs the second 3D modeling processing based on the second captured image acquired by the communication unit.

(11) The information processing device described in (4) further includes the second imaging unit, and

the second 3D modeling processing unit performs the second 3D modeling processing based on the second captured image generated by the second imaging unit by performing the second imaging.

(12) The information processing device described in (1) further includes a communication unit that communicates with another device and acquires the first three-dimensional shape information, and

the region-of-interest setting unit sets the second region of interest based on the first region of interest of the first three-dimensional shape information acquired by the communication unit.

(13) The information processing device described in (1) further includes a first 3D modeling processing unit that performs the first 3D modeling processing and generates the first three-dimensional shape information of an inside of the first region of interest, and the region-of-interest setting unit sets the second region of interest based on the first region of interest of the first three-dimensional shape information generated by the first 3D modeling processing unit.

(14) In the information processing device described in (13), the first 3D modeling processing unit includes

a posture information generation unit that generates posture information indicating a position and a posture of the first imaging unit based on the first captured image, and an acceleration and an angular velocity of the first imaging unit, and

a three-dimensional shape generation unit that generates the first three-dimensional shape information based on this posture information and a depth of the 3D object.

(15) The information processing device described in (14) further includes an inertia measurement unit that detects the acceleration and the angular velocity.

(16) In the information processing device described in (13), the first 3D modeling processing unit sets the first region of interest based on the depth of the 3D object, and generates the first three-dimensional shape information of an inside of the first region of interest.

(17) The information processing device described in (16) further includes a depth detection unit that measures the depth of the 3D object.

(18) The information processing device described in (1) further includes the first imaging unit.

(19) In the information processing device described in (1), the first three-dimensional shape information has a less information amount and lower definition than an information amount and definition of the second three-dimensional shape information.

(20) An information processing method includes:

estimating a first region of interest of first three-dimensional shape information, and setting a second region of interest of second three-dimensional shape information based on the estimated first region of interest,

the first three-dimensional shape information is generated by first 3D modeling processing that is based on a first captured image,

the first captured image is generated by first imaging of imaging a 3D object by a first imaging unit,

the second three-dimensional shape information is generated by second 3D modeling processing that is based on a second captured image, and

the second captured image is generated by second imaging of imaging the 3D object by a second imaging unit based on the first three-dimensional shape information.

[Reference Signs List]

| | |
|---|---|
| 101 | First 3D data generation processing |
| 102 | Scoring processing |
| 103 | Imaging control processing for second 3D modeling |
| 104 | Second 3D data generation processing |
| 105 | Imaging guide output processing for second 3D modeling |
| 106 | ROI setting processing |
| 1300 | Imaging device |
| 1301 | First 3D data generation unit |
| 1302 | Scoring processing unit |
| 1303 | Imaging control unit |
| 1304 | Second 3D data generation unit |
| 1305 | Encoding unit |
| 1306 | Storage unit |
| 1307 | Communication unit |
| 1308 | Imaging guide output control unit |
| 1309 | Output unit |
| 1311 | Depth sensor |
| 1312 | Imaging unit |
| 1313 | IMU |
| 1314 | Real-time 3D modeling processing unit |
| 1321 | SLAM |
| 1322 | TSDF update unit |
| 1323 | Mesh generation unit |
| 1331 | Operation unit |
| 1332 | Imaging unit |
| 1333 | Image processing unit |
| 1334 | Photogrammetry processing unit |
| 1341 | SfM |
| 1342 | MVS |
| 1400 | Information processing system |
| 1401 | Imaging device |
| 1402 | Imaging communication device |
| 1403 | Server |
| 1404 | Network |
| 1410 | Terminal device |
| 1421 | Communication unit |
| 1431 | Communication unit |
| 1432 | Encoding unit |
| 1433 | Storage unit |
| 1441 | Communication unit |
| 1442 | Decoding unit |
| 1444 | Encoding unit |
| 1445 | Storage unit |
| 1601 | ROI setting unit |
| 1602 | ROI filter unit |
| 1603 | Mesh generation unit |
| 1701 | Superimposition unit |
| 1900 | Computer |

**Claims**

1. An information processing device comprising:

a region-of-interest setting unit that estimates a first region of interest of first three-dimensional shape information, and sets a second region of interest of second three-dimensional shape information based on the estimated first region of interest, wherein

the first three-dimensional shape information is generated by first 3D modeling processing that is based on a first captured image,

the first captured image is generated by first imaging of imaging a 3D object by a first imaging unit,

the second three-dimensional shape information is generated by second 3D modeling processing that is based on a second captured image, and

the second captured image is generated by second imaging of imaging the 3D object by a second imaging unit based on the first three-dimensional shape information.

2. The information processing device according to claim 1, wherein the region-of-interest setting unit sets the second region of interest to an inside of the first region of interest.

3. The information processing device according to claim 1, wherein the region-of-interest setting unit sets the second region of interest as a region identical to the first region of interest.

4. The information processing device according to claim 1, further comprising a second 3D modeling processing unit that performs the second 3D modeling processing and generates the second three-dimensional shape information.

5. The information processing device according to claim 4, wherein the second 3D modeling processing unit includes

a corresponding point position deriving unit that derives three-dimensional positions of corresponding points between a plurality of the second captured images, and

a three-dimensional point addition unit that adds a three-dimensional point based on the three-dimensional positions of the corresponding points.

6. The information processing device according to claim 4, further comprising an extraction unit that extracts the second three-dimensional shape information of an inside of the second region of interest from the second three-dimensional shape information generated by the second 3D modeling processing unit.

7. The information processing device according to claim 6, further comprising a mesh generation unit that generates a mesh indicating a three-dimensional shape of the 3D object formed by connecting vertices using the second three-dimensional shape information of the inside of the second region of interest extracted by the extraction unit.

8. The information processing device according to claim 7, further comprising a display control unit that superimposes the mesh on the first three-dimensional shape information to display.

9. The information processing device according to claim 8, further comprising a display unit that displays the mesh superimposed on the first three-dimensional shape information to display under control of the display control unit.

10. The information processing device according to claim 4, further comprising a communication unit that communicates with another device and acquires the second captured image,

wherein the second 3D modeling processing unit performs the second 3D modeling processing based on the second captured image acquired by the communication unit.

11. The information processing device according to claim 4, further comprising the second imaging unit, wherein the second 3D modeling processing unit performs the second 3D modeling processing based on the second captured image generated by the second imaging unit by performing the second imaging.

12. The information processing device according to claim 1, further comprising a communication unit that communicates with another device and acquires the first three-dimensional shape information, wherein the region-of-interest setting unit sets the second region of interest based on the first region of interest of the first three-dimensional shape information acquired by the communication unit.

13. The information processing device according to claim 1, further comprising a first 3D modeling processing unit that performs the first 3D modeling processing and generates the first three-dimensional shape information of an inside of the first region of interest, wherein the region-of-interest setting unit sets the second region of interest based on the first region of interest of the first three-dimensional shape information generated by the first 3D modeling processing unit.

14. The information processing device according to claim 13, wherein the first 3D modeling processing unit includes

a posture information generation unit that generates posture information indicating a position and a posture of the first imaging unit based on the first captured image, and an acceleration and an angular velocity of the first imaging unit, and

a three-dimensional shape generation unit that generates the first three-dimensional shape information based on the posture information and a depth of the 3D object.

15. The information processing device according to claim 14, further comprising an inertia measurement unit that detects the acceleration and the angular velocity.

16. The information processing device according to claim 13, wherein the first 3D modeling processing unit sets the first region of interest based on the depth of the 3D object, and generates the first three-dimensional shape information of an inside of the first region of interest.

17. The information processing device according to claim 16, further comprising a depth detection unit that measures the depth of the 3D object.

18. The information processing device according to claim 1, further comprising the first imaging unit.

19. The information processing device according to claim 1, wherein the first three-dimensional shape information has a less information amount and lower definition than an information amount and definition of the second three-dimensional shape information.

20. An information processing method comprising:

estimating a first region of interest of first three-dimensional shape information, and setting a second region of interest of second three-dimensional shape information based on the estimated first region of interest, wherein

the first three-dimensional shape information is generated by first 3D modeling processing that is based on a first captured image,

the first captured image is generated by first imaging of imaging a 3D object by a first imaging unit,

the second three-dimensional shape information is generated by second 3D modeling processing that is based on a second captured image, and

the second captured image is generated by second imaging of imaging the 3D object by a second imaging unit based on the first three-dimensional shape information.

Fig. 1

Fig. 2

SLAM + TSDF + MC

Fig. 3

EP 4 641 502 A1

|  | REAL-TIME 3D MODELING | PHOTOGRAMMETRY |
|---|---|---|
| METHOD | OWN POSITION ESTIMATION + TSDF | SfM (INCLUDING OWN POSITION ESTIMATION) + MVS |
| DATA | DEPTH + POSTURE DATA (+IMAGE) | ONLY IMAGE DATA |
| PROCESSING TIME | REAL TIME (> 30 fps) | LONG TIME (SEVERAL MINUTES TO SEVERAL TEN HOURS) |
| NECESSARY COMPUTATION | MOBILE AP LEVEL | HIGH END CPU + GPU LEVEL |
| DEFINITION OF MODEL | ROUGHNESS (THAT DEPENDS ON SENSOR /OWN POSITION ESTIMATION ACCURACY) | DEFINITION TO ULTRA HIGH DEFINITION (THAT DEPENDS ON SIZE OF INPUT IMAGE/NUMBER OF INPUT IMAGES/HOW INPUT IMAGE IS PHOTOGRAPHED) |
| INTERNAL EXPRESSION OF THREE-DIMENSIONAL DATA | Voxel-BASED | POINT CLOUD-BASED |
| CONSTRAINT OF SUBJECT SIZE/RESOLUTION | YES/SENSOR DEPENDENT (PHYSICAL ABSOLUTE QUANTITY) | NO (RELATIVE SINCE CONSTRAINT IS IMAGE-BASED) |
| ABSOLUTE ACCURACY OF MODEL | LOW (THAT DEPENDS ON SENSOR/ OWN POSITION ESTIMATION ACCURACY) | HIGH (OPTIMIZATION BY BUNDLE ADJUSTMENT) |
| SCALE | UNIFORM (ABSOLUTE SIZE CAN BE GRASPED) | UNSTABLE (SIZE CANNOT BE GRASPED) |

Fig. 4

Fig. 5

Fig. 6

Fig. 7

Fig. 8

Fig. 9

Fig. 10

Fig. 11

Fig. 12

Fig. 13

Fig. 14

Fig. 15

EP 4 641 502 A1

Fig. 16

Fig. 17

Fig. 18

Fig. 19

Fig. 20

Fig. 21

IDEAL POSITION

CURRENT POSITION

261

260

261

260

Fig. 22

EP 4 641 502 A1

DEPTH SIDE          JUST RIGHT          FRONT SIDE

CURRENT POSITION

IDEAL
POSITION

260          261

Fig. 23

Fig. 24

Fig. 25

Fig. 26

Fig. 27

Fig. 28

Fig. 29

301

Fig. 30

Fig. 31

Fig. 32

```
          ( START 3D MODELING PROCESSING )
                        │
   ┌────────────────────────────────────────┐ S301
   │  ACQUIRE DEPTH, CAPTURED IMAGE,         │
   │       AND INERTIA INFORMATION           │
   └────────────────────────────────────────┘
                        │
   ┌────────────────────────────────────────┐ S302
   ║      PERFORM REAL-TIME 3D MODELING      │
   └────────────────────────────────────────┘
                        │
   ┌────────────────────────────────────────┐ S303
   │      SCORE FIRST 3D DATA BASED ON       │
   │        IMAGING PERFORMED SO FAR         │
   └────────────────────────────────────────┘
                        │
   ┌────────────────────────────────────────┐ S304
   │     GENERATE IMAGING GUIDE BASED ON     │
   │  SCORING RESULT, POSTURE INFORMATION,   │
   │ AND THE LIKE, AND OUTPUT IMAGING GUIDE  │
   └────────────────────────────────────────┘
                        │
   ┌────────────────────────────────────────┐ S305
   │ CONTROL IMAGING FOR PHOTOGRAMMETRY      │
   │        BASED ON SCORING RESULT,         │
   │   POSTURE INFORMATION, AND THE LIKE     │
   └────────────────────────────────────────┘
                        │
   ┌────────────────────────────────────────┐ S306
   │        IMAGE ACCORDING TO CONTROL       │
   └────────────────────────────────────────┘
                        │
   ┌────────────────────────────────────────┐ S307
   │    ACQUIRE CAMERA INFORMATION AND       │
   │       IMAGING TIMING INFORMATION        │
   └────────────────────────────────────────┘
                        │
   NO  < END IMAGING FOR PHOTOGRAMMETRY? >    S308
                        │ YES
   ┌────────────────────────────────────────┐ S309
   ║        PERFORM PHOTOGRAMMETRY           │
   └────────────────────────────────────────┘
                        │
   ┌────────────────────────────────────────┐ S310
   │                ENCODE                   │
   └────────────────────────────────────────┘
                        │
   ┌────────────────────────────────────────┐ S311
   │          STORE AND TRANSMIT             │
   └────────────────────────────────────────┘
                        │
                   (   END   )
```

Fig. 33

START REAL-TIME 3D MODELING PROCESSING

DERIVE THREE-DIMENSIONAL POSTURE BASED ON CAPTURED IMAGE AND INERTIA INFORMATION — S331

UPDATE TSDF BASED ON CAPTURED IMAGE, POSTURE INFORMATION, AND DEPTH — S332

GENERATE FIRST 3D DATA BASED ON UPDATED TSDF — S333

RETURN

Fig. 34

```
        ( START PHOTOGRAMMETRY PROCESSING )
                          │
                          ▼
        ┌─────────────────────────────────┐  S351
        │  DETECT CORRESPONDING POINTS     │
        │  BETWEEN CAPTURED IMAGES         │
        └─────────────────────────────────┘
                          │
                          ▼
        ┌─────────────────────────────────┐  S352
        │  DERIVE THREE-DIMENSIONAL POSTURE│
        │  OF CAMERA BY EPIPOLAR CONSTRAINT│
        └─────────────────────────────────┘
                          │
                          ▼
        ┌─────────────────────────────────┐  S353
        │  DERIVE THREE-DIMENSIONAL POINT  │
        │  USING TRIANGULATION             │
        └─────────────────────────────────┘
                          │
                          ▼
        ┌─────────────────────────────────┐  S354
        │  OPTIMIZE ENTIRETY BY BUNDLE     │
        │  ADJUSTMENT                      │
        └─────────────────────────────────┘
                          │
                          ▼
        ┌─────────────────────────────────┐  S355
        │  DERIVE THREE-DIMENSIONAL POINT BY│
        │  DENSE CORRESPONDING POINT SEARCH,│
        │  AND GENERATE SECOND 3D DATA     │
        └─────────────────────────────────┘
                          │
                          ▼
                   ( RETURN )
```

Fig. 35

Fig. 36

Fig. 37

EP 4 641 502 A1

Fig. 38

SECOND 3D DATA

COMMUNICATION UNIT
1441

DECODING UNIT
1442

SfM
1341

MVS
1342

1334

ENCODING UNIT
1444

STORAGE UNIT
1445

1403

Fig. 39

1401 START

S401 ACQUIRE DEPTH, CAPTURED IMAGE, AND SENSOR INFORMATION

S402 PERFORM REAL-TIME 3D MODELING

4

S403 SCORE FIRST 3D DATA BASED ON IMAGING PERFORMED SO FAR

S404 GENERATE IMAGING GUIDE BASED ON SCORING RESULT, POSTURE INFORMATION, AND THE LIKE, AND OUTPUT IMAGING GUIDE

S405 CONTROL IMAGING FOR PHOTOGRAMMETRY BASED ON SCORING RESULT, POSTURE INFORMATION, AND THE LIKE

S406

S407

1

1402 START

S411

S412 IMAGE ACCORDING TO CONTROL

S413 SUPPLY CAPTURED IMAGE

S414 SUPPLY CAMERA INFORMATION AND IMAGING TIMING INFORMATION

2

1403 START

3

Fig. 40

Fig. 41

EP 4 641 502 A1

Fig. 42

Fig. 43

EP 4 641 502 A1

1401

( START )

ACQUIRE DEPTH, CAPTURED IMAGE, AND SENSOR INFORMATION  S501

PERFORM REAL-TIME 3D MODELING  S502

SUPPLY FIRST 3D DATA  S503

1402

( START )

1403

( START )

S521

(4)

SCORE FIRST 3D DATA BASED ON IMAGING PERFORMED SO FAR  S522

S504

SUPPLY SCORING RESULT  S523

GENERATE IMAGING GUIDE BASED ON SCORING RESULT, POSTURE INFORMATION, AND THE LIKE, AND OUTPUT IMAGING GUIDE  S505

CONTROL IMAGING FOR PHOTOGRAMMETRY BASED ON SCORING RESULT, POSTURE INFORMATION, AND THE LIKE  S506

S511

SUPPLY IMAGING POINT-OF-VIEW INFORMATION  S507

S524

(1)

(2)

(3)

Fig. 44

Fig. 45

EP 4 641 502 A1

Fig. 46

```
                    ( START SERVER PROCESSING )
                               |
                               v
        +--------------------------------------------+ S601
        |           ACQUIRE ENCODED DATA             |
        +--------------------------------------------+
                               |
                               v
        +--------------------------------------------+ S602
        |           STORE ENCODED DATA               |
        +--------------------------------------------+
                               |
                               v
        +--------------------------------------------+ S603
        |   DECODE ENCODED DATA, AND GENERATE         |
        | FIRST 3D DATA AND SECOND CAPTURED IMAGE     |
        +--------------------------------------------+
                               |
                               v
        +--------------------------------------------+ S604
        | ESTIMATE FIRST ROI BASED ON FIRST 3D DATA,  |
        |     AND SET SECOND ROI BASED ON             |
        |           ESTIMATED FIRST ROI               |
        +--------------------------------------------+
                               |
                               v
        +--------------------------------------------+ S605
        |   EXECUTE PHOTOGRAMMETRY PROCESSING,        |
        |     AND GENERATE SECOND 3D DATA             |
        +--------------------------------------------+
                               |
                               v
        +--------------------------------------------+ S606
        | EXTRACT SECOND 3D DATA OF INSIDE OF SECOND ROI |
        +--------------------------------------------+
                               |
                               v
        +--------------------------------------------+ S607
        |       GENERATE MESH DATA USING              |
        |           SECOND 3D DATA                    |
        +--------------------------------------------+
                               |
                               v
        +--------------------------------------------+ S608
        |           ENCODE MESH DATA                  |
        +--------------------------------------------+
                               |
                               v
        +--------------------------------------------+ S609
        |           STORE ENCODED DATA               |
        +--------------------------------------------+
                               |
                               v
        +--------------------------------------------+ S610
        |         TRANSMIT ENCODED DATA               |
        +--------------------------------------------+
                               |
                               v
                           (   END   )
```

Fig. 47

Fig. 48

```
        ( START 3D MODELING PROCESSING )
                      ↓
   ┌──────────────────────────────────────┐
   │ ACQUIRE DEPTH, CAPTURED IMAGE,        │ S701
   │ AND INERTIA INFORMATION               │
   └──────────────────────────────────────┘
                      ↓
   ┌──────────────────────────────────────┐
   │ PERFORM REAL-TIME 3D MODELING ON      │ S702
   │ INSIDE OF PREDETERMINED DEPTH RANGE   │
   └──────────────────────────────────────┘
                      ↓
   ┌──────────────────────────────────────┐
   │ SCORE FIRST 3D DATA BASED ON          │ S703
   │ IMAGING PERFORMED SO FAR              │
   └──────────────────────────────────────┘
                      ↓
   ┌──────────────────────────────────────┐
   │ GENERATE IMAGING GUIDE BASED ON SCORING│ S704
   │ RESULT, POSTURE INFORMATION, AND THE LIKE,│
   │ AND OUTPUT IMAGING GUIDE              │
   └──────────────────────────────────────┘
                      ↓
   ┌──────────────────────────────────────┐
   │ CONTROL IMAGING FOR PHOTOGRAMMETRY BASED│ S705
   │ ON SCORING RESULT, POSTURE INFORMATION,│
   │ AND THE LIKE                         │
   └──────────────────────────────────────┘
                      ↓
   ┌──────────────────────────────────────┐
   │ IMAGE ACCORDING TO CONTROL            │ S706
   └──────────────────────────────────────┘
                      ↓
   ┌──────────────────────────────────────┐
   │ ACQUIRE CAMERA INFORMATION AND IMAGING│ S707
   │ TIMING INFORMATION                    │
   └──────────────────────────────────────┘
                      ↓
   NO <  END IMAGING FOR PHOTOGRAMMETRY?  > S708
                      ↓ YES
   ┌──────────────────────────────────────┐
   │ ESTIMATE FIRST ROI BASED ON FIRST 3D DATA,│ S709
   │ AND SET SECOND ROI BASED ON ESTIMATED │
   │ FIRST ROI                            │
   └──────────────────────────────────────┘
                      ↓
   ┌──────────────────────────────────────┐
   │ PERFORM PHOTOGRAMMETRY,               │ S710
   │ AND GENERATE SECOND 3D DATA           │
   └──────────────────────────────────────┘
                      ↓
   ┌──────────────────────────────────────┐
   │ EXTRACT SECOND 3D DATA OF INSIDE OF   │ S711
   │ SECOND ROI                           │
   └──────────────────────────────────────┘
                      ↓
   ┌──────────────────────────────────────┐
   │ GENERATE MESH DATA                    │ S712
   └──────────────────────────────────────┘
                      ↓
   ┌──────────────────────────────────────┐
   │ ENCODE                                │ S713
   └──────────────────────────────────────┘
                      ↓
   ┌──────────────────────────────────────┐
   │ STORE AND TRANSMIT                    │ S714
   └──────────────────────────────────────┘
                      ↓
                 (  END  )
```

Fig. 49

1300

1301 CAMERA INFORMATION

1311 DEPTH SENSOR
1312 IMAGING UNIT
1313 IMU

1314 REAL-TIME 3D MODELING PROCESSING UNIT

POSTURE INFORMATION

FIRST 3D DATA

1308 IMAGING GUIDE OUTPUT CONTROL UNIT
1302 SCORING PROCESSING UNIT
1303 IMAGING CONTROL UNIT

1309 OUTPUT UNIT
1701 SUPERIMPOSITION UNIT

1601 ROI SETTING UNIT
SECOND ROI

1307 COMMUNICATION UNIT
1306 STORAGE UNIT

1304
1603 MESH GENERATION UNIT
1602 ROI FILTER UNIT
1334 PHOTOGRAMMETRY PROCESSING UNIT
1333 IMAGE PROCESSING UNIT
1305 ENCODING UNIT

CAPTURED IMAGE
IMAGING TIMING INFORMATION

1332 IMAGING UNIT
1331 OPERATION UNIT

Fig. 50

```
           ( START 3D MODELING PROCESSING )
                         ↓
      ┌─────────────────────────────────────────┐
      │   ACQUIRE DEPTH, CAPTURED IMAGE,         │ S801
      │   AND INERTIA INFORMATION                │
      └─────────────────────────────────────────┘
                         ↓
      ┌─────────────────────────────────────────┐
      │  PERFORM REAL-TIME 3D MODELING ON INSIDE │ S802
      │  OF PREDETERMINED DEPTH RANGE            │
      └─────────────────────────────────────────┘
                         ↓
      ┌─────────────────────────────────────────┐
      │     SCORE FIRST 3D DATA BASED ON         │ S803
      │     IMAGING PERFORMED SO FAR             │
      └─────────────────────────────────────────┘
                         ↓
      ┌─────────────────────────────────────────┐
      │  GENERATE IMAGING GUIDE BASED ON SCORING │ S804
      │  RESULT, POSTURE INFORMATION, AND THE    │
      │  LIKE, AND OUTPUT IMAGING GUIDE          │
      └─────────────────────────────────────────┘
                         ↓
      ┌─────────────────────────────────────────┐
      │ CONTROL IMAGING FOR PHOTOGRAMMETRY BASED │ S805
      │ ON SCORING RESULT, POSTURE INFORMATION,  │
      │ AND THE LIKE                             │
      └─────────────────────────────────────────┘
                         ↓
      ┌─────────────────────────────────────────┐
      │     IMAGE ACCORDING TO CONTROL           │ S806
      └─────────────────────────────────────────┘
                         ↓
      ┌─────────────────────────────────────────┐
      │   ACQUIRE CAMERA INFORMATION AND         │ S807
      │   IMAGING TIMING INFORMATION             │
      └─────────────────────────────────────────┘
                         ↓
  NO  <   END IMAGING FOR PHOTOGRAMMETRY?       >  S808
                         ↓ YES
      ┌─────────────────────────────────────────┐
      │ ESTIMATE FIRST ROI BASED ON FIRST 3D     │ S809
      │ DATA, AND SET SECOND ROI BASED ON        │
      │ ESTIMATED FIRST ROI                      │
      └─────────────────────────────────────────┘
                         ↓
      ┌─────────────────────────────────────────┐
      │     PERFORM PHOTOGRAMMETRY,              │ S810
      │     AND GENERATE SECOND 3D DATA          │
      └─────────────────────────────────────────┘
                         ↓
      ┌─────────────────────────────────────────┐
      │     EXTRACT SECOND 3D DATA               │ S811
      │     OF INSIDE OF SECOND ROI              │
      └─────────────────────────────────────────┘
                         ↓
      ┌─────────────────────────────────────────┐
      │     GENERATE MESH DATA                   │ S812
      └─────────────────────────────────────────┘
                         ↓
      ┌─────────────────────────────────────────┐
      │     SUPERIMPOSE                          │ S813
      └─────────────────────────────────────────┘
                         ↓
      ┌─────────────────────────────────────────┐
      │     DISPLAY                              │ S814
      └─────────────────────────────────────────┘
                         ↓
                    (  END  )
```

Fig. 51

EP 4 641 502 A1

## INTERNATIONAL SEARCH REPORT

| International application No. |
|---|
| **PCT/JP2023/043393** |

**A. CLASSIFICATION OF SUBJECT MATTER**

*G06T 7/55*(2017.01)i; *G06F 3/0484*(2022.01)i; *G06F 3/04815*(2022.01)i
FI: G06T7/55; G06F3/04815; G06F3/0484

According to International Patent Classification (IPC) or to both national classification and IPC

**B. FIELDS SEARCHED**

Minimum documentation searched (classification system followed by classification symbols)

G06F 3/01, G06F 3/048 - 3/0489, G06T 7/00 - 7/90, G06T15/00 - 15/87, G06V10/00 - 20/90, G06V30/418, G06V40/16, G06V40/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2020/0051277 A1 (HEWLETT-PACKARD DEVELOPMENT COMPANY, L.P.) 13 February 2020 (2020-02-13) paragraphs [0012], [0015]-[0016], [0029]-[0030], [0035], fig. 1, 3-4 | 1-4, 6, 13, 18, 20 |
| Y | | 5, 7-12, 16-17, 19 |
| A | | 14-15 |
| Y | WO 2019/065536 A1 (PANASONIC INTELLECTUAL PROPERTY CORPORATION OF AMERICA) 04 April 2019 (2019-04-04) paragraphs [0011], [0015]-[0016], [0025]-[0027], [0039], fig. 1 | 5, 10-12, 19 |
| Y | US 2021/0174580 A1 (GEOMNI, INC.) 10 June 2021 (2021-06-10) paragraphs [0066], [0068], fig. 14, 19 | 7-9 |
| Y | JP 2015-079374 A (SEIKO EPSON CORPORATION) 23 April 2015 (2015-04-23) paragraphs [0016]-[0019], [0025], [0054], fig. 1-2, 9 | 16-17 |

☐ Further documents are listed in the continuation of Box C.      ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 January 2024** | **23 January 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2023/043393**

| Patent document cited in search report | | | Publication date (day/month/year) | Patent family member(s) | | | Publication date (day/month/year) |
|---|---|---|---|---|---|---|---|
| US | 2020/0051277 | A1 | 13 February 2020 | WO | 2018/199946 | A1 | |
| | | | | EP | 3616167 | A1 | |
| | | | | CN | 110268449 | A | |
| WO | 2019/065536 | A1 | 04 April 2019 | US | 2020/0226825 | A1 | |
| | | | | paragraphs [0025], [0029]-[0030], [0039]-[0041], [0053], fig. 1 | | | |
| US | 2021/0174580 | A1 | 10 June 2021 | JP | 2023-505212 | A | |
| | | | | WO | 2021/113439 | A1 | |
| | | | | EP | 4070287 | A1 | |
| | | | | CN | 114902289 | A | |
| | | | | AU | 2020396965 | A1 | |
| | | | | CA | 3160694 | A | |
| JP | 2015-079374 | A | 23 April 2015 | (Family: none) | | | |

Form PCT/ISA/210 (patent family annex) (July 2022)

**EP 4 641 502 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018063693 A